# EUROPEAN PATENT APPLICATION

(11) **EP 2 913 585 A1**
(43) Date of publication of application: **02.09.2015**
(21) Application number: 13831280.6
(22) Date of filing: 23.08.2013
(51) Int. Cl.: F22B 37/10, F16L 55/02, F28F 9/00, G21D 1/00

(54) **HEAT EXCHANGER TUBE VIBRATION SUPPRESSING DEVICE AND STEAM GENERATOR**

(30) Priority: 24.08.2012 JP 2012185646; 25.12.2012 JP 2012281618
(71) Applicant: Mitsubishi Heavy Industries, Ltd., Tokyo 108-8215 (JP)
(72) Inventor: NAKAMORI, Tomohito, Tokyo 108-8215 (JP); NEKOMOTO, Yoshitsugu, Tokyo 108-8215 (JP); HIRAI, Jun, Tokyo 108-8215 (JP); KOJIMA, Toshihiro, Tokyo 108-8215 (JP); IWASAKI, Akihisa, Tokyo 108-8215 (JP); MORITA, Hideyuki, Tokyo 108-8215 (JP); HIROTA, Kazuo, Tokyo 108-8215 (JP); SHIMAMURA, Kengo, Tokyo 108-8215 (JP); KUSAKABE, Takaya, Tokyo 108-8215 (JP); KAWAKAMI, Ryoichi, Tokyo 108-8215 (JP); NISHIOKA, Katsuyoshi, Tokyo 108-8215 (JP)
(74) Representative: Intès, Didier Gérard André
(86) International application number: PCT/JP2013/072613
(87) International publication number: WO 2014/030752

(57) **Abstract**

A heat exchanger tube vibration suppression device and a steam generator are provided. The heat exchanger tube vibration suppression device includes: a plurality of sleeves (101) disposed in a heat exchanger tube (66) with a predetermined gap in relation to an inner surface of the heat exchanger tube (66) so as to extend in a longitudinal direction of the heat exchanger tube; and a connecting member (102) that connects the plurality of sleeves (101) so as to be movable between a contracted position at which adjacent sleeves (101) overlap at least partially and an extended position at which the amount of overlap of the adjacent sleeves (101) is minimized. In this way, it is possible to suppress the vibration of the heat exchanger tube appropriately.

## Description

### Field

The present invention relates to a heat exchanger tube vibration suppression device for suppressing vibration of a plurality of heat exchanger tubes used in a heat exchanger, and a steam generator to which a heat exchanger tube vibration suppression device is applied.

### Background

A nuclear power plant includes a nuclear reactor, a steam generator, a steam turbine, a power generator, and the like. For example, a pressurized water reactor (PWR) generates high-temperature and high-pressure water which does not boil throughout a reactor internal using light water as a nuclear reactor coolant and a neutron moderator. The steam generator exchanges heat between high-temperature and high-pressure water (primary cooling water) and secondary cooling water to generate steam. The steam turbine drives a turbine using the steam and the power generator generates electricity using the driving power.

In the steam generator, a tube bundle shroud is provided in a hollow airtight body part with a predetermined gap with respect to an inner wall surface thereof, a plurality of reverse U-shaped heat exchanger tubes are provided in the tube bundle shroud, end portions of the heat exchanger tubes are supported by the tube plate, and an inlet-side channel head and an outlet-side channel head of the primary cooling water are formed at a lower end portion of a body part. Moreover, an inlet portion of the secondary cooling water is positioned inside the body part so as to be provided on the upper side of the tube bundle shroud, a steam-water separator and a moisture separator are arranged in parallel in the vertical direction, and a steam outlet is provided on the upper side thereof.

Accordingly, the primary cooling water is supplied from the cooling water pipe to the plurality of heat exchanger tubes through the inlet-side channel head, and the secondary cooling water is supplied from the inlet portion into the body part. Then, heat is exchanged between the primary cooling water (hot water) flowing in the plurality of heat exchanger tubes and the secondary cooling water (cold water) circulating in the body part, whereby the secondary cooling water absorbs the heat, and thus steam is generated. The water in the generated steam is removed by the steam-water separator, the steam of which the moisture is removed by the moisture separator is discharged from the steam outlet, and the heat-exchanged primary cooling water is discharged from the outlet-side channel head.

However, since the steam generator is configured such that high-pressure water as the primary cooling water is supplied into the plurality of heat exchanger tubes, and the external secondary cooling water is heated to generate steam, the heat exchanger tubes are likely to vibrate. In this case, the lower end portions of the heat exchanger tubes are supported by the tube plate, and an upper U-bend portion is supported by an anti-vibration bracket inserted between the heat exchanger tubes. However, the heat exchanger tube may partially deteriorate due to a long period of use, abrasion may occur at a through-hole of a tube support plate or a contact portion with the anti-vibration bracket, and thus the heat exchanger tube may be thinned. When the heat exchanger tube deteriorates or is thinned, the function thereof may be damaged. In this case, the heat exchanger tube becomes unusable, and a plug is fixed to the respective end portions of the heat exchanger tube to prevent an inflow of the primary cooling water, and a stabilizer (a wire or the like) is inserted therein to suppress vibration.

As such a technique, a stabilizer that includes only one or a plurality of wires is used as a general vibration stabilizing method. Moreover, for example, techniques which strengthen the function are disclosed in Patent Literatures below. In a heat-exchanger tube vibration stabilization method and device disclosed in Patent Literature 1, a plurality of sleeves is fixed to cables with a predetermined gap in an axial direction, a distal end assembly is fixed to a distal end portion to form a tube plug attachment seal assembly, and the vibration stabilization device is inserted and fixed to a heat exchanger tube to stabilize the vibration of a deteriorating tube. Moreover, in a method and device for absorbing vibration energy of a vibrating tube disclosed in Patent Literature 2, a cable end attachment tool is connected to a cable distal end member with a plurality of cables interposed, and the absorption device is inserted into a heat exchanger tube to absorb vibration energy of the tube.

### Citation List

### Patent Literature

Patent Literature 1: Japanese Patent Application Laid-open No. 60-159595
Patent Literature 2: Japanese Patent No. 2759090 Summary

### Technical Problem

However, in the conventional heat-exchanger tube vibration stabilization device described above, since the plurality of sleeves are fixed to the cables, the vibration stabilization device may integrally vibrate when the heat exchanger tube vibrates, and thus it is difficult to sufficiently suppress the vibration of the heat exchanger tube. Moreover, in the tube vibration energy absorption device, the plurality of cables is merely disposed in the tubes. Even in this case, when the heat exchanger tube vibrates, the cables may vibrate integrally, and thus it is difficult to sufficiently suppress the vibration of the heat exchanger tube. Further, since the heat-exchanger tube vibration stabilization device is inserted upward from the lower end portion of the heat exchanger tube, it is difficult to insert the device if the rigidity thereof is too low, and it is easy to insert the device but is difficult to insert the device into a bent portion (U-bend portion) if the rigidity thereof is too high.

The present invention solves the above-described problems and an object thereof is to provide a heat exchanger tube vibration suppression device and a steam generator capable of suppressing vibration of a heat exchanger tube appropriately.

### Solution to Problem

According to an aspect of the present invention in order to achieve the above purpose, there is provided a heat exchanger tube vibration suppression device including: a plurality of sleeves disposed in a heat exchanger tube with a predetermined gap in relation to an inner surface of the heat exchanger tube so as to extend in a longitudinal direction of the heat exchanger tube; and a connecting member that connects the plurality of sleeves so as to be movable between a contracted position at which adjacent sleeves overlap at least partially and an extended position at which an amount of overlap of the adjacent sleeves is minimized.

Thus, when the plurality of sleeves is at the contracted position by the connecting member, sufficient rigidity is secured and attachment properties can be improved. Moreover, when the plurality of sleeves is inserted in the heat exchanger tube and is at the extended position by the connecting member, the rigidity decreases and vibration suppression properties can be improved. That is, when the heat exchanger tube vibrates, the respective sleeves move in the radial direction in relation to the heat exchanger tube, the heat exchanger tube interferes with the sleeves. Thus, the vibration energy of the heat exchanger tube is dispersed by the vibration energy of the sleeve, and the vibration of the heat exchanger tube can be absorbed and suppressed effectively.

In the heat exchanger tube vibration suppression device of the present invention, it is characterized that the connecting member includes a first locking portion provided on one side in the longitudinal direction of the sleeve and a second locking portion provided on the other side in the longitudinal direction of the sleeve, and the first locking portion and the second locking portion can be locked together.

Thus, since the connecting member includes the first locking portion on one side of the sleeve and the second locking portion on the other side, it is possible to simplify the structure and to move the plurality of sleeves easily between the contracted position and the extended position.

In the heat exchanger tube vibration suppression device of the present invention, it is characterized that the first locking portion and the second locking portion can hold the plurality of sleeves at the contracted position and the extended position.

Thus, it is possible to hold the plurality of sleeves at the contracted position and the extended position by the first and second locking portions and to simplify the structure.

In the heat exchanger tube vibration suppression device of the present invention, it is characterized that the plurality of sleeves has the same shape and has a cylindrical shape in which a diameter on one side in the longitudinal direction is smaller than a diameter on the other side, the first locking portion is provided on an outer side and the second locking portion is provided on an inner side.

Thus, since the respective sleeves have the same shape, it is possible to reduce the manufacturing cost and to improve the assembling properties and reduce the assembling cost. Since the diameter on one side of each sleeve is different from the diameter on the other side of the sleeve, it is possible to superimpose the respective sleeves easily and to adjust the sleeves so as to have appropriate rigidity.

In the heat exchanger tube vibration suppression device of the present invention, it is characterized that the first locking portion and the second locking portion have a base end portion that is attached to the sleeve so as to freely fluctuate.

Thus, since the first and second locking portions fluctuate when the plurality of sleeves are at the contracted position and the extended position, it is possible to hold the respective sleeves at the contracted position and the extended position reliably.

In the heat exchanger tube vibration suppression device of the present invention, it is characterized that the plurality of sleeves includes a large-diameter sleeve and a small-diameter sleeve which are alternately arranged along the longitudinal direction of the heat exchanger tube, the first locking portion and the second locking portion of the large-diameter sleeve are provided on an inner side, and the first locking portion and the second locking portion of the small-diameter sleeve are provided on an outer side.

Thus, since each sleeve includes the first and second sleeves having different diameters, it is possible to form the sleeve in a cylindrical shape or a polygonal cylindrical shape and to reduce the manufacturing cost.

In the heat exchanger tube vibration suppression device of the present invention, it is characterized that an attenuation ring is disposed on an outer side of the sleeve.

Thus, when the heat exchanger tube vibrates, since the respective sleeves move in relation to the heat exchanger tube and the attenuation ring also moves in relation to the heat exchanger tube, the heat exchanger tube interferes with the sleeve and the attenuation ring, and the vibration energy of the heat exchanger tube is dispersed by the vibration energy of the sleeve and the attenuation ring. Therefore, it is possible to absorb and suppress the vibration of the heat exchanger tube effectively.

In the heat exchanger tube vibration suppression device of the present invention, it is characterized that a restricting portion that restricts the attenuation ring so as to be immovable over an entire length of the sleeve is provided.

Thus, it is possible to absorb and suppress the vibration of the heat exchanger tube effectively in the entire longitudinal direction of the heat exchanger tube.

In the heat exchanger tube vibration suppression device of the present invention, it is characterized that a cord-like member having flexibility is disposed on an inner side of the plurality of sleeves.

Thus, the plurality of sleeves is arranged appropriately by the cord-like member, and the ability to insert the device into the heat exchanger tube can be improved.

In the heat exchanger tube vibration suppression device of the present invention, it is characterized that a holding member that holds the plurality of sleeves at the contracted position is detachably attached to the cord-like member.

Thus, since the plurality of sleeves is held at the contracted position by the holding member and the respective sleeves are held at the contracted position, it is possible to secure sufficient rigidity and to improve the ability to insert the device into the heat exchanger tube.

In a steam generator of the present invention, it is characterized that the steam generator includes: a body part having a hollow airtight shape; a heat exchanger tube bundle including a plurality of heat exchanger tubes which is arranged in the body part so as to form a reverse U-shape and in which a primary cooling water flows; a tube plate that is fixed to a lower portion of the body part so as to support an end portion of the plurality of heat exchanger tubes; an inlet-side channel head and an outlet-side channel head that are provided in a lower end portion of the body part so as to communicate with the respective end portions of the plurality of heat exchanger tubes; a water supply portion that supplies a secondary cooling water into the body part; a steam outlet provided in an upper end portion of the body part; and the heat exchanger tube vibration suppression device.

Thus, when high-pressure water as the primary cooling water flows in the plurality of heat exchanger tubes and the secondary cooling water flowing in the body part is heated to generate steam, the heat exchanger tube is likely to vibrate. In this case, when the heat exchanger tube vibrates, since the respective sleeves move in the radial direction in relation to the heat exchanger tube, the heat exchanger tube interferes with the sleeve, and the vibration energy of the heat exchanger tube is dispersed by the vibration energy of the sleeve. Thus, it is possible to absorb and suppress the vibration of the heat exchanger tube effectively.

In a heat exchanger tube vibration suppression device of the present invention, it is characterized that the heat exchanger tube vibration suppression device includes: a cord-like member having flexibility and disposed in a heat exchanger tube; a plurality of sleeves having a hollow shape and disposed along a longitudinal direction of the cord-like member; and a plurality of granular bodies that is movably filled in the sleeve.

Thus, since the plurality of hollow sleeves is disposed along the longitudinal direction of the cord-like member and the plurality of granular bodies is movably filled in the sleeve, the cord-like member and the sleeve can move in relation to the heat exchanger tube and the plurality of granular bodies can move in relation to the heat exchanger tube in the sleeve. Due to this, when the heat exchanger tube vibrates, the cord-like member and the sleeves move in relation to the heat exchanger tube and the respective granular bodies move in relation to the heat exchanger tube in the sleeve, and the vibration energy of the heat exchanger tube is dispersed by the vibration energy of the sleeve and the vibration energy of the granular body. Thus, it is possible to attenuate and suppress the vibration of the heat exchanger tube effectively.

In the heat exchanger tube vibration suppression device of the present invention, it is characterized that the sleeve has a hollow cylindrical shape and is disposed so that a predetermined gap is formed between an outer circumferential surface of the sleeve and an inner surface of the heat exchanger tube.

Thus, when the heat exchanger tube vibrates, the respective sleeves move in relation to the heat exchanger tube, and the vibration energy of the heat exchanger tube is dispersed by the vibration energy of the sleeve. Therefore, it is possible to attenuate the vibration of the heat exchanger tube effectively.

In the heat exchanger tube vibration suppression device of the present invention, it is characterized that the sleeve is fixed to the cord-like member with a predetermined gap in the longitudinal direction of the cord-like member.

Thus, when the heat exchanger tube vibrates, since the relative movement of the respective sleeves in the longitudinal direction of the cord-like member is restricted, the granular body in the sleeve moves appropriately in relation to the heat exchanger tube, and the vibration energy of the heat exchanger tube is dispersed by the vibration energy of the granular body. Therefore, it is possible to attenuate the vibration of the heat exchanger tube effectively.

In the heat exchanger tube vibration suppression device of the present application, it is characterized that a pair of disc members is fixed to the cord-like member with a predetermined gap in a longitudinal direction of the cord-like member, and the plurality of sleeves is disposed between the pair of disc members so as to be movable along the longitudinal direction of the cord-like member.

Thus, when the heat exchanger tube vibrates, the respective sleeves move in the longitudinal direction of the cord-like member in relation to the heat exchanger tube between the pair of disc members, and the vibration energy of the heat exchanger tube is dispersed by the vibration energy of the sleeve. Therefore, it is possible to attenuate the vibration of the heat exchanger tube effectively.

In the heat exchanger tube vibration suppression device of the present invention, it is characterized that the gap between the sleeve and the heat exchanger tube is larger than the gap between the disc member and the heat exchanger tube.

Thus, when the heat exchanger tube vibrates, the respective sleeves move in the radial direction of the cord-like member in relation to the heat exchanger tube about the pair of disc members, and the vibration energy of the heat exchanger tube is dispersed by the vibration energy of the sleeve. Therefore, it is possible to attenuate the vibration of the heat exchanger tube effectively.

In the heat exchanger tube vibration suppression device of the present invention, it is characterized that the heat exchanger tube is formed such that a U-shaped portion is connected to an upper end portion of a straight portion, and the plurality of sleeves is disposed in the U-shaped portion.

Thus, it is possible to suppress the vibration of the U-shaped portion of the heat exchanger tube appropriately with the relative movement of the plurality of sleeves.

In the heat exchanger tube vibration suppression device of the present invention, it is characterized that a holding member that holds the cord-like member to be held at the straight portion so that the plurality of sleeves is positioned at a predetermined position of the heat exchanger tube is provided.

Thus, the respective sleeves are held at a predetermined position of the heat exchanger tube by the holding member, and the vibration of the heat exchanger tube can be attenuated effectively by the sleeve and the granular body.

In the heat exchanger tube vibration suppression device of the present invention, it is characterized that the cord-like member has respective end portions in the longitudinal direction being held at the straight portion by a tension member.

Thus, since the respective end portions of the cord-like member are held at the straight portion by the tension member, the respective sleeves are held at a predetermined position of the heat exchanger tube, and the vibration of the heat exchanger tube can be attenuated effectively by the sleeve and the granular body.

In a steam generator of the present invention, it is characterized that the steam generator includes: a body part having a hollow airtight shape; a heat exchanger tube bundle including a plurality of heat exchanger tubes which is arranged in the body part so as to form a reverse U-shape and in which a primary cooling water flows; a tube plate that is fixed to a lower portion of the body part so as to support an end portion of the plurality of heat exchanger tubes; an inlet-side channel head and an outlet-side channel head that are provided in a lower end portion of the body part so as to communicate with the respective end portions of the plurality of heat exchanger tubes; a water supply portion that supplies a secondary cooling water into the body part; a steam outlet provided in an upper end portion of the body part; and the heat exchanger tube vibration suppression device.

Thus, when high-pressure water as the primary cooling water flows in the plurality of heat exchanger tubes and the secondary cooling water flowing in the body part is heated to generate steam, the heat exchanger tube is likely to vibrate. In this case, when the heat exchanger tube vibrates, since the cord-like member and the respective sleeves move in relation to the heat exchanger tube, and the respective granular bodies move in relation to the heat exchanger tube in the sleeve, and the vibration energy of the heat exchanger tube is dispersed by the vibration energy of the sleeve and the vibration energy of the granular body. Thus, it is possible to attenuate and suppress the vibration of the heat exchanger tube effectively.

In a heat exchanger tube vibration suppression device of the present invention, it is characterized that the heat exchanger tube vibration suppression device includes: a cord-like member having flexibility and disposed in a heat exchanger tube; and a moving device provided at least one end portion of the cord-like member so as to move the cord-like member toward a U-bend part when the cord-like member is disposed in the heat exchanger tube.

Thus, since the cord-like member having flexibility and disposed in the heat exchanger tube is disposed by being moved toward the U-bend part by the moving device, the cord-like member can move in relation to the U-bend part of the heat exchanger tube. Due to this, when the heat exchanger tube vibrates, the cord-like member moves in relation to the heat exchanger tube, and the vibration energy of the heat exchanger tube is dispersed by the vibration energy of the cord-like member. Therefore, it is possible to attenuate and suppress the vibration of the heat exchanger tube effectively.

In the heat exchanger tube vibration suppression device of the present invention, it is characterized that the moving device has a fixing mechanism that fixes to an end portion of the heat exchanger tube.

Thus, since the cord-like member is held by the fixing mechanism in a state of being moved toward the U-bend part by the moving device, it is possible to attenuate and suppress the vibration of the heat exchanger tube appropriately.

In the heat exchanger tube vibration suppression device, it is characterized that a plugging member that blocks the end portion of the heat exchanger tube is provided, the fixing mechanism is provided in the plugging member, and a push-up mechanism capable of moving the cord-like member is disposed between the end portion of the cord-like member and the plugging member.

Thus, since the fixing mechanism is provided in the plugging member and the push-up mechanism is disposed between the end portion of the cord-like member and the plugging member, it is possible to block the end portion of the heat exchanger tube appropriately and to hold the cord-like member at a predetermined position of the heat exchanger tube appropriately.

In the heat exchanger tube vibration suppression device of the present invention, it is characterized that the cord-like member has a first cord portion having predetermined bending strength and a second cord portion provided on at least one end side in the longitudinal direction of the cord-like member and having higher bending strength than the first cord portion.

Thus, since the second cord portion having high bending strength of the cord-like member is disposed in the straight portion of the heat exchanger tube, it is possible to dispose the first cord portion having low bending strength in the U-bend part of the heat exchanger tube appropriately.

In the heat exchanger tube vibration suppression device of the present invention, it is characterized that the second cord portion is formed by connecting a plurality of connecting members in series.

Thus, since the second cord portion is formed by connecting a plurality of connecting members, it is possible to insert the second cord portion into the heat exchanger tube easily even in a narrow working space.

In the heat exchanger tube vibration suppression device of the present invention, it is characterized that a rolling member is provided on an outer circumferential portion of the connecting member.

Thus, the second cord portion disposed in the heat exchanger tube can be easily moved in the longitudinal direction inside the heat exchanger tube by the rolling member and the ability to insert the cord-like member into the heat exchanger tube can be improved.

In the heat exchanger tube vibration suppression device of the present invention, it is characterized that a sleeve configured to make sliding contact with an inner circumferential surface of the heat exchanger tube is provided on an outer circumferential portion of the connecting member.

Thus, the second cord portion disposed in the heat exchanger tube can be easily moved in the longitudinal direction inside the heat exchanger tube by the sleeve and the ability to insert the cord-like member into the heat exchanger tube can be improved.

In the heat exchanger tube vibration suppression device of the present invention, it is characterized that an expanding member is disposed between the first cord portion and the second cord portion.

Thus, since the expanding member is disposed between the first cord portion and the second cord portion, it is possible to eliminate a positioning error of the cord-like member and to hold the cord-like member at a predetermined position of the heat exchanger tube appropriately.

In the heat exchanger tube vibration suppression device of the present invention, it is characterized that a holding member that holds the second cord portion at a predetermined position of the heat exchanger tube is provided.

Thus, the cord-like member can be held at a predetermined position of the heat exchanger tube appropriately by the holding member.

In a steam generator of the present invention, it is characterized that the steam generator includes: a body part having a hollow airtight shape; a heat exchanger tube bundle including a plurality of heat exchanger tubes which is arranged in the body part so as to form a reverse U-shape and in which a primary cooling water flows; a tube plate that is fixed to a lower portion of the body part so as to support an end portion of the plurality of heat exchanger tubes; an inlet-side channel head and an outlet-side channel head that are provided in a lower end portion of the body part so as to communicate with the respective end portions of the plurality of heat exchanger tubes; a water supply portion that supplies a secondary cooling water into the body part; a steam outlet provided in an upper end portion of the body part; and the heat exchanger tube vibration suppression device.

Thus, when high-pressure water as the primary cooling water flows in the plurality of heat exchanger tubes and the secondary cooling water flowing in the body part is heated to generate steam, the heat exchanger tube is likely to vibrate. In this case, when the heat exchanger tube vibrates, since the cord-like member moves in relation to the heat exchanger tube, the vibration energy of the heat exchanger tube is dispersed by the vibration energy of the cord-like member. Thus, it is possible to attenuate and suppress the vibration of the heat exchanger tube effectively.

In a steam generator of the present invention, it is characterized that the steam generator includes: a body part having a hollow airtight shape; a heat exchanger tube bundle including a plurality of heat exchanger tubes which is arranged in the body part so as to form a reverse U-shape and in which a primary cooling water flows; a tube plate that is fixed to a lower portion of the body part so as to support an end portion of the plurality of heat exchanger tubes; an inlet-side channel head and an outlet-side channel head that are provided in a lower end portion of the body part so as to communicate with the respective end portions of the plurality of heat exchanger tubes; a water supply portion that supplies a secondary cooling water into the body part; a steam outlet provided in an upper end portion of the body part; and a vibration suppression device in which a cord-like member is disposed in a portion of the plurality of heat exchanger tubes and which is supported by being pushed up from a lower surface of a U-bend part of the heat exchanger tube.

Thus, when high-pressure water as the primary cooling water flows in the plurality of heat exchanger tubes and the secondary cooling water flowing in the body part is heated to generate steam, the heat exchanger tube is likely to vibrate. In this case, when the heat exchanger tube vibrates, since the cord-like member moves in relation to the heat exchanger tube, the vibration energy of the heat exchanger tube is dispersed by the vibration energy of the cord-like member. Thus, it is possible to attenuate and suppress the vibration of the heat exchanger tube effectively.

### Advantageous Effects of Invention

According to the heat exchanger tube vibration suppression device and the steam generator of the present invention, the heat exchanger tube vibration suppression device includes the plurality of sleeves disposed in the heat exchanger tube with a predetermined gap in relation to the inner surface of the heat exchanger tube so as to extend in the longitudinal direction of the heat exchanger tube; and the connecting member that connects the plurality of sleeves so as to be movable between the contracted position at which the adjacent sleeves overlap at least partially and the extended position at which the amount of overlap of the adjacent sleeves is minimized. Thus, the vibration energy of the heat exchanger tube is dispersed by the vibration energy of the sleeve. Accordingly, it is possible to absorb and suppress the vibration of the heat exchanger tube effectively.

Moreover, according to the heat exchanger tube vibration suppression device and the steam generator of the present invention, the plurality of sleeves having a hollow shape is disposed along the longitudinal direction of the cord-like member and the plurality of granular bodies is movably filled in the sleeve. Thus, since the cord-like member, the sleeve, and the granular body move in relation to the heat exchanger tube, it is possible to attenuate and suppress the vibration of the heat exchanger tube appropriately and effectively.

Moreover, according to the heat exchanger tube vibration suppression device and the steam generator of the present invention, since the flexible cord-like member is disposed by being moved toward the U-bend part by the moving device, the cord-like member moves in relation to the heat exchanger tube. Thus, it is possible to attenuate and suppress the vibration of the heat exchanger tube appropriately and effectively.

### Brief Description of Drawings

FIG. 1 is a schematic diagram illustrating a state in which a heat exchanger tube vibration suppression device according to Example 1 of the present invention is attached to a steam generator.
FIG. 2 is a cross-sectional view illustrating a state in which the heat exchanger tube vibration suppression device of Example 1 is inserted in a heat exchanger tube.
FIG. 3 is a cross-sectional view illustrating a state in which the heat exchanger tube vibration suppression device of Example 1 is attached to the heat exchanger tube.
FIG. 4 is a cross-sectional view of a sleeve that forms the vibration suppression device.
FIG. 5 is a perspective view of the sleeve that forms the vibration suppression device.
FIG. 6 is a schematic configuration diagram of a nuclear power plant to which the steam generator of Example 1 is applied.
FIG. 7 is a schematic configuration diagram illustrating the steam generator of Example 1.
FIG. 8 is a cross-sectional view illustrating a state in which a heat exchanger tube vibration suppression device according to Example 2 of the present invention is inserted in a heat exchanger tube.
FIG. 9 is a cross-sectional view illustrating a state in which the heat exchanger tube vibration suppression device of Example 2 is attached to the heat exchanger tube.
FIG. 10 is a cross-sectional view of a sleeve that forms the vibration suppression device.
FIG. 11 is a perspective view of the sleeve that forms the vibration suppression device.
FIG. 12 is a cross-sectional view illustrating a state in which a heat exchanger tube vibration suppression device according to Example 3 of the present invention is inserted in a heat exchanger tube.
FIG. 13 is a cross-sectional view illustrating a state in which the heat exchanger tube vibration suppression device of Example 3 is attached to the heat exchanger tube.
FIG. 14 is a cross-sectional view illustrating a state in which a heat exchanger tube vibration suppression device according to Example 4 of the present invention is inserted in a heat exchanger tube.
FIG. 15 is a cross-sectional view illustrating a state in which the heat exchanger tube vibration suppression device of Example 4 is attached to the heat exchanger tube.
FIG. 16 is a schematic diagram illustrating a state in which a heat exchanger tube vibration suppression device according to Example 5 of the present invention is attached to a steam generator.
FIG. 17 is a schematic diagram of the heat exchanger tube vibration suppression device of Example 5.
FIG. 18 is a cross-sectional view of a main part of the heat exchanger tube vibration suppression device of Example 5.
FIG. 19 is a cross-sectional view along line XIX-XIX of FIG. 18.
FIG. 20 is a cross-sectional view of a heat exchanger tube vibration suppression device according to Example 6 of the present invention.
FIG. 21 is a cross-sectional view of a heat exchanger tube vibration suppression device according to Example 7 of the present invention.
FIG. 22 is a cross-sectional view along line XXII-XXII of FIG. 21.
FIG. 23 is a cross-sectional view of a heat exchanger tube vibration suppression device according to Example 8 of the present invention.
FIG. 24 is a cross-sectional view along line XXIV-XXIV of FIG. 23.
FIG. 25 is a cross-sectional view of a heat exchanger tube vibration suppression device according to Example 9 of the present invention.
FIG. 26 is a cross-sectional view along line XXVI-XXVI of FIG. 25.
FIG. 27 is a schematic diagram of a heat exchanger tube vibration suppression device according to Example 10 of the present invention.
FIG. 28 is a schematic diagram of a heat exchanger tube vibration suppression device according to Example 11 of the present invention.
FIG. 29 is a cross-sectional view of a heat exchanger tube vibration suppression device according to Example 12 of the present invention.
FIG. 30 is a cross-sectional view of a heat exchanger tube vibration suppression device according to Example 13 of the present invention.
FIG. 31 is a schematic diagram of a heat exchanger tube vibration suppression device of Example 14 of the present invention.
FIG. 32 is a schematic diagram of a heat exchanger tube vibration suppression device according to Example 15 of the present invention.
FIG. 33 is a cross-sectional view of a heat exchanger tube vibration suppression device according to Example 16 of the present invention.
FIG. 34 is a cross-sectional view of a heat exchanger tube vibration suppression device according to Example 17 of the present invention.
FIG. 35 is a cross-sectional view of a heat exchanger tube vibration suppression device according to Example 18 of the present invention.
FIG. 36 is a schematic diagram of a heat exchanger tube vibration suppression device according to Example 19 of the present invention.
FIG. 37 is a schematic diagram of a heat exchanger tube vibration suppression device according to Example 20 of the present invention.
FIG. 38 is a cross-sectional view illustrating a state in which the heat exchanger tube vibration suppression device of Example 20 is inserted in a heat exchanger tube.
FIG. 39 is a cross-sectional view of a push-up mechanism of a heat exchanger tube vibration suppression device according to Example 21 of the present invention.
FIG. 40 is a cross-sectional view of a push-up mechanism of a heat exchanger tube vibration suppression device according to Example 22 of the present invention.
FIG. 41 is a cross-sectional view of a push-up mechanism of a heat exchanger tube vibration suppression device according to Example 23 of the present invention.
FIG. 42 is a cross-sectional view of a push-up mechanism of a heat exchanger tube vibration suppression device according to Example 24 of the present invention.
FIG. 43 is a cross-sectional view of a push-up mechanism of a heat exchanger tube vibration suppression device according to Example 25 of the present invention.
FIG. 44 is a schematic diagram of a heat exchanger tube vibration suppression device according to Example 26 of the present invention.
FIG. 45 is a schematic diagram of a heat exchanger tube vibration suppression device according to Example 27 of the present invention.
FIG. 46 is a schematic diagram of a heat exchanger tube vibration suppression device according to Example 28 of the present invention.
FIG. 47 is a schematic diagram of a heat exchanger tube vibration suppression device according to Example 29 of the present invention.
FIG. 48 is a schematic diagram of a heat exchanger tube vibration suppression device according to Example 30 of the present invention.
FIG. 49 is a schematic diagram of a heat exchanger tube vibration suppression device according to Example 31 of the present invention.
FIG. 50 is a schematic diagram of a heat exchanger tube vibration suppression device according to Example 32 of the present invention.
FIG. 51 is a schematic diagram of a heat exchanger tube vibration suppression device according to Example 33 of the present invention.

### Description of Embodiments

Hereinafter, a preferred example of a heat exchanger tube vibration suppression device and a steam generator according to the present invention will be described in detail with reference to the accompanying drawings. The present invention is not limited to the example, and when there are a number of examples, the present invention may include a combination of the examples.

### [Example 1]

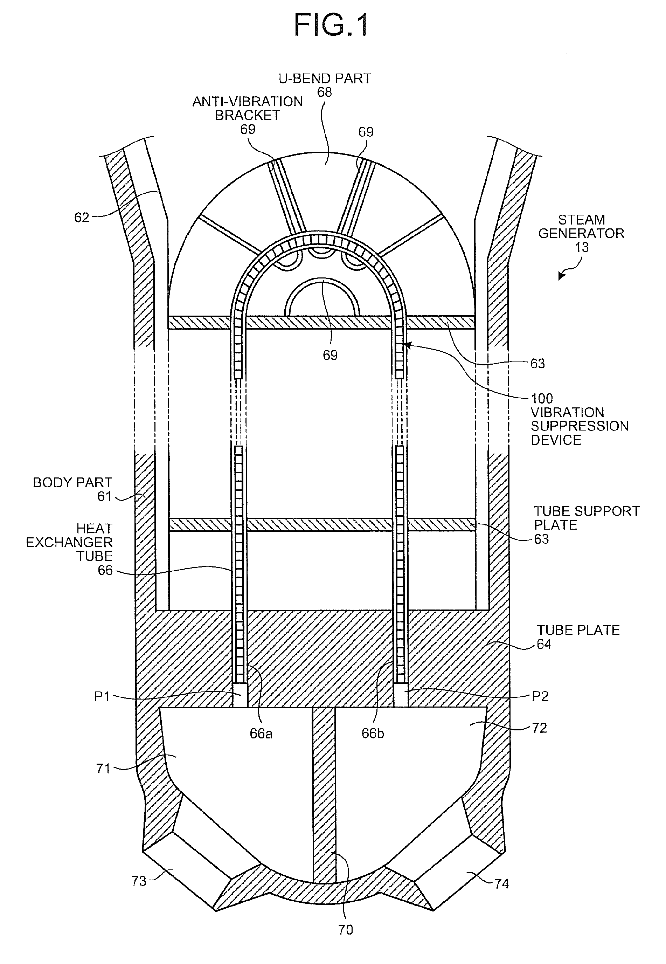

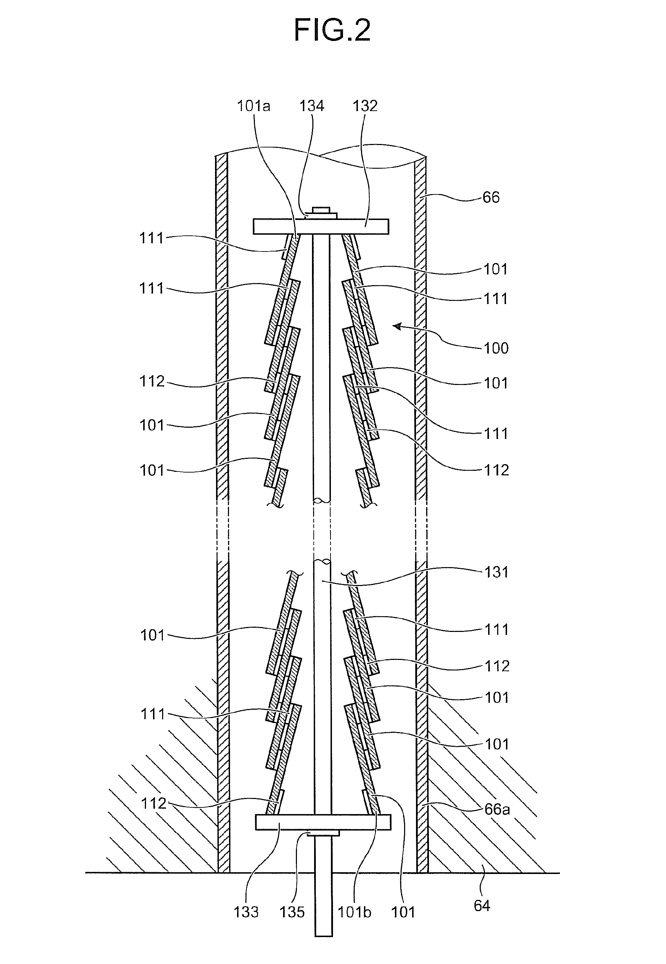

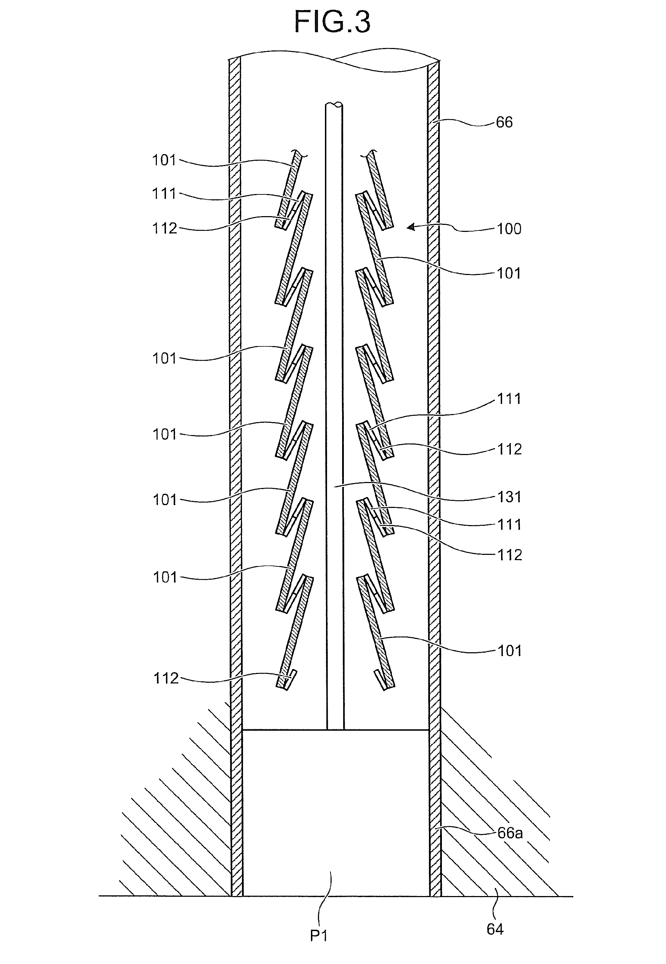

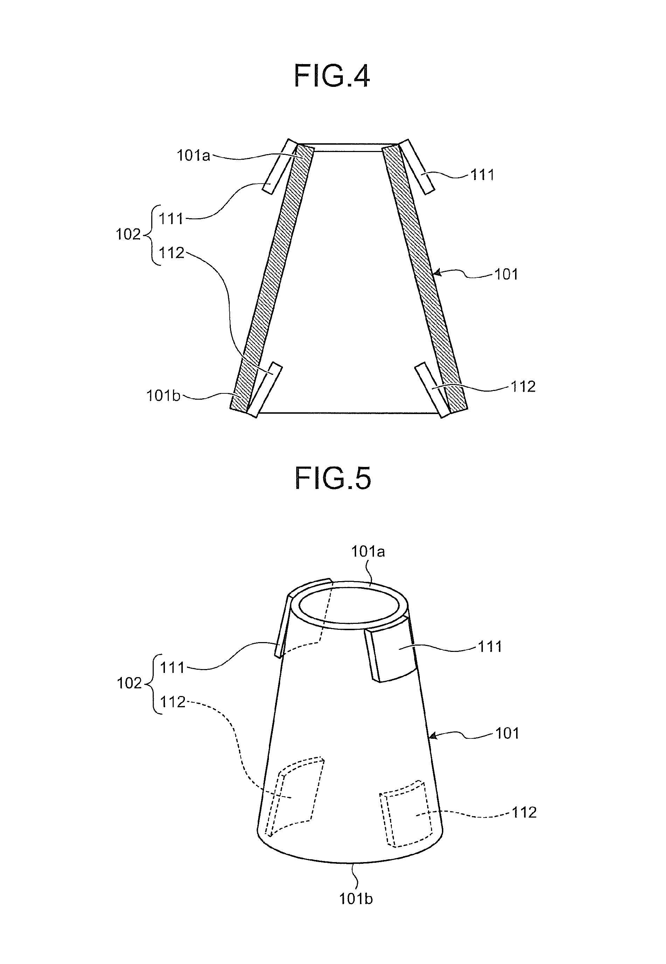

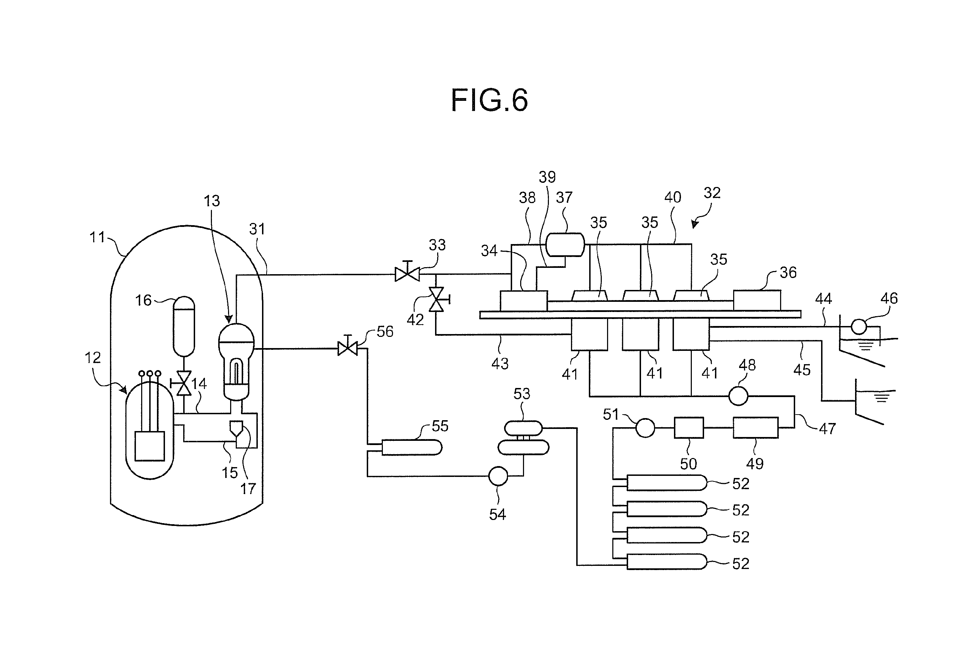

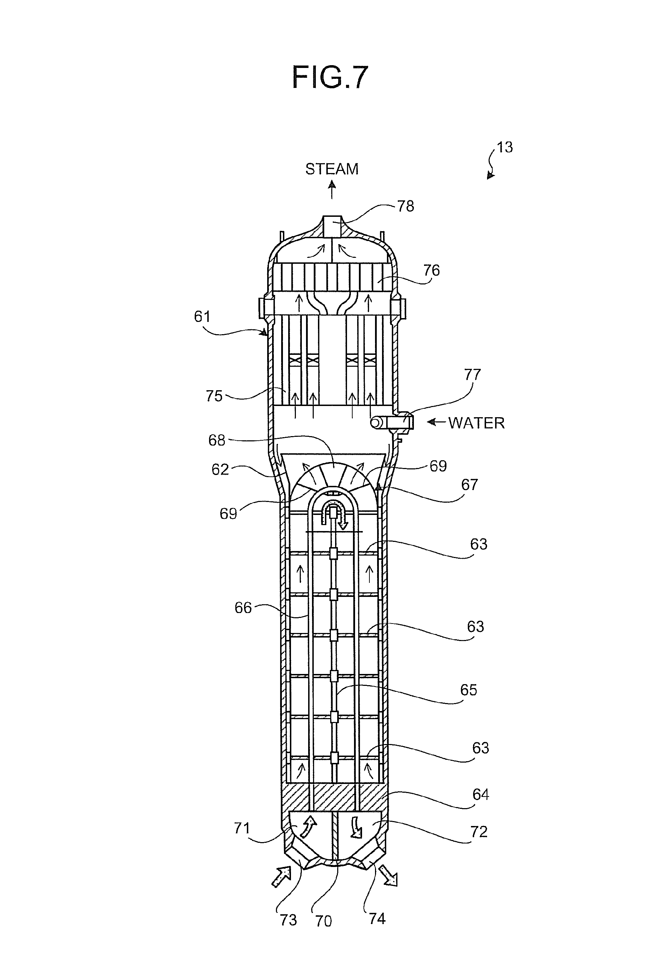

FIG. 1 is a schematic diagram illustrating a state in which a heat exchanger tube vibration suppression device according to Example 1 of the present invention is attached to a steam generator, FIG. 2 is a cross-sectional view illustrating a state in which the heat exchanger tube vibration suppression device of Example 1 is inserted in a heat exchanger tube, FIG. 3 is a cross-sectional view illustrating a state in which the heat exchanger tube vibration suppression device of Example 1 is attached to the heat exchanger tube, FIG. 4 is a cross-sectional view of a sleeve that forms the vibration suppression device, FIG. 5 is a perspective view of the sleeve that forms the vibration suppression device, FIG. 6 is a schematic configuration diagram of a nuclear power plant to which the steam generator of Example 1 is applied, and FIG. 7 is a schematic configuration diagram illustrating the steam generator of Example 1.

A nuclear reactor of Example 1 is a pressurized water reactor (PWR), in which light water is used as a nuclear reactor coolant and a neutron moderator and is prepared to be high-temperature and high-pressure water that does not boil throughout a reactor internal, the high-temperature and the high temperature water is sent to the steam generator to generate steam by heat exchange, and the steam is sent to a turbine generator to generate electricity.

In a nuclear power plant having the pressurized water reactor of Example 1, as illustrated in FIG. 6, a containment 11 accommodates a pressurized water reactor 12 and a steam generator 13 therein, the pressurized water reactor 12 and the steam generator 13 are connected to each other through a high-temperature-side supply pipe 14 and a low-temperature-side supply pipe 15, the high-temperature-side supply pipe 14 is provided with a pressurizer 16, and the low-temperature-side supply pipe 15 is provided with a primary cooling water pump 17. In this case, light water is used as moderator and primary cooling water (coolant), and a primary cooling system is controlled by the pressurizer 16 so that the primary cooling system is held in a high-pressure state of approximately 150 to 160 atmospheric pressure in order to suppress the primary cooling water from boiling in a reactor internal portion.

Accordingly, in the pressurized water reactor 12, the light water as the primary cooling water is heated by low-enriched uranium or MOX as fuel (reactor fuel), and the high-temperature primary cooling water is sent to the steam generator 13 through the high-temperature-side supply pipe 14 in a state of being maintained at a predetermined high pressure by the pressurizer 16. In the steam generator 13, heat is exchanged between the high-temperature and high-pressure primary cooling water and the secondary cooling water, and the cooled primary cooling water is returned to the pressurized water reactor 12 through the low-temperature-side supply pipe 15.

The steam generator 13 is connected to a steam turbine 32 through a pipe 31 that supplies the heated secondary cooling water, that is, the steam, and the pipe 31 is provided with a main steam isolation valve 33. The steam turbine 32 has a high-pressure turbine 34 and a low-pressure turbine 35, and is connected to a power generator (power generating device) 36. Moreover, a moisture isolation heater 37 is provided between the high-pressure turbine 34 and the low-pressure turbine 35, a cooling water branch pipe 38 branched from the pipe 31 is connected to the moisture isolation heater 37, the high-pressure turbine 34 and the moisture isolation heater 37 are connected through a low-temperature reheating pipe 39, and the moisture isolation heater 37 and the low-pressure turbine 35 are connected through a high-temperature reheating pipe 40.

Moreover, the low-pressure turbine 35 of the steam turbine 32 has a condenser 41, and the condenser 41 is connected to a turbine bypass pipe 43 having a bypass valve 42 that extends from the pipe 31 and is also connected to an intake pipe 44 and a drain pipe 45 that supplies and discharge the cooling water (for example, sea water). The intake pipe 44 has a circulation water pump 46, and the other end portion is disposed under the sea together with the drain pipe 45.

The condenser 41 is connected to a pipe 47 and is also connected to a condenser pump 48, a grand condenser 49, a condensate demineralizer 50, a condensate booster pump 51, and a low-pressure water supply heater 52. Moreover, the pipe 47 is connected to a deaerator 53, and is provided with a main water supply pump 54, a high-pressure water supply heater 55, and a main water supplying control valve 56.

Accordingly, in the steam generator 13, the steam generated by exchanging heat with the high-temperature and high-pressure primary cooling water is sent to the steam turbine 32 (from the high-pressure turbine 34 to the low-pressure turbine 35) through the pipe 31, and the steam turbine 32 is driven by the steam to generate electricity by the power generator 36. In this case, after steam generated from the steam generator 13 drives the high-pressure turbine 34, the moisture included in the steam is removed and heated by the moisture isolation heater 37, and then the steam drives the low-pressure turbine 35. The steam which is used to drive the steam turbine 32 is cooled using sea water by the condenser 41 to become a condensate, and returns to the steam generator 13 through the grand condenser 49, the condensate demineralizer 50, the low-pressure water supply heater 52, the deaerator 53, the high-pressure water supply heater 55, and the like.

In the steam generator 13 of the nuclear power plant configured as described above, as illustrated in FIG. 7, a body part 61 has an airtight hollow cylindrical shape, and a diameter of the lower portion is slightly smaller than that of the upper portion. A tube bundle shroud 62 having a cylindrical shape is arranged in a lower portion of the body part 61 with a predetermined gap with respect to the inner wall surface of the body part 61. A plurality of tube support plates 63 is arranged inside the tube bundle shroud 62 so as to correspond to predetermined height positions, a tube plate 64 is fixed to the lower portion of the tube support plate 63, and the respective tube support plates 63 are supported by a plurality of stay rods 65 which extend upward from the tube plate 64. Then, a heat exchanger tube bundle 67 which includes a plurality of reverse U-shaped heat exchanger tubes 66 is arranged inside the tube bundle shroud 62.

In the heat exchanger tube bundle 67, each heat exchanger tube 66 has an upper portion which forms a U-bend part 68 as a U-shaped portion, a lower end portion which is expanded and supported by the tube plate 64, and a middle portion (an intermediate portion) which is supported by the plurality of tube support plates 63. In the U-bend part 68, the plurality of heat exchanger tubes 66 are disposed to be substantially parallel to each other in an inside-outside direction (an up-down direction) of the tube bundle shroud 62, and are disposed to be substantially parallel to each other in a radial direction (a horizontal direction) of the tube bundle shroud 62. A plurality of anti-vibration brackets 69 are interposed between the heat exchanger tubes 66 disposed in the radial direction of the tube bundle shroud 62.

Moreover, the lower portion of the body part 61 has a spherical shape, and an inlet chamber 71 and an outlet chamber 72 are partitioned and formed under the tube plate 64 by a partition wall 70. Further, an inlet nozzle 73 and an outlet nozzle 74 are formed in the lower portion of the tube plate 64. One end portion of each heat exchanger tube 66 communicates with the inlet chamber 71, and the other end portion communicates with the outlet chamber 72.

Moreover, in the body part 61, a steam-water separator 75 that separates the supplied water into steam and hot water, and a moisture separator 76 that removes moisture in the separated steam so as to become substantially dry steam are provided on the upper side of the heat exchanger tube bundle 67. Moreover, in the body part 61, a water supply pipe 77 that supplies the secondary cooling water to the inside is connected between the heat exchanger tube bundle 67 and the steam-water separator 75, and a steam outlet 78 is formed at the ceiling portion. That is, the secondary cooling water supplied from the water supply pipe 77 to the inside flows down with the tube bundle shroud 62 and circulates at the upper side of the tube plate 64, and exchanges heat with the hot water (the primary cooling water) flowing in each heat exchanger tube 66 when the secondary cooling water rises in the heat exchanger tube bundle 67.

Accordingly, as illustrated in FIGS. 6 and 7, the primary cooling water heated in the pressurized water reactor 12 is sent to the inlet chamber 71 of the steam generator 13 through the high-temperature-side supply pipe 14, passes and circulates through the inside of the plurality of heat exchanger tubes 66, and reaches the outlet chamber 72. On the other hand, the secondary cooling water cooled by the condenser 41 is sent to the water supply pipe 77 of the steam generator 13 through the pipe 47, and exchanges heat with the hot water (the primary cooling water) passing through the body part 61 and flowing in the heat exchanger tube 66. That is, in the body part 61, heat is exchanged between the high-pressure and high-temperature primary cooling water and the secondary cooling water, and the cooled primary cooling water returns from the outlet chamber 72 to the pressurized water reactor 12 through the low-temperature-side supply pipe 15. Meanwhile, the secondary cooling water having exchanged heat with the high-pressure and high-temperature primary cooling water rises in the body part 61, and is separated into steam and hot water by the steam-water separator 75, the moisture in the steam is removed by the moisture separator 76, and the steam is sent from the steam outlet 78 to the steam turbine 32 through the pipe 31.

In the steam generator 13 configured as described above, as illustrated in FIG. 1, when the high-pressure water as the primary cooling water flows in the plurality of heat exchanger tubes 66, and the secondary cooling water flowing in the body part 61 is heated to generate the steam, the plurality of heat exchanger tubes 66 is likely to vibrate. Although the lower end portion of the heat exchanger tube 66 is supported by the tube plate 64, and the U-bend part 68 is supported by the anti-vibration bracket 69, vibration may occur. Due to this, in the heat exchanger tube 66, abrasion may occur at a contact portion with the through-hole of the tube support plate 63 or the anti-vibration bracket 69 due to a long period of use. In this case, since the function of the heat exchanger tube 66 may be damaged, the heat exchanger tube 66 becomes unusable, a plug is attached to the respective end portions of the heat exchanger tube 66 to prevent an inflow of the primary cooling water, and an anti-vibration member is inserted therein to suppress the vibration.

A heat exchanger tube vibration suppression device 100 of Example 1 is attached to the unusable heat exchanger tube 66 in the steam generator 13, the end portions of the heat exchanger tube 66 are plugged by plugs P1 and P2 to prevent an inflow of the primary cooling water, and the vibration of the heat exchanger tube 66 (in particular, the U-bend part 68) plugged by the plugs P1 and P2 is suppressed.

As illustrated in FIGS. 2 to 5, the vibration suppression device 100 includes a plurality of sleeves 101 disposed in the heat exchanger tube 66 with a predetermined gap in relation to the inner surface of the heat exchanger tube 66 so as to extend in a longitudinal direction of the heat exchanger tube 66 and a connecting member 102 that connects the plurality of sleeves 101 so as to be movable between a contracted position at which the adjacent sleeves 101 overlap at least partially and an extended position at which the amount of overlap of the adjacent sleeves 101 is minimized.

The plurality of sleeves 101 has the same shape, and specifically, has a truncated conical shape in which an outer diameter (inner diameter) of an end portion 101a on one side (the upper side in FIG. 4) in the longitudinal direction is set to be smaller than an outer diameter (inner diameter) of an end portion 101b on the other side (the lower side in FIG. 4). Moreover, since each sleeve 101 is configured such that the outer diameter of the end portion 101b on the other side is set to be smaller than the inner diameter of the heat exchanger tube 66, a predetermined gap can be secured between the outer surface of the sleeve 101 and the inner surface of the heat exchanger tube 66. Due to this, when the plurality of sleeves 101 is arranged in series along the vertical direction, the sleeves 101 can overlap each other so that the end portion 101a of one of the adjacent sleeves 101 is fitted to the end portion 101b of the other sleeve 101.

The connecting member 102 has a first locking portion 111 provided on one side in the longitudinal direction of the sleeve 101 and a second locking portion 112 provided on the other side in the longitudinal direction of the sleeve 101. The first locking portion 111 has a curved shape (or a planar shape) that follows the outer diameter of the sleeve 101 and a plurality of (in the present example, two) first locking portions 111 is provided on the outer side of the end portion 101a of the sleeve 101 at an equal interval in the circumferential direction. A plurality of (in the present example, two) second locking portion 112 is provided on the inner side of the end portion 101b of the sleeve 101 at an equal interval in the circumferential direction.

Moreover, the first locking portion 111 has a base end portion attached to the end portion 101a of the sleeve 101 so as to freely fluctuate, and the second locking portion 112 has a base end portion attached to the end portion 101b of the sleeve 101 so as to freely fluctuate. In this case, the locking portions 111 and 112 are attached by caulking, welding, or the like so as to freely fluctuate in the radial direction of the sleeve 101 by a small angle and are elastically supported in a direction of protruding outward.

When the adjacent sleeves 101 are disposed so as to overlap partially, the first locking portion 111 and the second locking portion 112 can be locked. Due to this, the first locking portion 111 and the second locking portion 112 can be held at a contracted position at which the plurality of sleeves 101 moves closer to each other and an extended position at which the sleeves are separated from each other.

That is, as illustrated in FIG. 2, when the adjacent sleeves 101 are at the contracted position at which the sleeves overlap and move closer to each other, the outer surface of the first locking portion 111 provided in the sleeve 101 makes contact with the inner surface of the sleeve 101 positioned thereabove, and the inner surface of the second locking portion 112 provided in the sleeve 101 positioned thereabove makes contact with the outer surface of the sleeve 101 positioned thereunder. As a result, the adjacent sleeves 101 engage with each other and further movement is restricted. On the other hand, as illustrated in FIG. 3, when the adjacent sleeves 101 are at the extended position at which the amount of overlap is minimized and are separated from each other, the first locking portion 111 provided in the sleeve 101 expands outward and the second locking portion 112 provided in the sleeve 101 positioned thereabove expands outward. As a result, the distal end of the first locking portion 111 provided in the sleeve 101 is locked at the distal end of the second locking portion 112 provided in the sleeve 101 positioned thereabove and further separation is restricted.

Moreover, a flexible wire (cord-like member) 131 is disposed in the plurality of sleeves 101. The wire 131 does not have sufficient rigidity and cannot stand by itself. The wire 131 is configured such that the plug P1 can be connected to the base end portion and the plug P2 can be connected to the distal end portion.

Further, holding plates (holding members) 132 and 133 that hold the plurality of sleeves 101 at the contracted position are detachably attached to both sides in the longitudinal direction of the wire 131. The holding plates 132 and 133 can be fixed to the outer circumferential portion of the wire 131 by locking members 134 and 135. In this case, as described above, when the plurality of sleeves 101 is at the contracted position at which the sleeves overlap each other (that is, when the first locking portion 111 of the sleeve 101 makes contact with the inner surface of the sleeve 101 positioned thereabove and the second locking portion 112 of the sleeve 101 positioned thereabove makes contact with the outer surface of the sleeve 101 positioned thereunder), the holding plate 133 is fixed to the base end portion of the wire 131 so as to make contact with the end portion 101b of the sleeve 101 and the holding plate 132 is fixed to the distal end portion of the wire 131 so as to make contact with the end portion 101a of the sleeve 101. By doing so, it is possible to restrict the movement of the sleeves 101 in the separation direction.

That is, when the plurality of sleeves 101 is at the contracted position at which the sleeves overlap each other and the holding plates 132 and 133 are fixed to the predetermined positions of the wire 131, the respective end portions of the rows of the plurality of sleeves 101 are restricted by the holding plates 132 and 133, and the movement in the separation direction of the respective sleeves 101 is restricted. Thus, the sleeves 101 can be held at the contracted position. In this case, since the plurality of sleeves 101 are connected so as to engage with each other, the sleeves have predetermined rigidity sufficient for standing by themselves. On the other hand, when the holding plates 132 and 133 are detached from the wire 131, the restriction of the respective end portions of the rows of the plurality of sleeves 101 is released, and the restricted movement in the separation direction of the respective sleeves 101 is released, whereby the sleeves 101 can move to the extended position by the their own weight. In this case, since the plurality of sleeves 101 is connected so as to be separated with a predetermined gap, the sleeves 101 do not have predetermined rigidity sufficient for standing by themselves.

Here, a method of attaching the vibration suppression device 100 of Example 1 to the heat exchanger tube 66 and the operation of the vibration suppression device 100 after attachment to the heat exchanger tube 66 will be described.

As illustrated in FIGS. 1 and 2, an operator inserts the distal end portion of the wire 131 into one end portion 66a of the heat exchanger tube 66 in the inlet chamber 71 of the body part 61, and subsequently, inserts the plurality of sleeves 101 held at the wire 131 at the contracted position by the holding plates 132 and 133 into one end portion 66a of the heat exchanger tube 66. In this case, since the sleeves 101 are connected so as to engage with each other, the sleeves 101 have sufficient predetermined rigidity and can be easily inserted into the heat exchanger tube 66. Moreover, the operator moves the wire 131 and the plurality of sleeves 101 from the U-bend part 68 to the other end portion 66b of the heat exchanger tube 66. Further, the operator pulls the distal end portion of the wire 131 from the other end portion 66b of the heat exchanger tube 66 in the outlet chamber 72 of the body part 61. With this operation, it is possible to insert the vibration suppression device 100 from one end portion 66a of the heat exchanger tube 66 and move the same up to the other end portion 66b through the U-bend part 68.

After that, the operator detaches the holding plate 132 from the wire 131 and detaches the holding plate 133 from the wire 131 in the inlet chamber 71 of the body part 61. As a result, the restricted movement of the sleeves 101 in the separation direction by the holding plates 132 and 133 is released and the sleeves 101 move to the extended position by their own weight. That is, as illustrated in FIG. 3, the plurality of sleeves 101 is separated by their own weight, and the first locking portion 111 and the second locking portion 112 of the adjacent sleeves 101 are locked together. As a result, the sleeves 101 are held at the extended position at which the amount of overlap of the adjacent sleeves 101 is minimized.

In this case, it is preferable to set the length of the plurality of sleeves 101 having moved to the extended position to be smaller than the entire length of the heat exchanger tube 66, and the respective end portions of the wire 131 may be alternately pulled into the inlet chamber 71 and the outlet chamber 72 to detach the holding plates 132 and 133. When the length of the plurality of sleeves 101 having moved to the extended position is set to be larger than the entire length of the heat exchanger tube 66, the end portions of the plurality of sleeves 101 having moved to the extended position may be cut. When the vibration suppression device 100 is disposed in one end portion 66a of the heat exchanger tube 66, the plug P1 is fixed to plug one end portion 66a of the heat exchanger tube 66 and the plug P2 is fixed to plug the other end portion 66b of the heat exchanger tube 66.

When the end portions 66a and 66b of the unusable heat exchanger tube 66 are plugged by the plugs P1 and P2, and the vibration suppression device 100 is disposed in the heat exchanger tube 66 (in particular, in the U-bend part 68), it is possible to suppress the vibration of the heat exchanger tube 66. That is, when the U-bend part 68 of the heat exchanger tube 66 vibrates in an in-plane direction (the left-right direction and the up-down direction in FIG. 1), the plurality of sleeves 101 moves in the radial direction in relation to the heat exchanger tube 66, and the heat exchanger tube 66 interferes with the plurality of sleeves 101. Due to this, the vibration energy of the heat exchanger tube 66 is dispersed by the vibration energy of the plurality of sleeves 101. That is, since the heat exchanger tube 66 and the plurality of sleeves 101 move in different directions, the vibration energy of the heat exchanger tube 66 cancels the vibration energy of the plurality of sleeves 101, and the vibration of the heat exchanger tube 66 is absorbed and suppressed.

In particular, since the plurality of sleeves 101 has low rigidity and cannot stand by themselves, the sleeves 101 easily move in relation to the heat exchanger tube 66 by a predetermined gap when the heat exchanger tube 66 vibrates in the in-plane direction. Due to this, the respective sleeves 101 easily moves (vibrates) in a reverse direction in relation to the movement (vibration) of the heat exchanger tube 66, and it is possible to disperse the vibration energy of the heat exchanger tube 66 efficiently.

As described above, the heat exchanger tube vibration suppression device of Example 1 includes the plurality of sleeves 101 disposed in the heat exchanger tube 66 at a predetermined gap in relation to the inner surface of the heat exchanger tube 66 so as to extend in the longitudinal direction of the heat exchanger tube 66 and the connecting member 102 that connects the plurality of sleeves 101 so as to be movable between a contracted position at which the adjacent sleeves 101 overlap at least partially and an extended position at which the amount of overlap of the adjacent sleeves 101 is minimized.

Thus, when the plurality of sleeves 101 is at the contracted position by the connecting member 102, sufficient rigidity is secured and attachment properties can be improved. Moreover, when the plurality of sleeves 101 is inserted in the heat exchanger tube 66 and is at the extended position by the connecting member 102, the rigidity thereof is decreased and vibration suppression properties can be improved. That is, when the heat exchanger tube 66 vibrates, since the respective sleeves 101 move in the radial direction in relation to the heat exchanger tube 66, and the heat exchanger tube 66 interferes with the sleeves 101. Thus, the vibration energy of the heat exchanger tube 66 is dispersed by the vibration energy of the sleeves 101, and the vibration of the heat exchanger tube 66 can be absorbed and suppressed effectively.

In the heat exchanger tube vibration suppression device of Example 1, the first locking portion 111 provided on one side in the longitudinal direction of the sleeve 101 and the second locking portion 112 provided on the other side in the longitudinal direction of the sleeve 101 are provided as the connecting member 102, and the first locking portion 111 and the second locking portion 112 are configured to be locked together. Thus, it is possible to simplify the structures of the sleeve 101 and the connecting member 102 and to move the plurality of sleeves 101 easily between the contracted position and the extended position.

In the heat exchanger tube vibration suppression device of Example 1, the plurality of sleeves 101 can be held at the contracted position and the extended position by the first and second locking portions 111 and 112. Thus, it is possible to simplify the structure of the first and second locking portions 111 and 112 as the connecting member 102.

In the heat exchanger tube vibration suppression device of Example 1, the plurality of sleeves 101 has the same shape, and specifically, has such a cylindrical shape that the diameter on one side in the longitudinal direction is smaller than the diameter on the other side, and the first locking portion 111 is provided on the outer side and the second locking portion 112 is provided on the inner side. Thus, since the sleeves 101 have the same shape, it is possible to reduce the manufacturing cost and to improve assembling properties and reduce the assembling cost. Moreover, since the diameter on one side of each sleeve 101 is different from the diameter on the other side, it is possible to easily superimpose the respective sleeves 101 and to adjust the sleeves 101 so as to have appropriate rigidity.

In the heat exchanger tube vibration suppression device of Example 1, the base end portions of the first and second locking portions 111 and 112 are attached to the end portions of the sleeve 101 so as to freely fluctuate. Thus, since the first and second locking portions 111 and 112 fluctuate when the plurality of sleeves 101 are at the contracted position and the extended position, it is possible to hold the respective sleeves 101 at the contracted position and the extended position reliably.

In the heat exchanger tube vibration suppression device of Example 1, the flexible wire 131 is disposed in the plurality of sleeves 101. Thus, the plurality of sleeves 101 is arranged appropriately by the wire 131 and it is possible to improve the property of inserting the heat exchanger tube vibration suppression device into the heat exchanger tube 66.

In the heat exchanger tube vibration suppression device of Example 1, the holding plates 132 and 133 that hold the plurality of sleeves 101 at the contracted position are detachably attached to the wire 131. Thus, the plurality of sleeves 101 is held at the contracted position by the holding plates 132 and 133. When the respective sleeves 101 are held at the contracted position, it is possible to secure sufficient rigidity and to improve the property of inserting the heat exchanger tube vibration suppression device into the heat exchanger tube 66.

Moreover, the steam generator of Example 1 includes the body part 61, the heat exchanger tube bundle 67 that has the U-bend part 68 and includes the plurality of heat exchanger tubes 66 which is arranged in the body part 61 and in which the primary cooling water flows, the tube plate 64 that is fixed to the lower portion in the body part 61 and supports the end portion of the plurality of heat exchanger tubes 66, the plurality of tube support plates 63 that is fixed to the middle portion in the body part 61 so as to support the intermediate portion of the plurality of heat exchanger tubes 66, and the heat exchanger tube vibration suppression device 100 described above.

Accordingly, the high-pressure water as the primary cooling water flows in the plurality of heat exchanger tubes 66, and the heat exchanger tubes 66 are likely to vibrate when the secondary cooling water flowing in the body part 61 is heated to generate steam. In this case, when the heat exchanger tube 66 vibrates, since the sleeves 101 move in the radial direction in relation to the heat exchanger tube 66, the heat exchanger tube 66 interferes with the sleeve 101, and the vibration energy of the heat exchanger tube 66 is dispersed by the vibration energy of the sleeve. As a result, the vibration of the heat exchanger tube 66 can be absorbed and suppressed effectively.

### [Example 2]

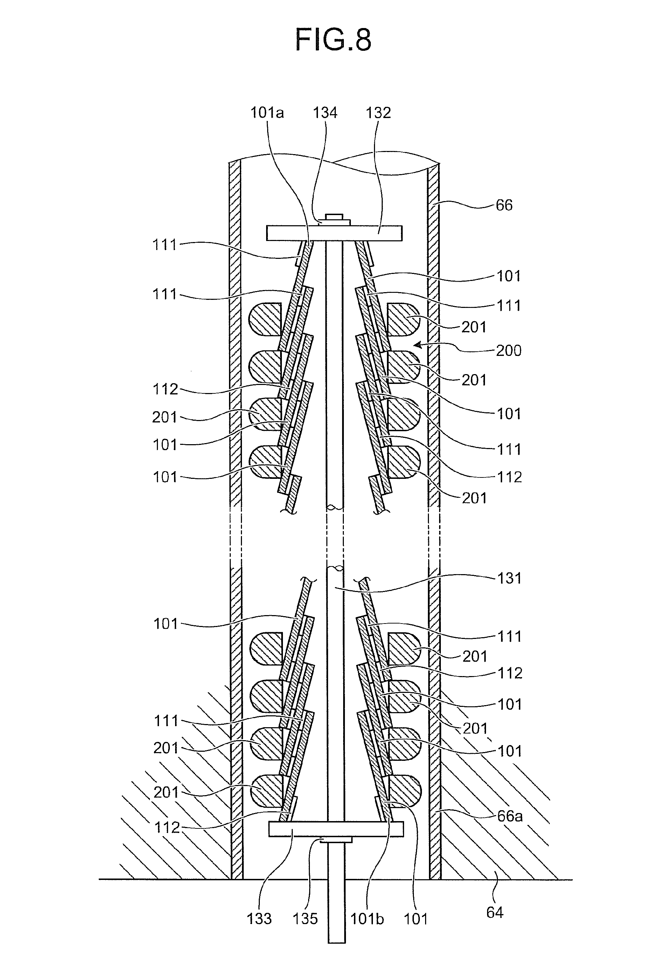

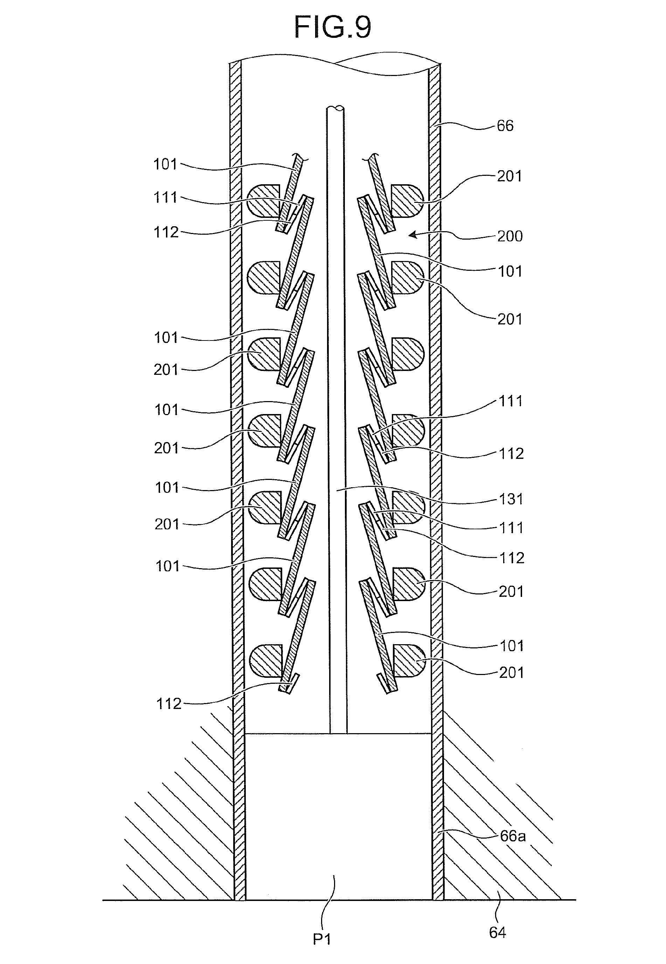

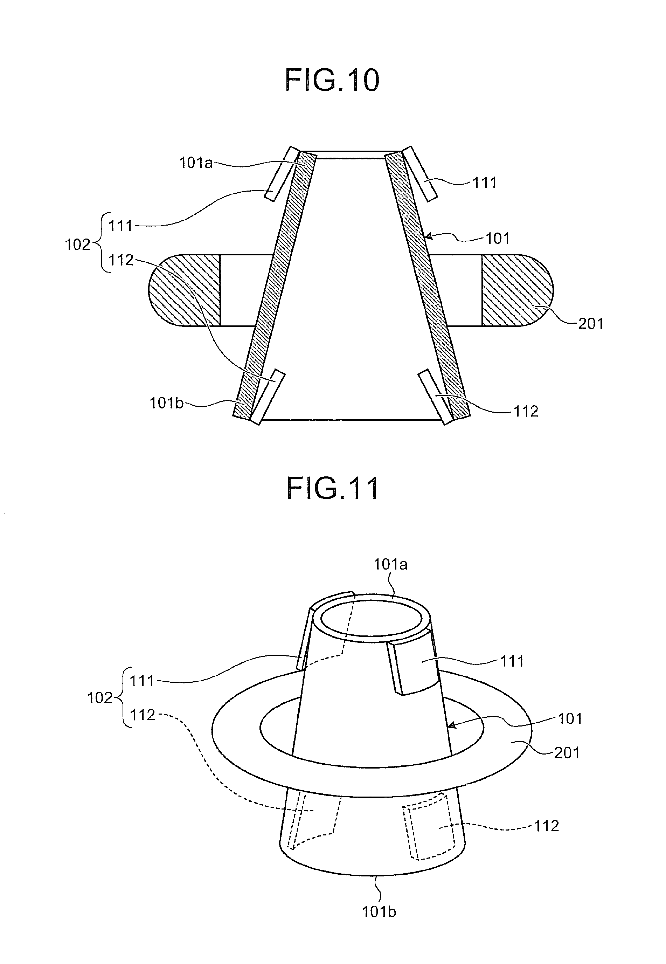

FIG. 8 is a cross-sectional view illustrating a state in which a heat exchanger tube vibration suppression device according to Example 2 of the present invention is inserted in a heat exchanger tube, FIG. 9 is a cross-sectional view illustrating a state in which the heat exchanger tube vibration suppression device of Example 2 is attached to the heat exchanger tube, FIG. 10 is a cross-sectional view of a sleeve that forms the vibration suppression device, and FIG. 11 is a perspective view of the sleeve that forms the vibration suppression device. Members having the same functions as those of the example described above will be denoted by the same reference numerals, and detailed description thereof will not be provided.

In Example 2, as illustrated in FIGS. 8 to 11, a heat exchanger tube vibration suppression device 200 includes a plurality of sleeves 101 disposed in the heat exchanger tube 66 with a predetermined gap in relation to the inner surface of the heat exchanger tube 66 so as to extend in a longitudinal direction of the heat exchanger tube 66 and a connecting member 102 that connects the plurality of sleeves 101 so as to be movable between a contracted position at which the adjacent sleeves 101 overlap at least partially and an extended position at which the amount of overlap of the adjacent sleeves 101 is minimized.

The plurality of sleeves 101 has a truncated conical shape and overlaps so that the end portion 101a of one of the adjacent sleeves 101 engages with the end portion 101b of the other sleeve 101. The connecting member 102 includes the first locking portion 111 provided on one side in the longitudinal direction of the sleeve 101 and the second locking portion 112 provided on the other side in the longitudinal direction of the sleeve 101. When the adjacent sleeves 101 are disposed so as to overlap partially, the first locking portion 111 and the second locking portion 112 can be locked together. Due to this, the first and second locking portions 111 and 112 can hold the plurality of sleeves 101 at the contracted position at which the sleeves 101 move closer to each other and the extended position at which the sleeves 101 are separated from each other.

Moreover, an attenuation ring 201 is disposed on the outer side of the plurality of sleeves 101. The attenuation ring 201 has such a semi-circular sectional shape that an inner surface forms a flat surface and an outer surface forms a curved surface. Moreover, the attenuation ring 201 is configured such that the outer diameter is set to be smaller than the inner diameter of the heat exchanger tube 66, and a predetermined gap is formed between the outer surface of the attenuation ring 201 and the inner surface of the heat exchanger tube 66. Further, the attenuation ring 201 is configured such that the inner diameter is set to be smaller than the outer diameter of the end portion 101b of the sleeve 101 and is set to be larger than the outer diameter of the end portion 101a of the sleeve 101.

Due to this, when the inner surface of the attenuation ring 201 makes contact with the outer surface of the end portion 101b of the sleeve 101, the attenuation ring 201 cannot move over the entire length of each sleeve 101. In this case, a restricting portion of the present invention is formed by the outer surface of the end portion 101a of the sleeve 101.

Here, a method of attaching the vibration suppression device 200 of Example 2 to the heat exchanger tube 66 and the operation of the vibration suppression device 200 after attachment to the heat exchanger tube 66 will be described.

As illustrated in FIG. 8, an operator inserts the distal end portion of the wire 131 into the heat exchanger tube 66, and subsequently, inserts the plurality of sleeves 101 held at the wire 131 at the contracted position by the holding plates 132 and 133 into the heat exchanger tube 66. In this case, since the sleeves 101 are connected so as to engage with each other, the sleeves 101 have sufficient predetermined rigidity and can be easily inserted into the heat exchanger tube 66. Moreover, since the attenuation ring 201 is provided on the outer side of each sleeve 101, it is possible to insert the sleeves 101 into the heat exchanger tube 66 smoothly.

When the plurality of sleeves 101 is inserted up to a predetermined position of the heat exchanger tube 66, the operator detaches the holding plates 132 and 133 from the wire 131. As a result, the restricted movement of the sleeves 101 in the separation direction is released and the sleeves 101 move to the extended position by their own weight. That is, as illustrated in FIG. 9, since the plurality of sleeves 101 is separated from each other by their own weight and the first and second locking portions 111 and 112 of the adjacent sleeves 101 are locked together, the plurality of sleeves 101 is held at the extended position at which the amount of overlap of the adjacent sleeves 101 is minimized.

Due to this, when the vibration suppression device 200 is disposed in the unusable heat exchanger tube 66, it is possible to suppress the vibration of the heat exchanger tube 66. That is, when the heat exchanger tube 66 vibrates, since the plurality of sleeves 101 and the plurality of attenuation rings 201 move in the radial direction in relation to the heat exchanger tube 66, the heat exchanger tube 66 interferes with the plurality of sleeves 101 and the plurality of attenuation rings 201. Due to this, the vibration energy of the heat exchanger tube 66 is dispersed by the vibration energy of the plurality of sleeves 101 and the plurality of attenuation rings 201. That is, since the heat exchanger tube 66 moves in a direction different from the moving direction of the plurality of sleeves 101 and the plurality of attenuation rings 201, the vibration energy of the heat exchanger tube 66 cancels the vibration energy of the plurality of sleeves 101 and the plurality of attenuation rings 201, and the vibration of the heat exchanger tube 66 is absorbed and suppressed.

As described above, the heat exchanger tube vibration suppression device of Example 2 includes the plurality of sleeves 101 disposed in the heat exchanger tube 66 with a predetermined gap in relation to the inner surface of the heat exchanger tube 66 so as to extend in a longitudinal direction of the heat exchanger tube 66, the connecting member 102 that connects the plurality of sleeves 101 so as to be movable between a contracted position at which the adjacent sleeves 101 overlap at least partially and an extended position at which the amount of overlap of the adjacent sleeves 101 is minimized, and the plurality of attenuation rings 201 disposed on the outer side of the sleeves 101.

Thus, when the plurality of sleeves 101 is at the contracted position by the connecting member 102, sufficient rigidity is secured and attachment properties can be improved. Moreover, it is possible to improve the attachment properties due to the attenuation ring 201. Moreover, when the plurality of sleeves 101 is inserted in the heat exchanger tube 66 and is at the extended position by the connecting member 102, the rigidity thereof is decreased and vibration suppression properties can be improved. That is, when the heat exchanger tube 66 vibrates, since the respective sleeves 101 move in the radial direction in relation to the heat exchanger tube 66, and the attenuation ring 201 moves in relation to the heat exchanger tube 66. Thus, the heat exchanger tube 66 interferes with the sleeves 101 and the attenuation rings 201, and the vibration energy of the heat exchanger tube 66 is dispersed by the vibration energy of the sleeves 101 and the attenuation rings 201. Therefore, the vibration of the heat exchanger tube 66 can be absorbed and suppressed effectively.

In the heat exchanger tube vibration suppression device of Example 2, the attenuation ring 201 can be restricted so as to be immovable over the entire length of the sleeve 101. Thus, it is possible to absorb and suppress the vibration of the heat exchanger tube 66 effectively in the entire longitudinal direction of the heat exchanger tube 66.

### [Example 3]

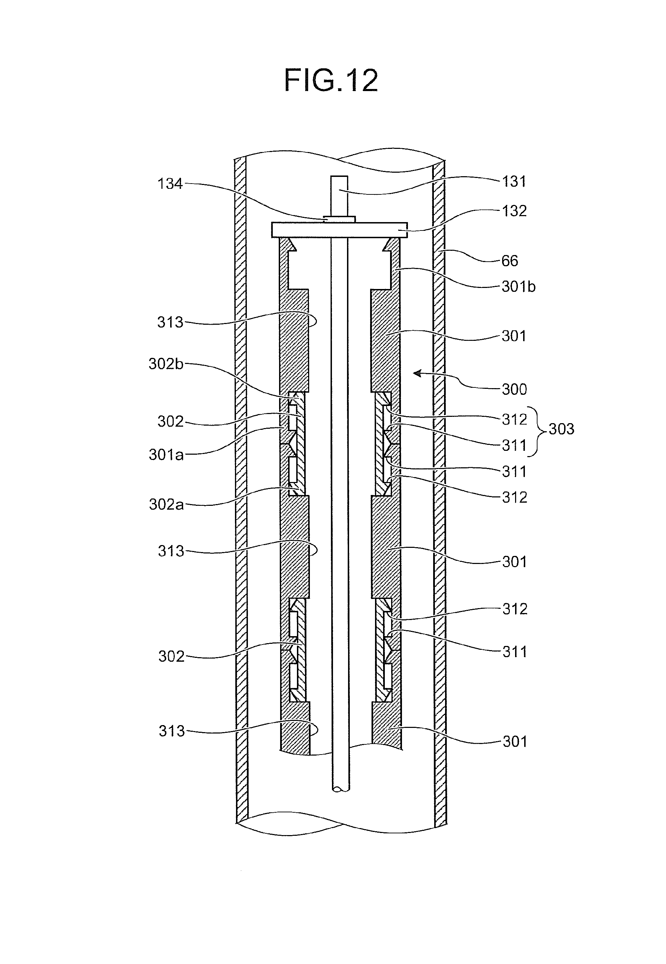

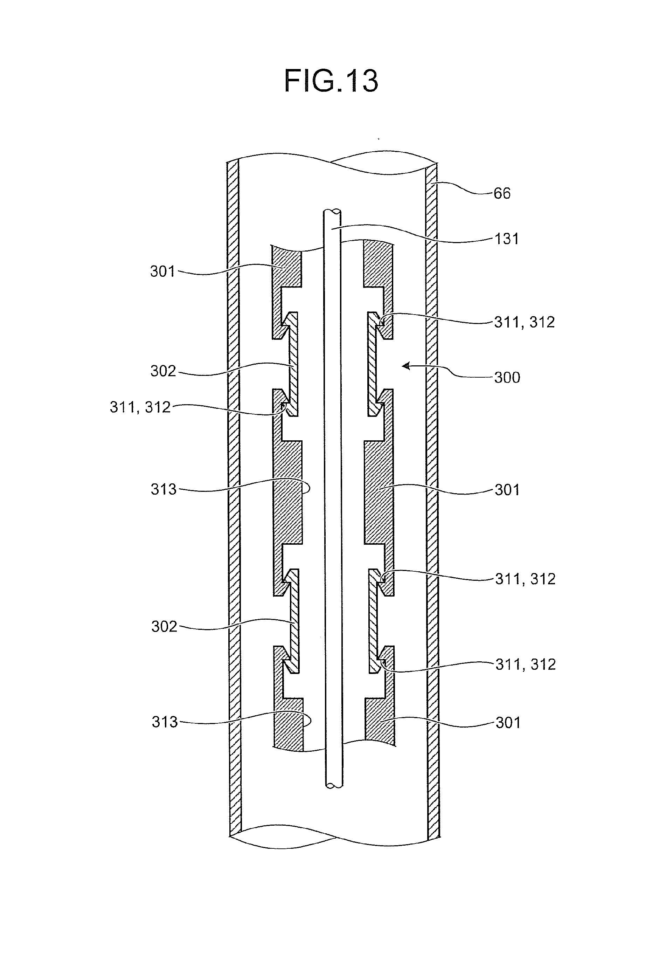

FIG. 12 is a cross-sectional view illustrating a state in which a heat exchanger tube vibration suppression device according to Example 3 of the present invention is inserted in a heat exchanger tube, and FIG. 13 is a cross-sectional view illustrating a state in which the heat exchanger tube vibration suppression device of Example 3 is attached to the heat exchanger tube. Members having the same functions as those of the examples described above will be denoted by the same reference numerals, and detailed description thereof will not be provided.

In Example 3, as illustrated in FIGS. 12 and 13, a heat exchanger tube vibration suppression device 300 includes a plurality of sleeves 301 and 302 disposed in the heat exchanger tube 66 with a predetermined gap in relation to the inner surface of the heat exchanger tube 66 so as to extend in a longitudinal direction of the heat exchanger tube 66 and a connecting member 303 that connects the plurality of sleeves 301 and 302 so as to be movable between a contracted position at which the adjacent sleeves 301 and 302 overlap at least partially and an extended position at which the amount of overlap of the adjacent sleeves 301 and 302 is minimized.

A large-diameter sleeve 301 has a large diameter, a small-diameter sleeve 302 has a small diameter, the outer diameter of the large-diameter sleeve 301 is set to be larger than the outer diameter of the small-diameter sleeve 302, and the large-diameter sleeve 301 and the small-diameter sleeve 302 are alternately arranged along the longitudinal direction of the heat exchanger tube 66. Moreover, the large-diameter sleeve 301 has such a cylindrical shape that an outer diameter (inner diameter) of an end portion 301a on one side in the longitudinal direction is set to be the same as the outer diameter of an end portion 301b on the other side. On the other hand, the small-diameter sleeve 302 has such a cylindrical shape that an outer diameter (inner diameter) of an end portion 302a on one side in the longitudinal direction is set to be the same as the outer diameter of an end portion 302b on the other side. Moreover, the outer diameter of each of the sleeves 301 and 302 is set to be smaller than the inner diameter of the heat exchanger tube 66 so that a predetermined gap can be secured between the outer surface of each of the sleeves 301 and 302 and the inner surface of the heat exchanger tube 66.

The connecting member 303 has a pair of locking portions (first and second locking portions) 311 and 312 that is provided on the end portions 301a, 301b, 302a, and 302b in the longitudinal direction of the respective sleeves 301 and 302. The large-diameter sleeve 301 has the locking portion 311 provided on the inner side of the respective end portions 301a and 301b, and the small-diameter sleeve 302 has the locking portion 312 provided on the inner side of the respective end portions 302a and 302b. A plurality of locking portions 311 and 312 is provided at an equal interval in the circumferential direction of the respective sleeves 301 and 302. Moreover, a projection portion 313 is formed on the inner side of a middle portion in the longitudinal direction of the large-diameter sleeve 301.

When the adjacent sleeves 301 and 302 are disposed so as to overlap partially, the locking portions 311 and 312 can be locked together. Due to this, the locking portions 311 and 312 and the projection portion 313 can hold the plurality of sleeves 301 and 302 at the contracted position at which the sleeves move closer to each other and the extended position at which the sleeves are separated from each other.

That is, as illustrated in FIG. 12, when the adjacent sleeves 301 and 302 are at the contracted position at which the sleeves overlap and move closer to each other, the locking portion 311 provided in the large-diameter sleeve 301 is positioned on the outer side of the locking portion 312 of the small-diameter sleeve 302, the locking portions 311 of the large-diameter sleeve 301 make contact with each other, and the locking portion 312 of the small-diameter sleeve 302 makes contact with the projection portion 313 of the large-diameter sleeve 301. As a result, the adjacent sleeves 301 and 302 engage with each other and further movement is restricted. On the other hand, as illustrated in FIG. 13, when the adjacent sleeves 301 and 302 are at the extended position at which the amount of overlap is minimized and the sleeves are separated from each other, the locking portion 311 provided in the large-diameter sleeve 301 is positioned on the outer side of the locking portion 312 of the small-diameter sleeve 302, and the locking portions 311 and 312 are locked together, and further separation is restricted.

Moreover, a flexible wire (cord-like member) 131 is disposed in the plurality of sleeves 301 and 302. Holding plates 132 and 133 that hold the plurality of sleeves 301 and 302 at the contracted position are detachably attached to both sides in the longitudinal direction of the wire 131. The holding plate 132 can be fixed to the outer circumferential portion of the wire 131 by the locking members 134 and 135. In this case, when the plurality of sleeves 301 and 302 is at the contracted position at which the sleeves overlap each other, the holding plate 132 fixed to the respective end portions of the wire 131 can restrict the movement of the respective sleeves 301 and 302 in the separation direction.

Here, a method of attaching the vibration suppression device 300 of Example 3 to the heat exchanger tube 66 and the operation of the vibration suppression device 300 after attachment to the heat exchanger tube 66 will be described.

As illustrated in FIG. 12, an operator inserts the distal end portion of the wire 131 into the heat exchanger tube 66, and subsequently, inserts the plurality of sleeves 301 and 302 held at the wire 131 at the contracted position by the holding plates 132 (133) into the heat exchanger tube 66. In this case, since the sleeves 301 and 302 are connected so as to engage with each other, the sleeves 301 and 302 have sufficient predetermined rigidity and can be easily inserted into the heat exchanger tube 66.

When the plurality of sleeves 301 and 302 is inserted up to a predetermined position of the heat exchanger tube 66, the operator detaches the holding plates 132 (133) from the wire 131. As a result, the restricted movement of the sleeves 301 and 302 in the separation direction is released and the sleeves 301 and 302 move to the extended position by their own weight. That is, as illustrated in FIG. 13, since the plurality of sleeves 301 and 302 is separated from each other by their own weight and the respective locking portions 311 and 312 of the sleeves 301 and 302 are locked together, the plurality of sleeves 301 and 302 is held at the extended position at which the amount of overlap of the sleeves 301 and 302 is minimized.

Due to this, when the vibration suppression device 300 is disposed in the unusable heat exchanger tube 66, it is possible to suppress the vibration of the heat exchanger tube 66. That is, when the heat exchanger tube 66 vibrates, since the plurality of sleeves 301 and 302 moves in the radial direction in relation to the heat exchanger tube 66, the heat exchanger tube 66 interferes with the plurality of sleeves 301 and 302. Due to this, the vibration energy of the heat exchanger tube 66 is dispersed by the vibration energy of the plurality of sleeves 301 and 302. That is, since the heat exchanger tube 66 moves in a direction different from the moving direction of the plurality of sleeves 301 and 302, the vibration energy of the heat exchanger tube 66 cancels the vibration energy of the plurality of sleeves 301 and 302, and the vibration of the heat exchanger tube 66 is absorbed and suppressed.

As described above, the heat exchanger tube vibration suppression device of Example 3 includes the plurality of sleeves 301 and 302 disposed in the heat exchanger tube 66 with a predetermined gap in relation to the inner surface of the heat exchanger tube 66 so as to extend in a longitudinal direction of the heat exchanger tube 66 and the connecting member 303 that connects the plurality of sleeves 301 and 302 so as to be movable between a contracted position at which the adjacent sleeves 301 and 302 overlap at least partially and an extended position at which the amount of overlap of the adjacent sleeves 301 and 302 is minimized.

Thus, when the plurality of sleeves 301 and 302 is at the contracted position by the connecting member 303, sufficient rigidity is secured and attachment properties can be improved. Moreover, when the plurality of sleeves 301 and 302 is inserted in the heat exchanger tube 66 and is at the extended position by the connecting member 303, the rigidity thereof is decreased and vibration suppression properties can be improved. That is, when the heat exchanger tube 66 vibrates, since the respective sleeves 301 and 302 move in the radial direction in relation to the heat exchanger tube 66, the heat exchanger tube 66 interferes with the sleeves 301 and 302. Thus, the vibration energy of the heat exchanger tube 66 is dispersed by the vibration energy of the sleeves 301 and 302, and the vibration of the heat exchanger tube 66 can be absorbed and suppressed effectively.

In the vibration suppression device of Example 3, the large-diameter sleeve 301 and the small-diameter sleeve 302 are alternately arranged along the longitudinal direction of the heat exchanger tube 66, the locking portion 311 of the large-diameter sleeve 301 is provided on the inner side, and the locking portion 312 of the small-diameter sleeve 302 is provided on the outer side. Thus, when the sleeves 301 and 302 are configured so as to have different diameters, it is possible to form the sleeves 301 and 302 in a cylindrical shape or a polygonal cylindrical shape and to reduce the manufacturing cost.

### [Example 4]

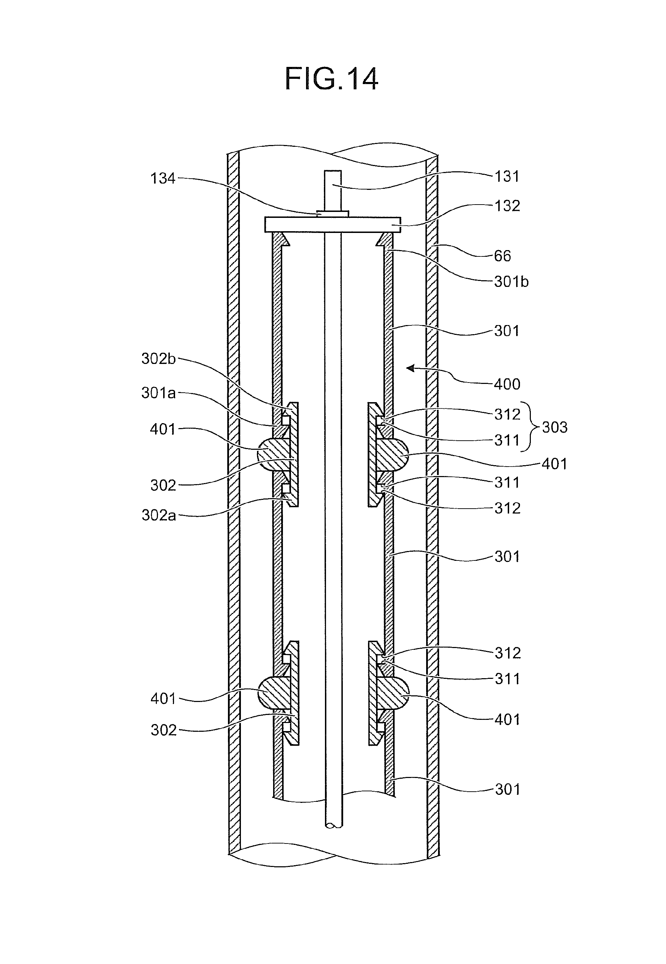

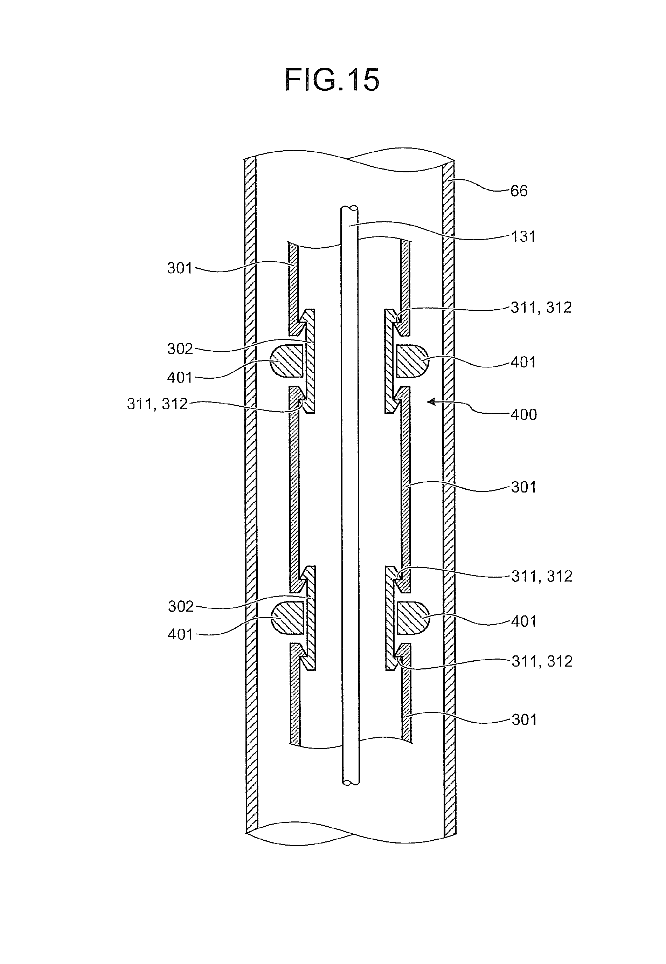

FIG. 14 is a cross-sectional view illustrating a state in which a heat exchanger tube vibration suppression device according to Example 4 of the present invention is inserted in a heat exchanger tube, and FIG. 15 is a cross-sectional view illustrating a state in which the heat exchanger tube vibration suppression device of Example 4 is attached to the heat exchanger tube. Members having the same functions as those of the examples described above will be denoted by the same reference numerals, and detailed description thereof will not be provided.

In Example 4, as illustrated in FIGS. 14 and 15, a heat exchanger tube vibration suppression device 400 includes a plurality of sleeves 301 and 302 disposed in the heat exchanger tube 66 with a predetermined gap in relation to the inner surface of the heat exchanger tube 66 so as to extend in a longitudinal direction of the heat exchanger tube 66 and a connecting member 303 that connects the plurality of sleeves 301 and 302 so as to be movable between a contracted position at which the adjacent sleeves 301 and 302 overlap at least partially and an extended position at which the amount of overlap of the adjacent sleeves 301 and 302 is minimized.

The large-diameter sleeve 301 and the small-diameter sleeve 302 have a cylindrical shape and are alternately arranged along the longitudinal direction of the heat exchanger tube 66. The connecting member 303 has a pair of locking portions 311 and 312 provided on the end portions 301a, 301b, 302a, and 302b in the longitudinal direction of the respective sleeves 301 and 302. When the adjacent sleeves 301 and 302 are disposed so as to overlap partially, the locking portions 311 and 312 can be locked together. Due to this, the locking portions 311 and 312 can hold the plurality of sleeves 301 and 302 at the contracted position at which the sleeves move closer to each other and the extended position at which the sleeves are separated from each other.

Moreover, an attenuation ring 401 is disposed on the outer side of the small-diameter sleeve 302. The attenuation ring 401 has such a semi-circular sectional shape that an inner surface forms a flat surface and an outer surface forms a curved surface. Moreover, the attenuation ring 401 is configured such that the outer diameter is set to be smaller than the inner diameter of the heat exchanger tube 66, and a predetermined gap is formed between the outer surface of the attenuation ring 401 and the inner surface of the heat exchanger tube 66. Further, the attenuation ring 401 is configured such that the inner diameter is set to be larger than the outer diameter of the small-diameter sleeve 302 and is set to be smaller than the outer diameter of the large-diameter sleeve 301. When the respective sleeves 301 and 302 are at the contracted position at which the sleeves move closer to each other, the attenuation ring 401 is sandwiched by the large-diameter sleeves 301 disposed above and below the small-diameter sleeve 302.

Due to this, when the attenuation ring 401 is restricted in a region between the upper and lower large-diameter sleeves 301 on the outer side of the small-diameter sleeve 302, the attenuation ring 401 cannot move over the entire length of the small-diameter sleeve 302. In this case, the restricting portion of the present invention is formed by the large-diameter sleeve 301.

Here, a method of attaching the vibration suppression device 400 of Example 4 to the heat exchanger tube 66 and the operation of the vibration suppression device 400 after attachment to the heat exchanger tube 66 will be described.

As illustrated in FIG. 14, an operator inserts the distal end portion of the wire 131 into the heat exchanger tube 66, and subsequently, inserts the plurality of sleeves 301 and 302 held at the wire 131 at the contracted position by the holding plates 132 and 133 into the heat exchanger tube 66. In this case, since the sleeves 301 and 302 are connected so as to engage with each other, the sleeves 301 and 302 have sufficient predetermined rigidity and can be easily inserted into the heat exchanger tube 66. Moreover, since the attenuation ring 401 is provided on the outer side of the small-diameter sleeve 302, it is possible to insert the small-diameter sleeve 302 into the heat exchanger tube 66 smoothly.

When the plurality of sleeves 301 and 302 is inserted up to a predetermined position of the heat exchanger tube 66, the operator detaches the holding plates 132 and 133 from the wire 131. As a result, the restricted movement of the sleeves 301 and 302 in the separation direction is released and the sleeves 301 and 302 move to the extended position by their own weight. That is, as illustrated in FIG. 15, since the plurality of sleeves 301 and 302 is separated from each other by their own weight and the respective locking portions 311 and 312 of the sleeves 301 and 302 are locked together, the plurality of sleeves 301 and 302 is held at the extended position at which the amount of overlap of the sleeves 301 and 302 is minimized.

Due to this, when the vibration suppression device 400 is disposed in the unusable heat exchanger tube 66, it is possible to suppress the vibration of the heat exchanger tube 66. That is, when the heat exchanger tube 66 vibrates, since the plurality of sleeves 301 and 302 and the plurality of attenuation rings 401 move in the radial direction in relation to the heat exchanger tube 66, the heat exchanger tube 66 interferes with the plurality of sleeves 301 and 302 and the plurality of attenuation rings 401. Due to this, the vibration energy of the heat exchanger tube 66 is dispersed by the vibration energy of the plurality of sleeves 301 and 302 and the plurality of attenuation rings 401. That is, since the heat exchanger tube 66 moves in a direction different from the moving direction of the plurality of sleeves 301 and 302 and the plurality of attenuation rings 401, the vibration energy of the heat exchanger tube 66 cancels the vibration energy of the plurality of sleeves 301 and 302 and the plurality of attenuation rings 401 and the vibration of the heat exchanger tube 66 is absorbed and suppressed.

As described above, the heat exchanger tube vibration suppression device of Example 4 includes the plurality of sleeves 301 and 302 disposed in the heat exchanger tube 66 with a predetermined gap in relation to the inner surface of the heat exchanger tube 66 so as to extend in a longitudinal direction of the heat exchanger tube 66, the connecting member 303 that connects the plurality of sleeves 301 and 302 so as to be movable between a contracted position at which the adjacent sleeves 301 and 302 overlap at least partially and an extended position at which the amount of overlap of the adjacent sleeves 301 and 302 is minimized, and the plurality of attenuation rings 401 disposed on the outer side of the small-diameter sleeve 302.

Thus, when the plurality of sleeves 301 and 302 is at the contracted position by the connecting member 303, sufficient rigidity is secured and attachment properties can be improved. Moreover, it is possible to improve the attachment properties due to the attenuation ring 401. Moreover, when the plurality of sleeves 301 and 302 is inserted in the heat exchanger tube 66 and is at the extended position by the connecting member 303, the rigidity thereof is decreased and vibration suppression properties can be improved. That is, when the heat exchanger tube 66 vibrates, since the respective sleeves 301 and 302 move in the radial direction in relation to the heat exchanger tube 66, and the attenuation ring 401 also moves in relation to the heat exchanger tube 66, the heat exchanger tube 66 interferes with the sleeves 301 and 302 and the attenuation ring 401. Thus, the vibration energy of the heat exchanger tube 66 is dispersed by the vibration energy of the sleeves 301 and 302 and the attenuation ring 401 and the vibration of the heat exchanger tube 66 can be absorbed and suppressed effectively.

In the example described above, although the sleeve has a truncated conical shape or a cylindrical shape, the sleeve may have a polygonal truncated conical shape, a polygonal cylindrical shape, or the like. Moreover, the cross-sectional shape of the attenuation ring is not limited to the semi-circular shape but the attenuation ring may have a circular sectional shape or the like. Further, although the cord-like member is disposed in the sleeve, after the vibration suppression device is disposed in the heat exchanger tube, the cord-like member may be removed so that only the sleeve remains.

### [Example 5]

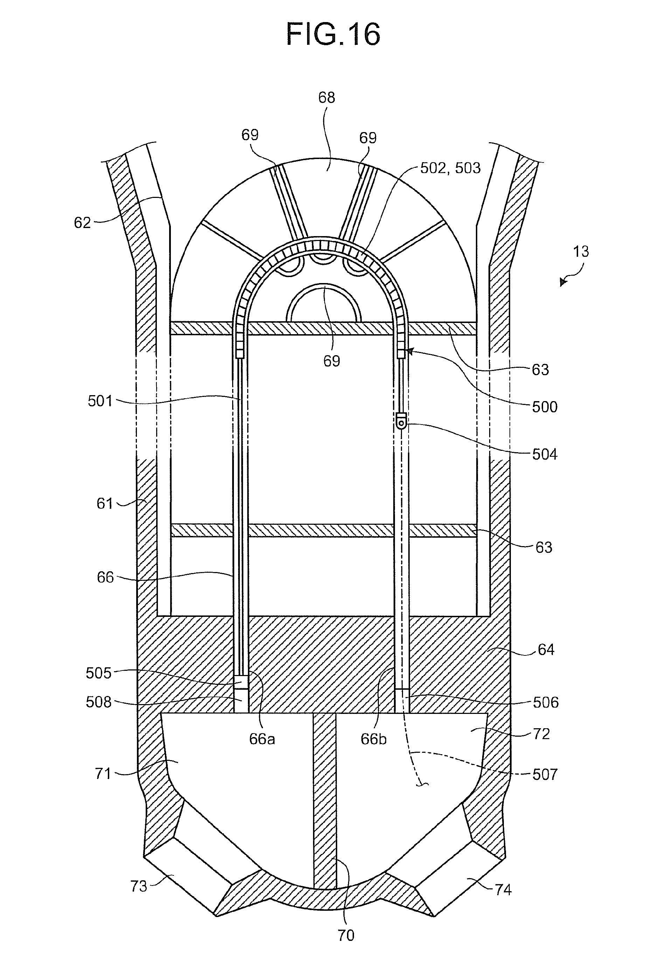

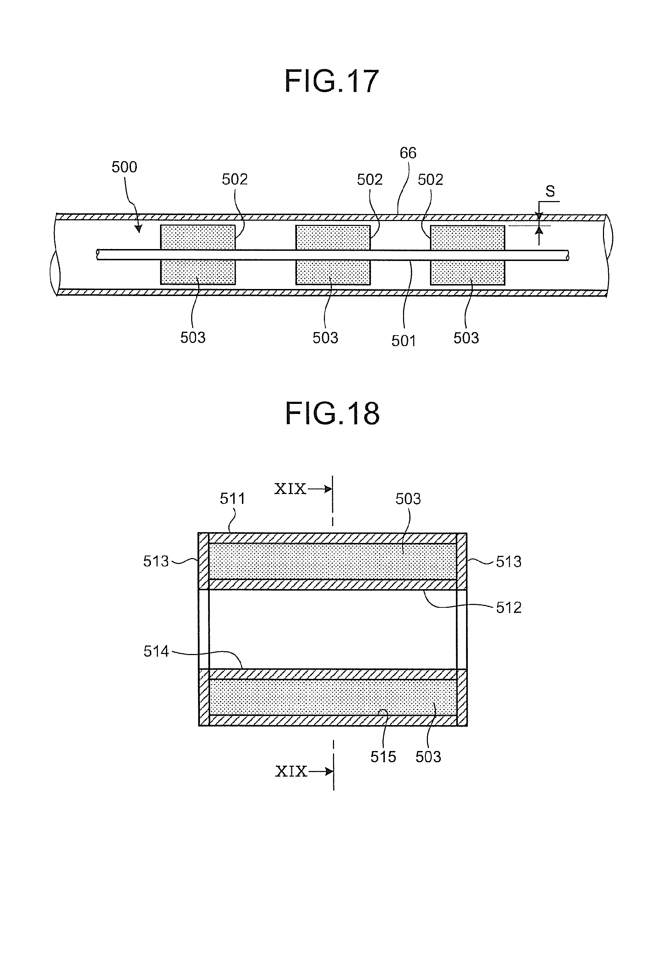

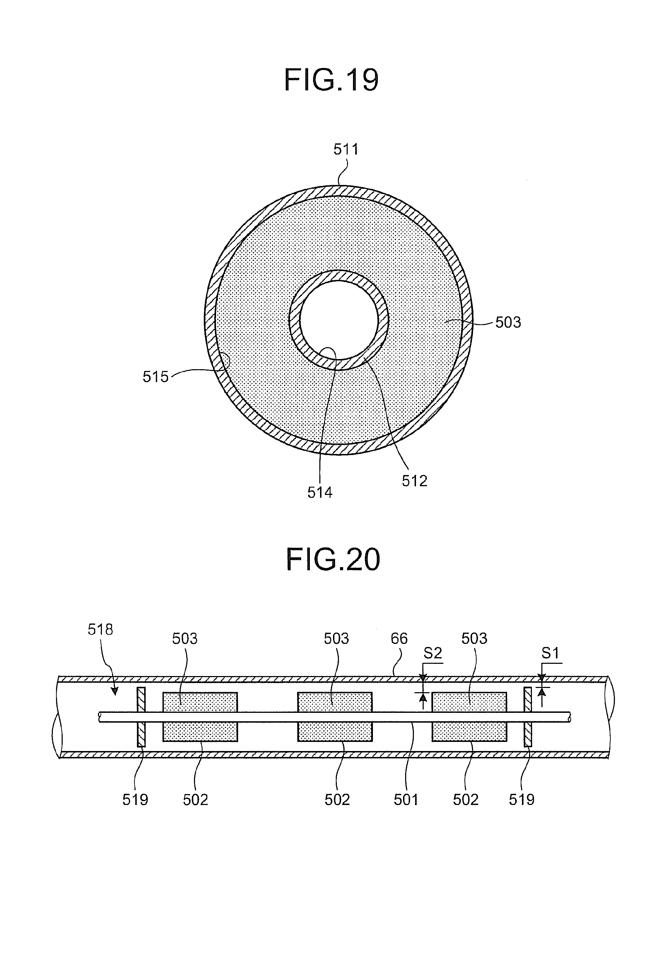

FIG. 16 is a schematic diagram illustrating a state in which a heat exchanger tube vibration suppression device according to Example 5 of the present invention is attached to a steam generator, FIG. 17 is a schematic diagram of the heat exchanger tube vibration suppression device of Example 5, FIG. 18 is a cross-sectional view of a main part of the heat exchanger tube vibration suppression device of Example 5, and FIG. 19 is a cross-sectional view along line XIX-XIX of FIG. 18.

In Example 5, as illustrated in FIGS. 16 to 19, a vibration suppression device 500 includes a wire (cord-like member) 501 having flexibility and disposed in the heat exchanger tube 66, a plurality of (in the present example, three) sleeves 502 having a hollow shape and disposed along a longitudinal direction of the wire 501, and a plurality of granular bodies 503 that is movably filled in each sleeve 502. The wire 501 is has a distal end portion connected to a hook (pulling portion) 504 and a rear end portion connected to an end bracket 505 that is configured to engage with a plug (plugging member) 508 that blocks the end portion of the heat exchanger tube 66.

The wire 501 is made from stainless steel, and the outer diameter thereof is smaller than the inner diameter of the heat exchanger tube 66 and the length thereof is smaller than the length of the heat exchanger tube 66. The hook 504 is connected to the distal end portion of the wire 501 by welding, and the outer diameter thereof is smaller than the inner diameter of the heat exchanger tube 66 so that the hook 504 can be inserted into the heat exchanger tube 66. A connection hole is formed in an end portion of the hook 504 so that an end portion of a pulling wire 507 described later can be connected to the hook 504. Moreover, the end bracket 505 is connected to the rear end portion of the wire 501 by welding, and the outer diameter thereof is slightly smaller than the inner diameter of the heat exchanger tube 66 so that the end bracket 505 can be inserted into the heat exchanger tube 66. A screw portion is formed in an end portion of the end bracket 505 so that the plug 508 having the same screw portion can be connected to the end bracket 505.

The sleeve 502 has a hollow cylindrical shape. That is, the sleeve 502 has an inner cylinder 512 disposed in the outer cylinder 511, and a ring member 513 is fixed to each end portion in the axial direction between the outer cylinder 511 and the inner cylinder 512. Due to this, an insertion hole 514 through which the wire 501 is inserted is formed in a central portion (that is, on the inner side of the inner cylinder 512) of the sleeve 502, and a sealed space portion 515 is formed in a region surrounded by the outer cylinder 511, the inner cylinder 512, and the respective ring members 513.

The three sleeves 502 are fixed at such a position that the wire 501 is inserted into the insertion hole 514 and the sleeves 502 are disposed at a predetermined gap with respect to each other. Moreover, a predetermined gap S is formed between the outer circumferential surface of each sleeve 502 and the inner circumferential surface of the heat exchanger tube 66.

The granular body 503 is a spherical body made from stainless steel, for example, and a plurality of granular bodies 503 is movably filled in the space portion 515 of the sleeve 502. In this case, the packing ratio of the granular body 503 in the space portion 515 of the sleeve 502 is preferably set to 60% to 90%, for example, because the plurality of granular bodies 503 filled in the space portion 515 needs to have predetermined mass (weight) and a space portion in which the granular bodies can move when the sleeve 502 vibrates needs to be formed.

In the vibration suppression device having such a configuration, as illustrated in FIG. 16, one end portion of the pulling wire 507 is connected to the hook 504. An operator inserts the other end portion of the pulling wire 507 into one end portion 66a of the heat exchanger tube 66 in the inlet chamber 71 of the body part 61 and moves the other end portion 66b of the heat exchanger tube 66 through the U-bend part 68. After that, the operator pulls the other end portion of the pulling wire 507 from the other end portion 66b of the heat exchanger tube 66 in the outlet chamber 72 of the body part 61. With this operation, the vibration suppression device 500 can be pulled by the pulling wire 507 and then be inserted from one end portion 66a of the heat exchanger tube 66 and moved up to the U-bend part 68.

After that, when the operator inserts the end bracket 505 of the vibration suppression device 500 into one end portion 66a of the heat exchanger tube 66 in the inlet chamber 71 of the body part 61, the plug 508 connected to the end bracket 505 is fixed to plug one end portion 66a of the heat exchanger tube 66 according to a diameter expanding operation. Moreover, the operator cut the pulling wire 507 to be separated from the hook 504 of the vibration suppression device 500 in the outlet chamber 72 of the body part 61 and inserts the plug 506 having substantially the same structure as the plug 508 into the other end portion 66b of the heat exchanger tube 66 to fix and plug the plug 506 according to a diameter expanding operation. Although the pulling wire 507 is cut to be separated from the hook 504, a weight may be connected to the cut end of the pulling wire 507 or the plug 506 may be connected to the cut end of the pulling wire 507 after the cutting so as to stabilize the arrangement of the vibration suppression device 500.

When the end portions 66a and 66b of the unusable heat exchanger tube 66 are plugged by the plugs 508 and 506 and the vibration suppression device 500 is disposed in the heat exchanger tube 66 (in particular, the U-bend part 68), it is possible to suppress the vibration of the heat exchanger tube 66. That is, when the U-bend part 68 of the heat exchanger tube 66 vibrates in an in-plane direction (the left-right direction and the up-down direction in FIG. 16), the wire 501 and the sleeves 502 move in the longitudinal direction and the radial direction in relation to the heat exchanger tube 66, and the heat exchanger tube 66 interferes with the wire 501 and the sleeves 502. Due to this, the vibration energy of the heat exchanger tube 66 is dispersed by the vibration energy of the wire 501 and the sleeves 502. That is, since the heat exchanger tube 66 moves in a direction different from the moving direction of the wire 501 and the sleeves 502, the vibration energy of the heat exchanger tube 66 cancels the vibration energy of the wire 501 and the sleeves 502, and the vibration of the heat exchanger tube 66 is absorbed and suppressed.

Moreover, when the U-bend part 68 of the heat exchanger tube 66 vibrates in the in-plane direction, the granular bodies 503 in the sleeves 502 move in the longitudinal direction and the radial direction in relation to the heat exchanger tube 66. Due to this, the vibration energy of the heat exchanger tube 66 is dispersed by the vibration energy of the granular bodies 503. That is, since the heat exchanger tube 66 and the granular bodies 503 move in different directions, the vibration energy of the heat exchanger tube 66 cancels the vibration energy of the granular bodies 503, and the vibration of the heat exchanger tube 66 is absorbed and suppressed.

In this case, since the heat exchanger tube 66, the wire 501, and the sleeves 502 and the granular bodies 503 can move independently, when the heat exchanger tube 66 vibrates, the wire 501, the sleeves 502, and the granular bodies 503 move in relation to each other. Moreover, since the sleeve 502 and the granular body 503 have different weights, when the heat exchanger tube 66 vibrates, the weights between the sleeve 502 and the granular body 503 are unbalanced, and the sleeve 502 and the granular body 503 vibrate randomly in relation to the vibration of the heat exchanger tube 66. Thus, it is possible to disperse the vibration energy of the heat exchanger tube 66 efficiently.

As described above, the heat exchanger tube vibration suppression device of Example 5 includes the wire 501 having flexibility and disposed in the heat exchanger tube 66, the plurality of sleeves 502 having a hollow shape and disposed along the longitudinal direction of the wire 501, and the plurality of granular bodies 503 that is movably filled in each sleeve 502.

Thus, since the sleeves 502 are disposed along the longitudinal direction of the wire 501 and the plurality of granular bodies 503 is movably filled in the sleeve 502, the wire 501 and the sleeve 502 can move in relation to the heat exchanger tube 66 and the plurality of granular bodies 503 can move in relation to the heat exchanger tube 66 in the sleeve 502. Due to this, when the heat exchanger tube 66 vibrates, the wire 501 and the sleeves 502 move in relation to the heat exchanger tube 66 and the granular bodies 503 move in relation to the heat exchanger tube 66 in the sleeve 502. Thus, the vibration energy of the heat exchanger tube 66 is dispersed by the vibration energy of the sleeve 502 and the vibration energy of the granular body 503. Therefore, it is possible to attenuate and suppress the vibration of the heat exchanger tube 66 effectively.

In the heat exchanger tube vibration suppression device 500 of Example 5, the sleeve 502 has a hollow cylindrical shape and a predetermined gap S is secured between the outer circumferential surface of the sleeve 502 and the inner circumferential surface of the heat exchanger tube 66. Thus, when the heat exchanger tube 66 vibrates, the respective sleeves 502 move in relation to the heat exchanger tube 66 due to the predetermined gap S, and the vibration energy of the heat exchanger tube 66 is dispersed by the vibration energy of the sleeve 502. Therefore, it is possible to attenuate the vibration of the heat exchanger tube 66 effectively.

In the heat exchanger tube vibration suppression device 500 of Example 5, the sleeve 502 is fixed to the wire 501 with a predetermined gap in the longitudinal direction. Thus, when the heat exchanger tube 66 vibrates, the relative movement of the respective sleeves 502 in the longitudinal direction of the wire 501 is restricted, and the granular bodies 503 in the sleeve 502 move appropriately in relation to each other. Therefore, the vibration energy of the heat exchanger tube 66 is dispersed by the vibration energy of the granular bodies 503, and the vibration of the heat exchanger tube 66 can be attenuated effectively.

In the heat exchanger tube vibration suppression device 500 of Example 5, the plurality of sleeves 502 is disposed in the U-bend part 68 of the heat exchanger tube 66. Thus, even when the heat exchanger tube 66 disposed in the U-bend part 68 vibrates in the in-plane direction, since the plurality of sleeves 502 and the granular bodies 503 move in relation to each other, it is possible to attenuate the vibration of the heat exchanger tube 66 appropriately.

Moreover, the steam generator 13 of Example 5 includes the body part 61, the heat exchanger tube bundle 67 that has the U-bend part 68 and includes the plurality of heat exchanger tubes 66 which is arranged in the body part 61 and in which the primary cooling water flows, the tube plate 64 that is fixed to the lower portion in the body part 61 and supports the end portion of the plurality of heat exchanger tubes 66, the plurality of tube support plates 63 that is fixed to the middle portion in the body part 61 so as to support the intermediate portion of the plurality of heat exchanger tubes 66, and the heat exchanger tube vibration suppression device 500 described above.

Accordingly, the high-pressure water as the primary cooling water flows in the plurality of heat exchanger tubes 66, and the heat exchanger tubes 66 are likely to vibrate when the secondary cooling water flowing in the body part 61 is heated to generate steam. In this case, when the heat exchanger tube 66 vibrates, since the wire 501 and the sleeves 502 move in relation to the heat exchanger tube 66, and the granular bodies 503 move in relation to the heat exchanger tube 66 in the sleeve 502. Thus, the vibration energy of the heat exchanger tube 66 is dispersed by the vibration energy of the sleeve 502 and the vibration energy of the granular body 503. As a result, the vibration of the heat exchanger tube 66 can be attenuated and suppressed effectively.

### [Example 6]

FIG. 20 is a cross-sectional view of a heat exchanger tube vibration suppression device according to Example 6 of the present invention. Members having the same functions as those of the examples described above will be denoted by the same reference numerals, and detailed description thereof will not be provided.

In Example 6, as illustrated in FIG. 20, a heat exchanger tube vibration suppression device 518 includes the wire 501 having flexibility and disposed in the heat exchanger tube 66, the plurality of sleeves 502 having a hollow shape and disposed along the longitudinal direction of the wire 501, and the plurality of granular bodies 503 that is movably filled in each sleeve 502.

Moreover, a pair of disc members 519 is fixed to the wire 501 with a predetermined gap in the longitudinal direction, and the plurality of sleeves 502 is movably disposed along the longitudinal direction of the wire 501 between the pair of disc members 519. That is, in Example 6, as illustrated in FIG. 18, the wire 501 is inserted into and fixed to the insertion holes 514 of three sleeves 502. However, in Example 6, the wire 501 is inserted into the insertion holes 514 of three sleeves 502 and remains unfixed.

Moreover, as illustrated in FIG. 20, a predetermined gap S1 is formed between the outer circumferential surface of each disc member 519 and the inner circumferential surface of the heat exchanger tube 66, and a predetermined gap S2 is formed between the outer circumferential surface of each sleeve 502 and the inner circumferential surface of the heat exchanger tube 66. Further, the gap S2 between the sleeve 502 and the heat exchanger tube 66 is set to be larger than the gap S1 between the disc member 519 of the heat exchanger tube 66.

Since the vibration suppression device 518 having such a configuration is disposed in an unusable heat exchanger tube 66 (in particular, the U-bend part 68), it is possible to suppress the vibration of the heat exchanger tube 66. That is, since the sleeves 502 are movable in relation to the wire 501 and the large gap S2 is secured between the sleeve 502 and the heat exchanger tube 66, when the heat exchanger tube 66 vibrates, the sleeves 502 move in the longitudinal direction and the radial direction in relation to the heat exchanger tube 66, and the sleeve 502 rubs and interferes with the heat exchanger tube 66. Due to this, the vibration energy of the heat exchanger tube 66 is dispersed by the vibration energy of the sleeves 502. That is, since the heat exchanger tube 66 and the sleeves 502 move in different directions, the vibration energy of the heat exchanger tube 66 cancels the vibration energy of the sleeve 502, and the vibration of the heat exchanger tube 66 is absorbed and suppressed.

Moreover, when the heat exchanger tube 66 vibrates in the in-plane direction, the granular bodies 503 in each sleeve 502 move in the longitudinal direction and the radial direction in relation to the heat exchanger tube 66. Due to this, the vibration energy of the heat exchanger tube 66 is dispersed by the vibration energy of the granular body 503. That is, since the heat exchanger tube 66 and the granular body 503 move in different directions, the vibration energy of the heat exchanger tube 66 cancels the vibration energy of the granular body 503, and the vibration of the heat exchanger tube 66 is absorbed and suppressed.

As described above, the heat exchanger tube vibration suppression device of Example 6 includes the wire 501 having flexibility and disposed in the heat exchanger tube 66, the pair of disc members 519 fixed to the wire 501 with a predetermined gap in the longitudinal direction of the wire 501, the plurality of sleeves 502 having a hollow shape and movably disposed along the longitudinal direction of the wire 501 between the pair of disc members 519, and the plurality of granular bodies 503 that is movably filled in each sleeve 502.

Thus, when the heat exchanger tube 66 vibrates, each sleeve 502 moves in relation to the heat exchanger tube 66 between the pair of disc members 519 and the respective granular bodies 503 move in relation to the heat exchanger tube 66 in the sleeve 502. Thus, the vibration energy of the heat exchanger tube 66 is dispersed by the vibration energy of the sleeve 502 and the vibration energy of the granular body 503. Therefore, it is possible to attenuate and suppress the vibration of the heat exchanger tube 66 effectively.

In the heat exchanger tube vibration suppression device 518 of Example 6, the gap S2 between the sleeve 502 and the heat exchanger tube 66 is set to be larger than the gap S1 between the disc member 519 and the heat exchanger tube 66. Thus, when the heat exchanger tube 66 vibrates, the sleeves 502 move in the radial direction of the wire 501 in relation to the heat exchanger tube 66 about the pair of disc members 519. Thus, the vibration energy of the heat exchanger tube 66 is dispersed by the vibration energy of the sleeve 502, and the vibration of the heat exchanger tube 66 can be attenuated effectively.

### [Example 7]

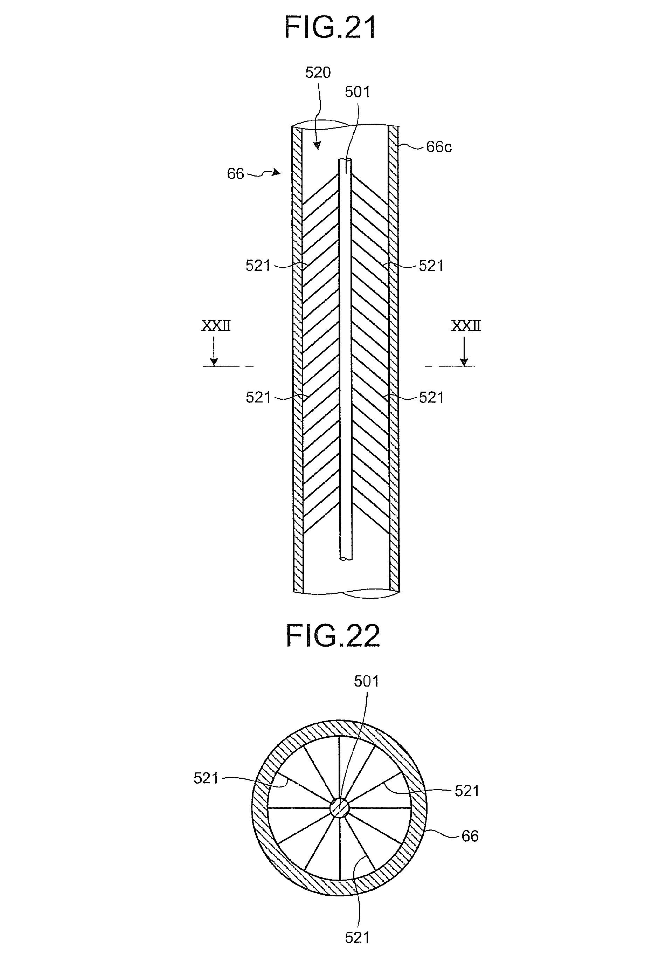

FIG. 21 is a cross-sectional view of a heat exchanger tube vibration suppression device according to Example 7 of the present invention, and FIG. 22 is a cross-sectional view along line XXII-XXII of FIG. 21. Members having the same functions as those of the examples described above will be denoted by the same reference numerals, and detailed description thereof will not be provided.

In Example 7, as illustrated in FIGS. 21 and 22, a heat exchanger tube vibration suppression device 520 includes a wire, a plurality of sleeves, and a plurality of granular bodies similarly to Example 5, for example, although not illustrated in the drawings, and the sleeve is disposed in the U-bend part of the heat exchanger tube 66. Moreover, the vibration suppression device 520 of the heat exchanger tube 66 includes a brush 521 as a holding member that holds the wire 501 to be held at a straight portion 66c so that the plurality of sleeves is positioned at a predetermined position of the heat exchanger tube 66 (for example, in a middle portion in the radial direction of the heat exchanger tube 66).

The brush 521 is provided in the wire 501 so that the brush 521 is disposed in the straight portion 66c of the heat exchanger tube 66. The brush 521 is formed of a plurality of narrow wires and has a base end portion fixed to the wire 501 and a distal end portion being in contact with the inner circumferential surface of the heat exchanger tube 66.

Due to this, in the vibration suppression device 520, since the brush 521 provided in the wire 501 is in contact with the straight portion 66c of the heat exchanger tube 66, it is possible to hold the plurality of sleeves so as to be positioned at a predetermined position of the U-bend part. As a result, the plurality of sleeves can attenuate the vibration of the heat exchanger tube 66 appropriately, as described above.

As described above, the heat exchanger tube vibration suppression device of Example 7 includes the brush 521 that holds the wire 501 to be held at the straight portion 66c of the heat exchanger tube 66 so that the plurality of sleeves is positioned at a predetermined position of the heat exchanger tube 66. Therefore, it is possible to hold the sleeves, the granular bodies, and the like provided in the wire at a predetermined position of the U-bend part and to attenuate the vibration of the heat exchanger tube 66 effectively.

### [Example 8]

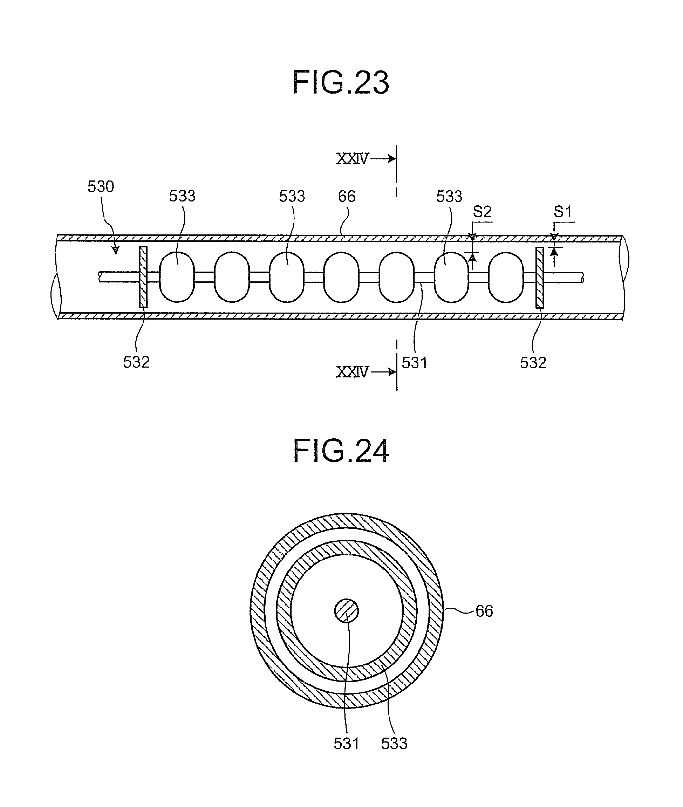

FIG. 23 is a cross-sectional view of a heat exchanger tube vibration suppression device according to Example 8 of the present invention, and FIG. 24 is a cross-sectional view along line XXIV-XXIV of FIG. 23. Members having the same functions as those of the examples described above will be denoted by the same reference numerals, and detailed description thereof will not be provided.

In Example 8, as illustrated in FIGS. 23 and 24, a heat exchanger tube vibration suppression device 530 includes a wire (cord-like member) 531 having flexibility and disposed in the heat exchanger tube 66, a pair of disc members 532 fixed to the wire 531 with a predetermined gap in the longitudinal direction of the wire 531, and a plurality of sleeves 533 disposed between the pair of disc members 532 so as to be movable along the longitudinal direction of the wire 531.

In this case, a predetermined gap S1 is formed between the outer circumferential surface of each disc member 532 and the inner circumferential surface of the heat exchanger tube 66, and a predetermined gap S2 is formed between the outer circumferential surface of each sleeve 533 and the inner circumferential surface of the heat exchanger tube 66. Moreover, the gap S2 between the sleeve 533 and the heat exchanger tube 66 is set to be larger than the gap S1 between the disc member 532 and the heat exchanger tube 66.

Since the vibration suppression device 530 having such a configuration is disposed in an unusable heat exchanger tube 66 (in particular, the U-bend part), it is possible to suppress the vibration of the heat exchanger tube 66. That is, since the sleeves 533 are movable in relation to the wire 531 and the large gap S2 is secured between the sleeve 533 and the heat exchanger tube 66, when the heat exchanger tube 66 vibrates, the sleeves 533 move in the longitudinal direction and the radial direction in relation to the heat exchanger tube 66, and the sleeve 533 rubs and interferes with the heat exchanger tube 66. Due to this, the vibration energy of the heat exchanger tube 66 is dispersed by the vibration energy of the sleeves 533. That is, since the heat exchanger tube 66 and the sleeves 533 move in different directions, the vibration energy of the heat exchanger tube 66 cancels the vibration energy of the sleeve 533, and the vibration of the heat exchanger tube 66 is absorbed and suppressed.

As described above, the heat exchanger tube vibration suppression device of Example 8 includes the wire 531 having flexibility and disposed in the heat exchanger tube 66, the pair of disc members 532 fixed to the wire 531 with a predetermined gap in the longitudinal direction of the wire 531, and the plurality of sleeves 533 disposed between the pair of disc members 532 so as to be movable along the longitudinal direction of the wire 531.

Thus, when the heat exchanger tube 66 vibrates, the sleeves 533 move in relation to the heat exchanger tube 66 between the pair of disc members 532, and the vibration energy of the heat exchanger tube 66 is dispersed by the vibration energy of the sleeve 533. Therefore, it is possible to attenuate and suppress the vibration of the heat exchanger tube 66 effectively.

### [Example 9]

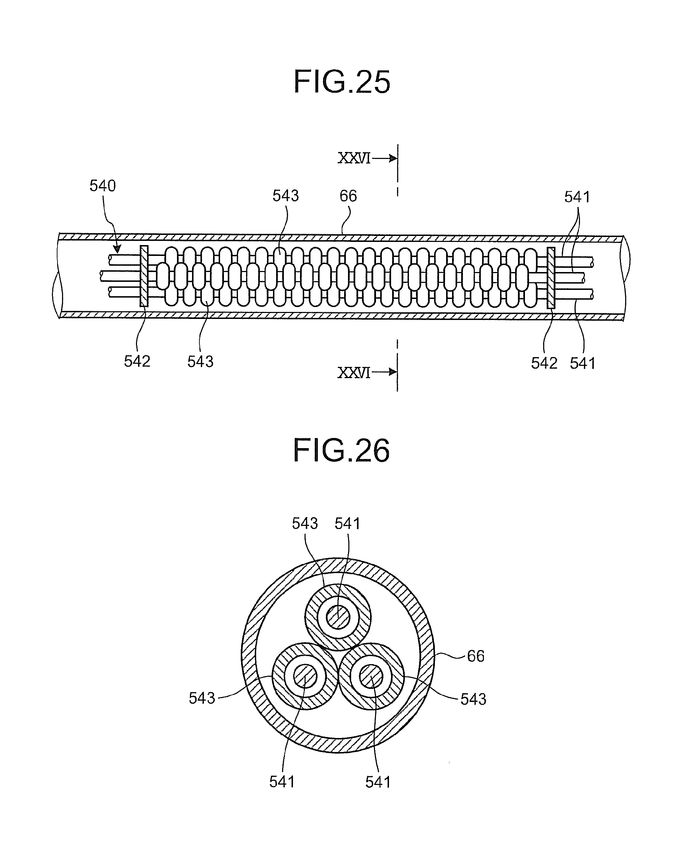

FIG. 25 is a cross-sectional view of a heat exchanger tube vibration suppression device according to Example 9 of the present invention, and FIG. 26 is a cross-sectional view along line XXVI-XXVI of FIG. 25. Members having the same functions as those of the examples described above will be denoted by the same reference numerals, and detailed description thereof will not be provided.

In Example 9, as illustrated in FIGS. 25 and 26, a heat exchanger tube vibration suppression device 540 includes a plurality of (in the present example, three) wires (cord-like members) 541 having flexibility and disposed in the heat exchanger tube 66, a pair of disc members 542 fixed to each wire 541 with a predetermined gap in the longitudinal direction of the wire 541, and a plurality of sleeves 543 disposed between the pair of disc members 542 so as to be movable along the longitudinal direction of the wire 541.

Since the vibration suppression device 540 having such a configuration is disposed in an unusable heat exchanger tube 66 (in particular, the U-bend part), it is possible to suppress the vibration of the heat exchanger tube 66. That is, since the sleeves 543 are movable in relation to the respective wires 541, when the heat exchanger tube 66 vibrates, a number of sleeves 543 of the respective wires 541 move in the longitudinal direction and the radial direction in relation to the heat exchanger tube 66, and the sleeve 543 rubs and interferes with the heat exchanger tube 66. Due to this, the vibration energy of the heat exchanger tube 66 is dispersed by the vibration energy of the sleeves 543. That is, since the heat exchanger tube 66 and the sleeves 543 move in different directions, the vibration energy of the heat exchanger tube 66 cancels the vibration energy of the sleeve 543, and the vibration of the heat exchanger tube 66 is absorbed and suppressed.

As described above, the heat exchanger tube vibration suppression device of Example 9 includes the plurality of wires 541 having flexibility and disposed in the heat exchanger tube 66, the pair of disc members 542 fixed to each wire 541 with a predetermined gap in the longitudinal direction of the wire 541, and the plurality of sleeves 543 disposed between the pair of disc members 542 so as to be movable along the longitudinal direction of the wire 541.

Thus, when the heat exchanger tube 66 vibrates, the sleeves 543 move in relation to the heat exchanger tube 66 between the pair of disc members 542, and the vibration energy of the heat exchanger tube 66 is dispersed by the vibration energy of the sleeve 543. Therefore, it is possible to attenuate and suppress the vibration of the heat exchanger tube 66 effectively.

### [Example 10]

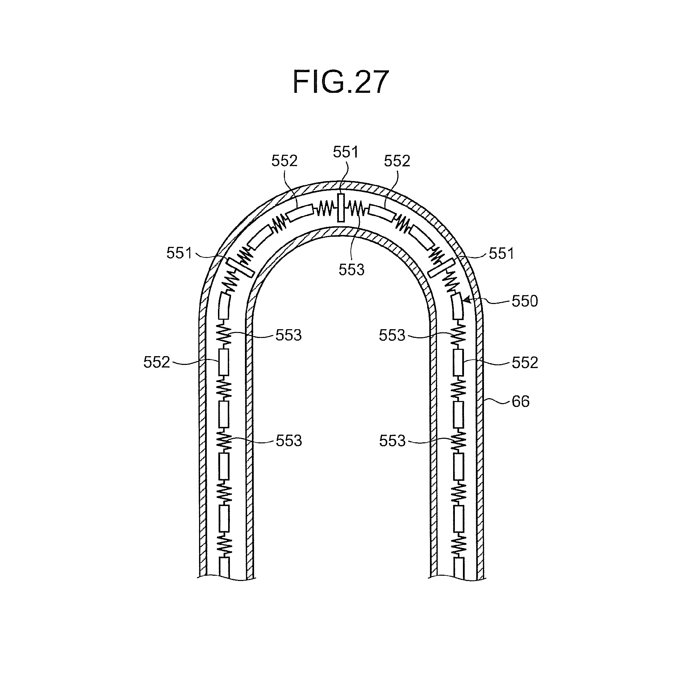

FIG. 27 is a schematic diagram of a heat exchanger tube vibration suppression device according to Example 10 of the present invention. Members having the same functions as those of the examples described above will be denoted by the same reference numerals, and detailed description thereof will not be provided.

In Example 10, as illustrated in FIG. 27, a heat exchanger tube vibration suppression device 550 includes a plurality of disc members 551 disposed with a predetermined gap in the longitudinal direction of the heat exchanger tube 66, a plurality of mass elements 552 disposed between the respective disc members 551 with a predetermined gap in the longitudinal direction of the heat exchanger tube 66, and a spring element 553 that connects the disc member 551 and the mass element 552, and the mass elements 552. In this case, the disc member 551 is disposed in the U-bend part. Moreover, a gap between the mass element 552 and the heat exchanger tube 66 is set to be larger than a gap between the disc member 551 and the heat exchanger tube 66.

Since the vibration suppression device 550 having such a configuration is disposed in an unusable heat exchanger tube 66, it is possible to suppress the vibration of the heat exchanger tube 66. That is, when the heat exchanger tube 66 vibrates, the respective mass elements 552 move in the longitudinal direction in relation to the heat exchanger tube 66 with the spring force of the spring element 553. Due to this, the vibration energy of the heat exchanger tube 66 is dispersed by the vibration energy of the respective mass elements 552. That is, since the heat exchanger tube 66 and the respective mass elements 552 move in different directions, the vibration energy of the heat exchanger tube 66 cancels the vibration energy of the mass element 552. Thus, the vibration of the heat exchanger tube 66 is absorbed and suppressed.

As described above, the heat exchanger tube vibration suppression device of Example 10 includes the plurality of disc members 551 disposed with a predetermined gap in the longitudinal direction of the heat exchanger tube 66, the plurality of mass elements 552 disposed between the respective disc members 551 with a predetermined gap in the longitudinal direction of the heat exchanger tube 66, and the spring element 553 that connects the disc member 551 and the mass element 552, and the mass elements 552.

Thus, when the heat exchanger tube 66 vibrates, the respective mass elements 552 move in relation to the heat exchanger tube 66 between the pair of disc members 551, and the vibration energy of the heat exchanger tube 66 is dispersed by the vibration energy of the mass element 552. Therefore, it is possible to attenuate and suppress the vibration of the heat exchanger tube 66 effectively.

### [Example 11]

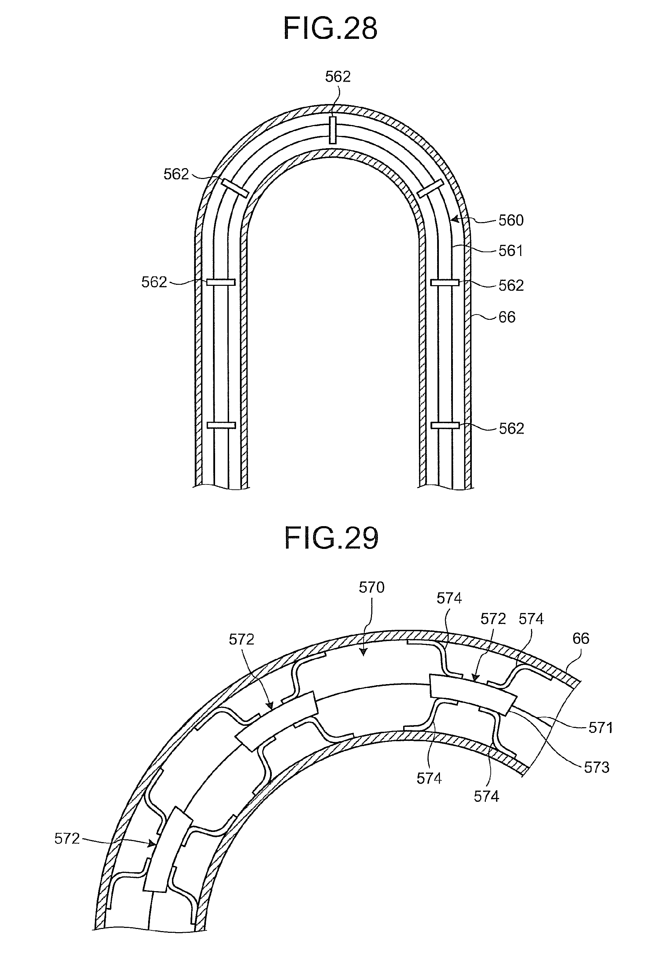

FIG. 28 is a schematic diagram of a heat exchanger tube vibration suppression device according to Example 11 of the present invention. Members having the same functions as those of the examples described above will be denoted by the same reference numerals, and detailed description thereof will not be provided.

In Example 11, as illustrated in FIG. 28, a heat exchanger tube vibration suppression device 560 includes a wire (cord-like member) 561 having flexibility and disposed in the heat exchanger tube 66 and a plurality of disc members 562 fixed to the wire 561 with a predetermined gap in the longitudinal direction of the wire 561.

Since the vibration suppression device 560 having such a configuration is disposed in an unusable heat exchanger tube 66, it is possible to suppress the vibration of the heat exchanger tube 66. That is, when the heat exchanger tube 66 vibrates, the wire 561 moves in the radial direction in relation to the heat exchanger tube 66 about the respective disc members 561 and the wire 561 and the heat exchanger tube 66 interfere with each other. Due to this, the vibration energy of the heat exchanger tube 66 is dispersed by the vibration energy of the wire 561. That is, since the heat exchanger tube 66 and the wire 561 move in different directions, the vibration energy of the heat exchanger tube 66 cancels the vibration energy of the wire 561, and the vibration of the heat exchanger tube 66 is absorbed and suppressed.

As described above, the heat exchanger tube vibration suppression device of Example 11 includes the wire 561 having flexibility and disposed in the heat exchanger tube 66 and the plurality of disc members 562 fixed to the wire 561 with a predetermined gap in the longitudinal direction of the wire 561.

Thus, when the heat exchanger tube 66 vibrates, the wire 561 moves in relation to the heat exchanger tube 66 between the pair of disc members 562, and the vibration energy of the heat exchanger tube 66 is dispersed by the vibration energy of the wire 561. Therefore, it is possible to attenuate and suppress the vibration of the heat exchanger tube 66 effectively.

### [Example 12]

FIG. 29 is a cross-sectional view of a heat exchanger tube vibration suppression device according to Example 12 of the present invention. Members having the same functions as those of the examples described above will be denoted by the same reference numerals, and detailed description thereof will not be provided.

In Example 12, as illustrated in FIG. 29, a heat exchanger tube vibration suppression device 570 includes a wire (cord-like member) 571 having flexibility and disposed in the heat exchanger tube 66 and a plurality of mass elements 572 fixed to the wire 571 with a predetermined gap in the longitudinal direction of the wire 571. The mass element 572 includes a mass element body 573 of which the outer diameter is smaller than the inner diameter of the heat exchanger tube 66 and a plurality of spring elements 574 of which the base end portion is fixed to the mass element body 573 and the distal end portion makes contact with the inner surface of the heat exchanger tube 66.

Since the vibration suppression device 570 having such a configuration is disposed in an unusable heat exchanger tube 66, it is possible to suppress the vibration of the heat exchanger tube 66. That is, when the heat exchanger tube 66 vibrates, the respective mass elements 572 (mass element bodies 573) move in the radial direction in relation to the heat exchanger tube 66 with the spring force of the spring element 574. Due to this, the vibration energy of the heat exchanger tube 66 is dispersed by the vibration energy of the mass element 572. That is, since the heat exchanger tube 66 and the mass element 572 move in different directions, the vibration energy of the heat exchanger tube 66 cancels the vibration energy of the mass element 572, and the vibration of the heat exchanger tube 66 is absorbed and suppressed.

As described above, the heat exchanger tube vibration suppression device of Example 12 includes the wire 571 having flexibility and disposed in the heat exchanger tube 66 and the plurality of mass elements 572 fixed to the wire 571 with a predetermined gap in the longitudinal direction of the wire 571.

Thus, when the heat exchanger tube 66 vibrates, the plurality of mass elements 572 moves in relation to the heat exchanger tube 66, and the vibration energy of the heat exchanger tube 66 is dispersed by the vibration energy of the mass element 572. Therefore, it is possible to attenuate and suppress the vibration of the heat exchanger tube 66 effectively.

### [Example 13]

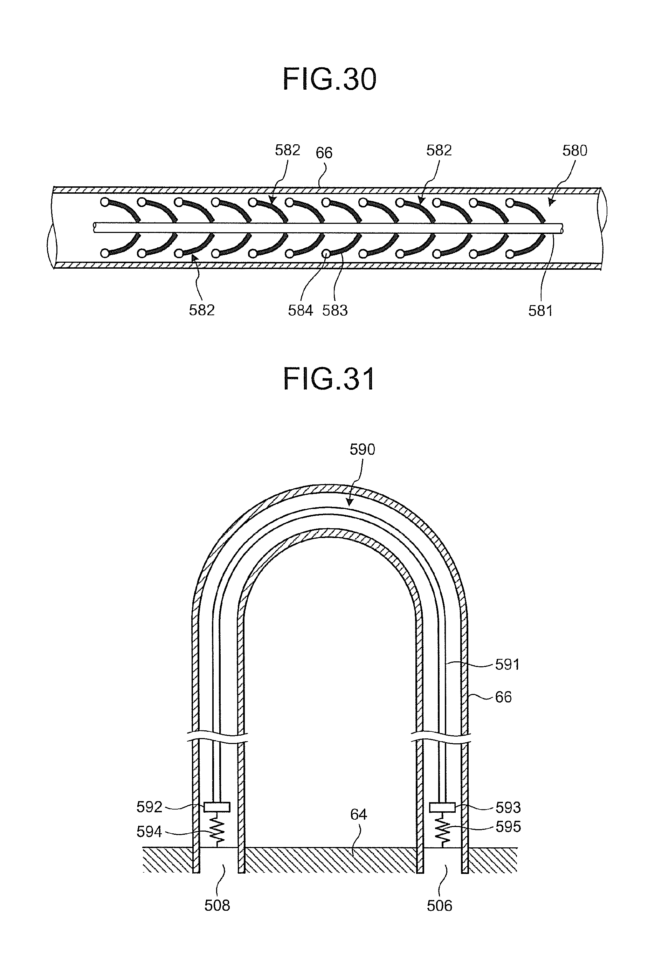

FIG. 30 is a cross-sectional view of a heat exchanger tube vibration suppression device according to Example 13 of the present invention. Members having the same functions as those of the examples described above will be denoted by the same reference numerals, and detailed description thereof will not be provided.

In Example 13, as illustrated in FIG. 30, a heat exchanger tube vibration suppression device 580 includes a wire (cord-like member) 581 having flexibility and disposed in the heat exchanger tube 66 and a plurality of mass elements 582 fixed to the wire 581 with a predetermined gap in the longitudinal direction of the wire 581. The mass element 582 includes a connecting wire 583 of which the base end portion is fixed to the wire 581 and a mass element body 584 connected to the distal end portion of the connecting wire 583.

When the vibration suppression device 580 having such a configuration is disposed in an unusable heat exchanger tube 66, it is possible to suppress the vibration of the heat exchanger tube 66. That is, when the heat exchanger tube 66 vibrates, the respective mass elements 582 (the mass element bodies 584) move in the radial direction in relation to the heat exchanger tube 66. Due to this, the vibration energy of the heat exchanger tube 66 is dispersed by the vibration energy of the mass element 582. That is, since the heat exchanger tube 66 and the mass element 582 move in different directions, the vibration energy of the heat exchanger tube 66 cancels the vibration energy of the mass element 582, and the vibration of the heat exchanger tube 66 is absorbed and suppressed.

As described above, the heat exchanger tube vibration suppression device of Example 13 includes the wire 581 having flexibility and disposed in the heat exchanger tube 66 and the plurality of mass elements 582 fixed to the wire 581 with a predetermined gap in the longitudinal direction of the wire 581.

Thus, when the heat exchanger tube 66 vibrates, the plurality of mass elements 582 moves in relation to the heat exchanger tube 66, and the vibration energy of the heat exchanger tube 66 is dispersed by the vibration energy of the mass element 582. Therefore, it is possible to attenuate and suppress the vibration of the heat exchanger tube 66 effectively.

### [Example 14]

FIG. 31 is a schematic diagram of a heat exchanger tube vibration suppression device according to Example 14 of the present invention. Members having the same functions as those of the examples described above will be denoted by the same reference numerals, and detailed description thereof will not be provided.

In Example 14, as illustrated in FIG. 31, a heat exchanger tube vibration suppression device 590 includes a wire (cord-like member) 591 having flexibility and disposed in the heat exchanger tube 66, supporting members 592 and 593 connected to the respective end portions of the wire 591, and tension springs (tension members) 594 and 595 that connect the supporting members 592 and 593 and the plugs 508 and 506. Due to this, the wire 591 is pulled and held on the straight portion (that is, the plugs 508 and 506 (the tube plate 64)) of the heat exchanger tube 66 by the tension springs 594 and 595, and the wire 591 is positioned at an inner-side position of the U-bend part of the heat exchanger tube 66.

When the vibration suppression device 590 having such a configuration is disposed in an unusable heat exchanger tube 66, it is possible to suppress the vibration of the heat exchanger tube 66. That is, when the heat exchanger tube 66 vibrates, the wire 591 moves in relation to the heat exchanger tube 66, and the wire 591 rubs and interferes with the heat exchanger tube 66. Due to this, the vibration energy of the heat exchanger tube 66 is dispersed by the vibration energy of the wire 591. That is, since the heat exchanger tube 66 and the wire 591 move in different directions, the vibration energy of the heat exchanger tube 66 cancels the vibration energy of the wire 591, and the vibration of the heat exchanger tube 66 is absorbed and suppressed.

As described above, the heat exchanger tube vibration suppression device of Example 14 includes the wire 591 having flexibility and disposed in the heat exchanger tube 66, and the tension springs 594 and 595 that pull and hold the wire 591 on the straight portion of the heat exchanger tube 66.

Thus, when the heat exchanger tube 66 vibrates, the wire 591 held by the tension springs 594 and 595 moves in relation to the heat exchanger tube 66, and the vibration energy of the heat exchanger tube 66 is dispersed by the vibration energy of the wire 591. Therefore, it is possible to attenuate and suppress the vibration of the heat exchanger tube 66 effectively.

In this case, the tension springs 594 and 595 as the tension member can be applied to the heat exchanger tube vibration suppression devices of Examples 5 and 6, and the respective sleeves are held at a predetermined position of the heat exchanger tube 66. Thus, it is possible to attenuate the vibration of the heat exchanger tube 66 effectively with the aid of the sleeve and the granular body.

Moreover, in the examples described above, although it has been described to be effective when the heat exchanger tube vibration suppression device of the present invention is disposed in the U-bend part of the reverse U-shaped heat exchanger tube, substantially the same advantageous effects can be obtained when the heat exchanger tube vibration suppression device is applied to the straight portion because the sleeve can move in the radial direction of the cord-like member. Moreover, in the examples described above, although the heat exchanger tube vibration suppression device of the present invention has been applied to the heat exchanger tube used in the steam generator of the pressurized water reactor (PWR), the present invention is not limited thereto, and substantially the same advantageous effects can be obtained even when the heat exchanger tube vibration suppression device is applied to a general heat exchanger. The heat exchanger tube to which the present invention can be applied does not depend on the shape thereof.

### [Example 15]

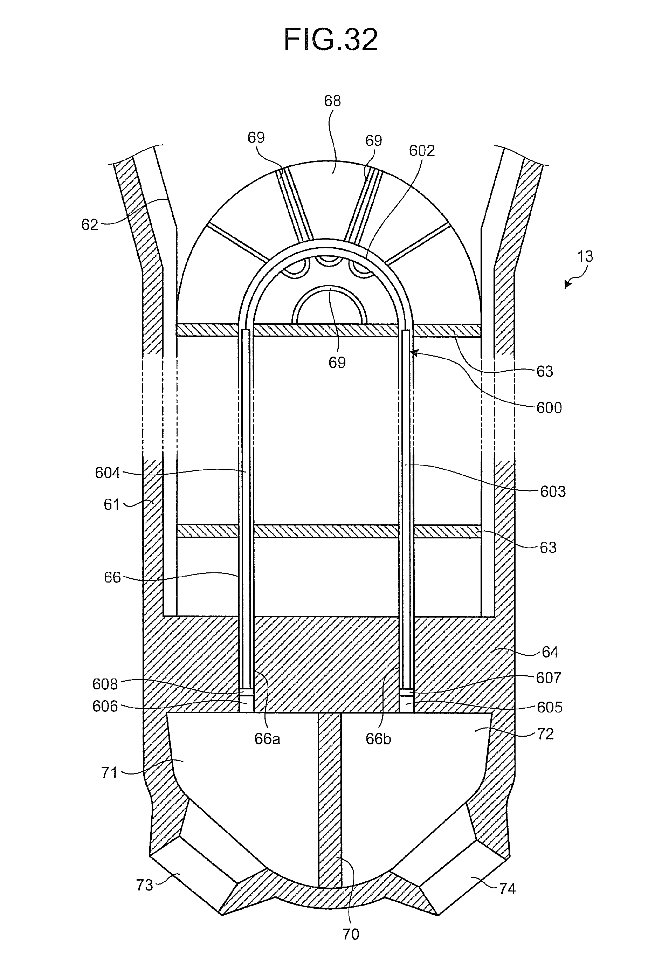

FIG. 32 is a schematic diagram of a heat exchanger tube vibration suppression device according to Example 15 of the present invention. Members having the same functions as those of the examples described above will be denoted by the same reference numerals, and detailed description thereof will not be provided.

In Example 15, as illustrated in FIG. 32, a vibration suppression device 600 includes a wire (cord-like member) 601 having flexibility and disposed in the heat exchanger tube 66. Moreover, the wire 601 includes a first cord portion 602 having predetermined bending strength and second cord portions 603 and 604 provided on end portions in the longitudinal direction of the wire 601 and having higher bending strength than the first cord portion 602. Moreover, plugs (plugging members) 605 and 606 that block the end portions of the heat exchanger tube 66 are connected to the second cord portions 603 and 604 of the wire 601.

The wire 601 is made from stainless steel, and the outer diameter thereof is smaller than the inner diameter of the heat exchanger tube 66 and the length thereof is smaller than the length of the heat exchanger tube 66. In this case, the outer diameter of the second cord portions 603 and 604 is set to be larger than the outer diameter of the first cord portion 602 so that the second cord portions 603 and 604 have higher bending strength than the first cord portion 602.

Moreover, the vibration suppression device 600 includes moving devices 607 and 608 that are provided in the respective end portions of the wire 601 so as to move the first cord portion 602 toward the U-bend part 68 when the wire 601 is disposed in the heat exchanger tube 66. The moving devices 607 and 608 are provided in the plugs 605 and 606.

The vibration suppression device 600 is disposed by inserting the wire 601 into the heat exchanger tube 66 from the inlet chamber 71 (or the outlet chamber 72) of the body part 61, and the plugs 605 and 606 are plugged by being fixed to the end portions of the heat exchanger tube 66 according to a diameter expanding operation. In this case, the second cord portions 603 and 604 are disposed in the straight portion of the heat exchanger tube 66, and the first cord portion 602 is disposed in the U-bend part 68 of the heat exchanger tube 66. Moreover, the wire 601 is pushed up in relation to the plugs 605 and 606 using the moving devices 607 and 608, whereby the first cord portion 602 is supported by being pushed slightly up from the inner surface of the heat exchanger tube 66 in the U-bend part 68.

Since the vibration suppression device 600 is disposed in an unusable heat exchanger tube 66, it is possible to suppress the vibration of the heat exchanger tube 66. That is, when the U-bend part 68 of the heat exchanger tube 66 vibrates, the first cord portion 602 of the wire 601 moves in relation to the heat exchanger tube 66 and the first cord portion 602 interferes with the heat exchanger tube 66. Due to this, the vibration energy of the heat exchanger tube 66 is dispersed by the vibration energy of the first cord portion 602. That is, since the heat exchanger tube 66 and the first cord portion 602 move in different directions, the vibration energy of the heat exchanger tube 66 cancels the vibration energy of the first cord portion 602, and the vibration of the heat exchanger tube 66 is absorbed and suppressed.

In this case, since the first cord portion 602 of the wire 601 is supported by being pushed slightly up from the inner surface (the lower surface) of the heat exchanger tube 66 in the U-bend part 68, when the U-bend part 68 of the heat exchanger tube 66 vibrates, the first cord portion 602 moves appropriately in relation to the heat exchanger tube 66. Thus, it is possible to suppress the vibration of the heat exchanger tube 66 efficiently.

As described above, the heat exchanger tube vibration suppression device of Example 15 includes the wire 601 having flexibility and disposed in the heat exchanger tube 66 and the moving devices 607 and 608 that are provided in the respective end portions of the wire 601 so as to move the wire 601 toward the U-bend part 68 when the wire 601 is disposed in the heat exchanger tube 66.

Thus, since the wire 601 disposed in the heat exchanger tube 66 is disposed by being moved toward the U-bend part 68 by the moving devices 607 and 608, the wire 601 is separated from the inner surface (the lower surface) of the heat exchanger tube 66 and the wire 601 can move in relation to the U-bend part 68 of the heat exchanger tube 66. Due to this, when the heat exchanger tube 66 vibrates, the wire 601 moves in relation to the heat exchanger tube 66, and the vibration energy of the heat exchanger tube 66 is dispersed by the vibration energy of the wire 601, and the vibration of the heat exchanger tube 66 can be attenuated and suppressed effectively.

In the heat exchanger tube vibration suppression device of Example 15, the first cord portion 602 having predetermined bending strength and the second cord portions 603 and 604 that are provided on the end portions in the longitudinal direction of the wire 601 and have higher bending strength than the first cord portion 602 are provided as the wire 601. Thus, since the second cord portions 603 and 604 of the wire 601 having high bending strength are disposed in the straight portion of the heat exchanger tube 66, the first cord portion 602 having low bending strength can be appropriately disposed in the U-bend part 68 of the heat exchanger tube 66.

### [Example 16]

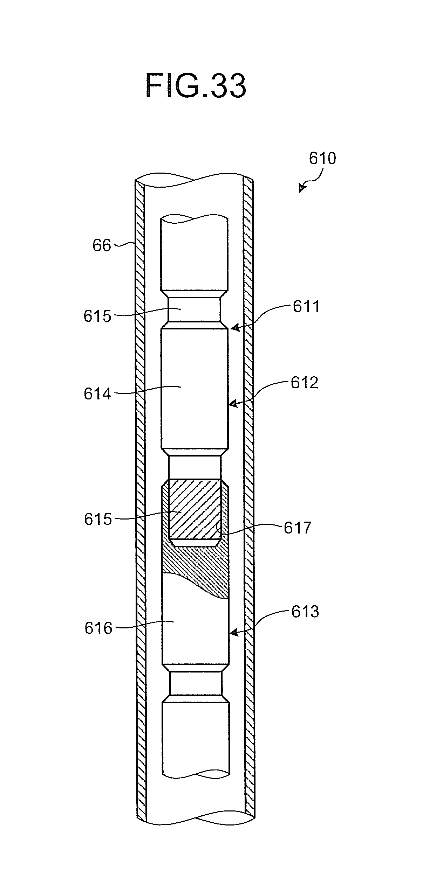

FIG. 33 is a cross-sectional view of a heat exchanger tube vibration suppression device according to Example 16 of the present invention. Members having the same functions as those of the examples described above will be denoted by the same reference numerals, and detailed description thereof will not be provided.

In Example 16, as illustrated in FIG. 33, a vibration suppression device 610 includes a wire (cord-like member) having flexibility and disposed in the heat exchanger tube 66, and the wire includes a first cord portion having predetermined bending strength and a second cord portion 611 provided in an end portion in the longitudinal direction of the wire and having higher bending strength than the first cord portion.

The second cord portion 611 is formed by connecting a plurality of connecting members 612 and 613 in series. The first connecting member 612 has a columnar shape and a male screw portion 615 is formed in each end portion in the longitudinal direction of a body 614. The second connecting member 613 has a columnar shape and a female screw portion 617 is formed in each end portion in the longitudinal direction of a body 616. Moreover, when the respective male screw portions 615 of the first connecting member 612 screw with the respective female screw portions 617 of the second connecting member 613, the second cord portion 611 is formed.

In the vibration suppression device 610, although the wire (that is, the first cord portion, and subsequently, the second cord portion 611) is inserted from the end portion of the heat exchanger tube 66, since the inlet chamber 71 (see FIG. 32) of the body part 61 is narrow, it is difficult to insert the second cord portion 611 into the heat exchanger tube 66 in a state in which the second cord portion 611 is assembled. Due to this, when the second cord portion 611 is inserted subsequently to the first cord portion, the first connecting member 612 and the second connecting member 613 are screwed together to be connected to form the second cord portion 611.

Due to this, in the vibration suppression device 610, since the second cord portion 611 having high bending strength is disposed in the straight portion of the heat exchanger tube 66, it is possible to dispose the first cord portion having low bending strength in the U-bend part of the heat exchanger tube 66 and to suppress the vibration of the heat exchanger tube 66 appropriately with the first cord portion.

As described above, in the heat exchanger tube vibration suppression device of Example 16, the second cord portion 611 is formed by connecting the first and second connecting members 612 and 613 in series.

Thus, when the second cord portion 611 is inserted subsequently to the first cord portion, the first and second connecting members 612 and 613 are connected to form the second cord portion 611. Due to this, it is possible to insert the second cord portion 611 easily into the heat exchanger tube 66 even in a small working space and to improve the wire inserting properties.

### [Example 17]

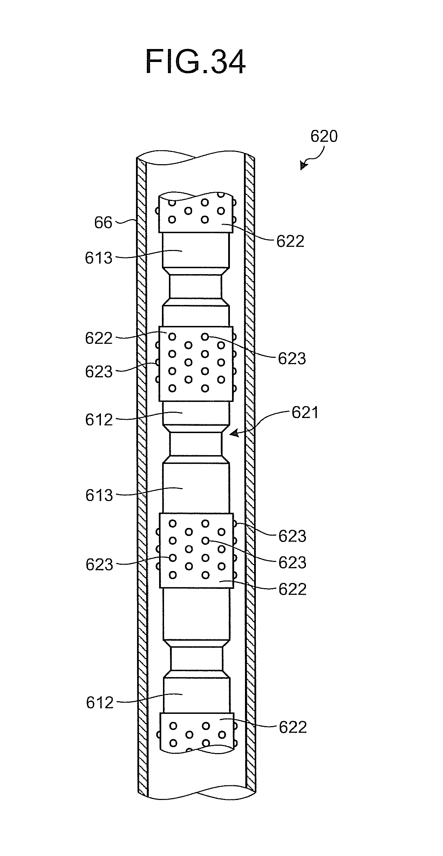

FIG. 34 is a cross-sectional view of a heat exchanger tube vibration suppression device according to Example 17 of the present invention. Members having the same functions as those of the examples described above will be denoted by the same reference numerals, and detailed description thereof will not be provided.

In Example 17, as illustrated in FIG. 34, a vibration suppression device 620 includes a wire (cord-like member) having flexibility and disposed in the heat exchanger tube 66, and the wire includes a first cord portion having predetermined bending strength and a second cord portion 621 provided in an end portion in the longitudinal direction of the wire and having higher bending strength than the first cord portion.

The second cord portion 621 is formed by connecting a plurality of connecting members 612 and 613 in series. Moreover, a rolling member 622 is provided on an outer circumferential portion of each of the connecting members 612 and 613. The rolling member 622 has a cylindrical shape and has a plurality of balls 623 provided on an outer circumferential surface thereof and is fixed by engaging with the outer circumferential portion of each of the connecting members 612 and 613.

In the vibration suppression device 620, although the wire (that is, the first cord portion, and subsequently, the second cord portion 621) is inserted from the end portion of the heat exchanger tube 66, since the second cord portion 621 has the rolling member 622 provided on the outer circumferential portion thereof, the ball 623 rolls on the inner circumferential surface of the heat exchanger tube 66 and the second cord portion 621 is smoothly inserted into the heat exchanger tube 66.

Due to this, in the vibration suppression device 620, since the second cord portion 621 having high bending strength is disposed in the straight portion of the heat exchanger tube 66, it is possible to dispose the first cord portion having low bending strength in the U-bend part of the heat exchanger tube 66 and to suppress the vibration of the heat exchanger tube 66 appropriately with the first cord portion. Moreover, since the rolling member 622 is provided on the outer circumferential portion of the second cord portion 621, the second cord portion 621 moves in relation to the heat exchanger tube 66 and it is possible to suppress stress from being applied to the heat exchanger tube 66.

As described above, in the heat exchanger tube vibration suppression device of Example 17, the second cord portion 621 is formed by connecting the first and second connecting members 612 and 613 in series, and the rolling member 622 is provided on the outer circumferential portion of each of the connecting members 612 and 613.

Thus, when the second cord portion 621 is inserted into the heat exchanger tube 66 subsequently to the first cord portion, since the rolling member 622 is provided on the outer circumferential portion of the second cord portion 621, it is possible to insert the second cord portion 621 into the heat exchanger tube 66 smoothly and to improve the wire inserting properties.

### [Example 18]

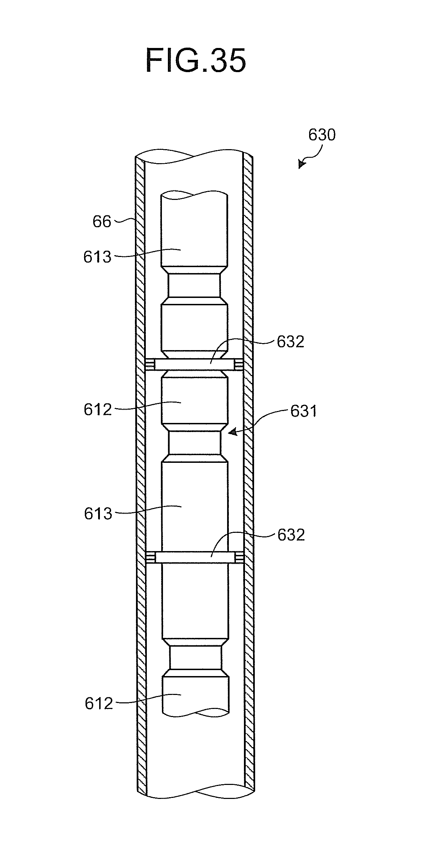

FIG. 35 is a cross-sectional view of a heat exchanger tube vibration suppression device according to Example 18 of the present invention. Members having the same functions as those of the examples described above will be denoted by the same reference numerals, and detailed description thereof will not be provided.

In Example 18, as illustrated in FIG. 35, a vibration suppression device 630 includes a wire (cord-like member) having flexibility and disposed in the heat exchanger tube 66, and the wire includes a first cord portion having predetermined bending strength and a second cord portion 631 provided in an end portion in the longitudinal direction of the wire and having higher bending strength than the first cord portion.

The second cord portion 631 is formed by connecting a plurality of connecting members 612 and 613 in series. Moreover, a sleeve 632 is provided on an outer circumferential portion of each of the connecting members 612 and 613. The sleeve 632 has a disk shape and has a number of brushes provided on an outer circumferential surface thereof and is fixed by engaging with the outer circumferential portion of each of the connecting members 612 and 613.

In the vibration suppression device 630, although the wire (that is, the first cord portion, and subsequently, the second cord portion 631) is inserted from the end portion of the heat exchanger tube 66, since the second cord portion 631 has the sleeve 632 provided on the outer circumferential portion thereof, the brush slides on the inner circumferential surface of the heat exchanger tube 66 and the second cord portion 631 is smoothly inserted into the heat exchanger tube 66.

Due to this, in the vibration suppression device 630, since the second cord portion 631 having high bending strength is disposed in the straight portion of the heat exchanger tube 66, it is possible to dispose the first cord portion having low bending strength in the U-bend part of the heat exchanger tube 66 and to suppress the vibration of the heat exchanger tube 66 appropriately with the first cord portion. Moreover, since the sleeve 632 is provided on the outer circumferential portion of the second cord portion 631, the second cord portion 631 moves in relation to the heat exchanger tube 66 and it is possible to suppress stress from being applied to the heat exchanger tube 66.

As described above, in the heat exchanger tube vibration suppression device of Example 18, the second cord portion 631 is formed by connecting the first and second connecting members 612 and 613 in series, and the sleeve 632 is provided on the outer circumferential portion of each of the connecting members 612 and 613.

Thus, when the second cord portion 631 is inserted into the heat exchanger tube 66 subsequently to the first cord portion, since the sleeve 632 is provided on the outer circumferential portion of the second cord portion 631, it is possible to insert the second cord portion 631 into the heat exchanger tube 66 smoothly and to improve the wire inserting properties.

### [Example 19]

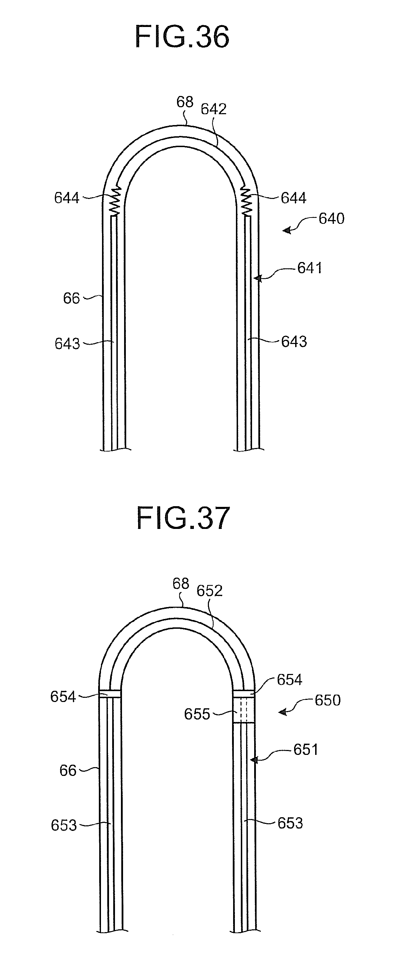

FIG. 36 is a schematic diagram of a heat exchanger tube vibration suppression device according to Example 19 of the present invention. Members having the same functions as those of the examples described above will be denoted by the same reference numerals, and detailed description thereof will not be provided.

In Example 19, as illustrated in FIG. 36, a vibration suppression device 640 includes a wire (cord-like member) 641 having flexibility and disposed in the heat exchanger tube 66, and the wire 641 includes a first cord portion 642 having predetermined bending strength and a second cord portion 643 provided in an end portion in the longitudinal direction of the wire 641 and having higher bending strength than the first cord portion 642. A spring member (expanding member) 644 is disposed between the first cord portion 642 and the second cord portion 643.

Since the vibration suppression device 640 is disposed in an unusable heat exchanger tube 66, it is possible to suppress the vibration of the heat exchanger tube 66. Moreover, since the first cord portion 642 of the wire 641 is supported by the second cord portion 643 by the spring member 644, when the U-bend part 68 of the heat exchanger tube 66 vibrates, the first cord portion 642 moves appropriately in relation to the heat exchanger tube 66 and the vibration of the heat exchanger tube 66 can be suppressed efficiently.

As described above, in the heat exchanger tube vibration suppression device of Example 19, the first cord portion 642 having predetermined bending strength, the second cord portion 643 provided in an end portion in the longitudinal direction of the wire 641 and having higher bending strength than the first cord portion 642, and the spring member 644 disposed between the first and second cord portions 642 and 643 are provided as the wire 641.

Thus, since the spring member 644 is disposed between the first and second cord portions 642 and 643, the first cord portion 642 is supported on the second cord portion 643 by the spring member 644, and the first cord portion 642 moves appropriately in relation to and together with the heat exchanger tube 66. Thus, it is possible to suppress the vibration of the heat exchanger tube 66 efficiently. Moreover, since the vertical position of the first cord portion 642 is determined at an appropriate position by the elastic force of the spring member 644, it is possible to eliminate a positioning error of the wire 641 and to hold the wire 641 appropriately at a predetermined position of the heat exchanger tube 66.

### [Example 20]

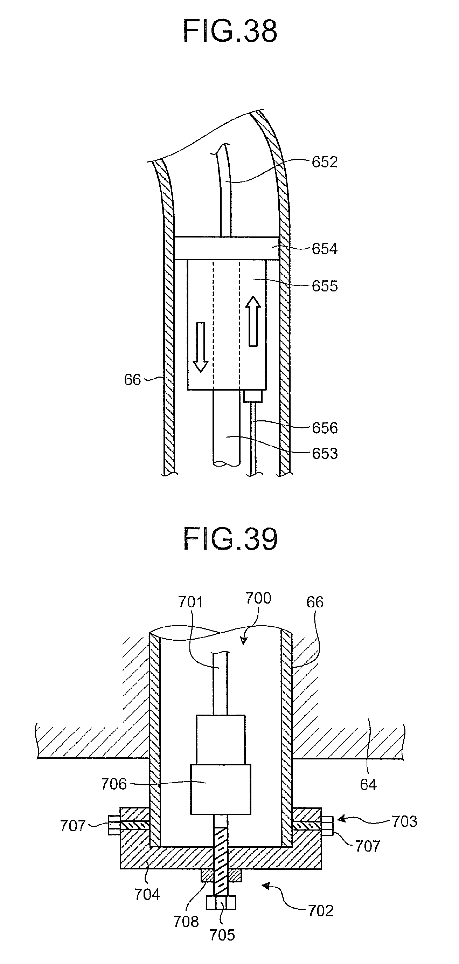

FIG. 37 is a schematic diagram of a heat exchanger tube vibration suppression device according to Example 20 of the present invention, and FIG. 38 is a cross-sectional view illustrating a state in which the heat exchanger tube vibration suppression device of Example 20 is inserted in a heat exchanger tube. Members having the same functions as those of the examples described above will be denoted by the same reference numerals, and detailed description thereof will not be provided.

In Example 20, as illustrated in FIGS. 37 and 38, a vibration suppression device 650 includes a wire (cord-like member) 651 having flexibility and disposed in the heat exchanger tube 66, and the wire 651 includes a first cord portion 652 having predetermined bending strength and a second cord portion 653 provided in an end portion in the longitudinal direction of the wire 651 and having higher bending strength than the first cord portion 652. A holding ring (holding member) 654 is fixed between the first cord portion 652 and the second cord portion 653 so as to hold the second cord portion 653 at a predetermined position.

In the vibration suppression device 650, the wire 651 (that is, in the order of the second cord portion 653, the first cord portion 652, and then the second cord portion 653) is inserted from the end portion of the heat exchanger tube 66, and then, the holding ring 654 is moved so that the first and second cord portions 652 and 653 are held at a predetermined position. That is, after the wire 651 is inserted into the heat exchanger tube 66, a holding jig 655 is inserted from the end portion of the heat exchanger tube 66 using an operating rod 656 and is lifted up and the holding ring 654 is pushed up using the holding jig 655. Since the holding ring 654 is in sliding contact with the inner circumferential surface of the heat exchanger tube 66, the holding ring 654 may not be displaced due to frictional resistance.

Due to this, since the vibration suppression device 650 is disposed at an appropriate position in an unusable heat exchanger tube 66, it is possible to suppress the vibration of the heat exchanger tube 66. Moreover, since the first cord portion 652 of the wire 651 is supported by being pushed slightly up from the inner surface (lower surface) of the heat exchanger tube 66 in the U-bend part 68, when the U-bend part 68 of the heat exchanger tube 66 vibrates, the first cord portion 652 moves appropriately in relation to the heat exchanger tube 66 and the vibration of the heat exchanger tube 66 can be suppressed efficiently.

As described above, in the heat exchanger tube vibration suppression device of Example 20, the first cord portion 652 having predetermined bending strength, the second cord portion 653 provided in an end portion in the longitudinal direction of the wire 651 and having higher bending strength than the first cord portion 652, and the holding ring 654 fixed between the first and second cord portions 652 and 653 are provided as the wire 651.

Thus, since the first cord portion 652 is supported at an appropriate position of the heat exchanger tube 66 by the holding ring 654, when the U-bend part 68 of the heat exchanger tube 66 vibrates, the first cord portion 652 moves appropriately in relation to the heat exchanger tube 66. Therefore, it is possible to suppress the vibration of the heat exchanger tube 66 efficiently.

### [Example 21]

FIG. 39 is a cross-sectional view of a push-up mechanism of a heat exchanger tube vibration suppression device according to Example 21 of the present invention. Members having the same functions as those of the examples described above will be denoted by the same reference numerals, and detailed description thereof will not be provided.

In Example 21, as illustrated in FIG. 39, a vibration suppression device 700 includes a wire (cord-like member) 701 having flexibility and disposed in the heat exchanger tube 66 and a moving device 702 that is provided in the respective end portions of the wire 701 so as to move the wire 701 toward the U-bend part when the wire 701 is disposed in the heat exchanger tube 66. The moving device 702 has a fixing mechanism 703 that fixes the wire 701 to an end portion of the heat exchanger tube 66, and the fixing mechanism 703 is provided in a plug (plugging member) 704 that blocks the end portion of the heat exchanger tube 66 and is provided with a bolt 705 as a push-up mechanism disposed between the end portion of the wire 701 and the plug 704.

A supporting member 706 is fixed to an end portion of the wire 701. The plug 704 has a lid shape (plug shape) that engages with the outer side (or the inner side) of the end portion of the heat exchanger tube 66, and a plurality of fixing screws 707 as the fixing mechanism 703 is attached to a flange portion of the plug 704. The bolt 705 screws with the plug 704 and passes from the lower side of the plug 704, and a distal end portion thereof is rotatably supported by the supporting member 706. Moreover, the bolt 705 screws with a lock nut 708.

Due to this, after the wire 701 is inserted into the heat exchanger tube 66, the moving device 702 is connected to the end portion of the wire 701. Moreover, when the plug 704 engages with the end portion of the heat exchanger tube 66 and the plurality of fixing screws 707 is fastened, the plug 704 is fixed to the end portion of the heat exchanger tube 66 by the fixing screw 707. In this state, when the bolt 705 is rotated, the bolt 705 rises in relation to the plug 704, and the wire 701 can be pushed up in relation to the heat exchanger tube 66 with the supporting member 706 interposed. Moreover, when the lock nut 708 is fastened at a predetermined position, the bolt 705 is fixed in a non-rotatable state.

As described above, the heat exchanger tube vibration suppression device of Example 21 has the wire 701 having flexibility and disposed in the heat exchanger tube 66 and the moving device 702 provided in the end portion of the wire 701 so as to move the wire 701 toward the U-bend part 68 when the wire 701 is disposed in the heat exchanger tube 66.

Thus, since the wire 701 disposed in the heat exchanger tube 66 is disposed by being moved toward the U-bend part by the moving device 702, the wire 701 is separated from the inner surface (the lower surface) of the heat exchanger tube 66 and the wire 701 can be moved in relation to the U-bend part of the heat exchanger tube 66. Due to this, when the heat exchanger tube 66 vibrates, the wire 701 moves in relation to the heat exchanger tube 66, the vibration energy of the heat exchanger tube 66 is dispersed by the vibration energy of the wire 701, and the vibration of the heat exchanger tube 66 can be attenuated and suppressed effectively.

In the heat exchanger tube vibration suppression device 700 of Example 21, the moving device 702 is provided with the fixing mechanism 703 that fixes the wire 701 to the end portion of the heat exchanger tube 66. Thus, since the wire 701 is held by the fixing mechanism 703 in a state in which the wire 701 is moved toward the U-bend part by the moving device 702, it is possible to attenuate and suppress the vibration of the heat exchanger tube 66 appropriately.

In the heat exchanger tube vibration suppression device of Example 21, the plug 704 that blocks the end portion of the heat exchanger tube 66 is provided, the fixing mechanism 703 is provided in the plug 704, and the bolt 705 is movably provided between the end portion of the wire 701 and the plug 704. Thus, it is possible to block the end portion of the heat exchanger tube 66 appropriately by the plug 704 and to hold the wire 701 appropriately at a predetermined position of the heat exchanger tube 66. Further, since the bolt 705 is used as the push-up mechanism, it is possible to simplify the structure of the device.

### [Example 22]

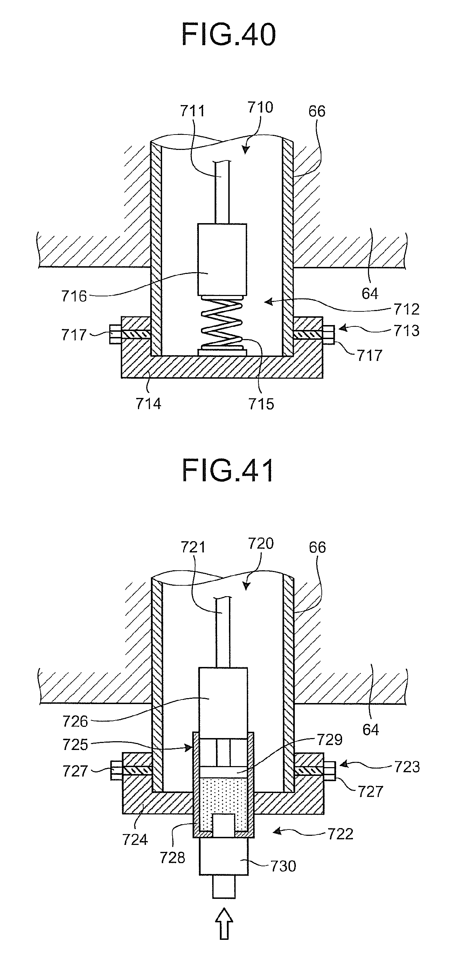

FIG. 40 is a cross-sectional view of a push-up mechanism of a heat exchanger tube vibration suppression device according to Example 22 of the present invention. Members having the same functions as those of the examples described above will be denoted by the same reference numerals, and detailed description thereof will not be provided.

In Example 22, as illustrated in FIG. 40, a vibration suppression device 710 includes a wire (cord-like member) 711 and a moving device 712. The moving device 712 has a fixing mechanism 713 that fixes the wire 711 to the end portion of the heat exchanger tube 66, the fixing mechanism 713 is provided in a plug (plugging member) 714 that blocks the end portion of the heat exchanger tube 66, and a compression spring 715 as a push-up mechanism is provided between the end portion of the wire 711 and the plug 714.

That is, a supporting member 716 is fixed to the end portion of the wire 711. The plug 714 has a lid shape (plug shape) that engages with the outer side (or the inner side) of the end portion of the heat exchanger tube 66, and a plurality of fixing screws 717 as the fixing mechanism 713 is attached to a flange portion of the plug 714. The compression spring 715 is disposed between the plug 714 and the supporting member 716.

As described above, in the heat exchanger tube vibration suppression device of Example 22, the moving device 712 that moves the wire 711 toward the U-bend part 68 is provided in the end portion of the wire 711, and the compression spring (push-up mechanism) 715 is provided between the end portion of the wire 711 and the plug 714 as the moving device 712.

Thus, when the heat exchanger tube 66 vibrates, the wire 711 moves in relation to the heat exchanger tube 66 and the vibration of the heat exchanger tube 66 can be attenuated and suppressed effectively. Moreover, since the compression spring 715 is used as the push-up mechanism, it is possible to simplify the structure of the device.

### [Example 23]

FIG. 41 is a cross-sectional view of a push-up mechanism of a heat exchanger tube vibration suppression device according to Example 23 of the present invention. Members having the same functions as those of the examples described above will be denoted by the same reference numerals, and detailed description thereof will not be provided.

In Example 23, as illustrated in FIG. 41, a vibration suppression device 720 includes a wire (cord-like member) 721 and a moving device 722. The moving device 722 has a fixing mechanism 723 that fixes the wire 721 to the end portion of the heat exchanger tube 66, the fixing mechanism 723 is provided in a plug (plugging member) 724 that blocks the end portion of the heat exchanger tube 66, and a cylinder mechanism 725 as a push-up mechanism is provided between the end portion of the wire 721 and the plug 724.

That is, a supporting member 726 is fixed to the end portion of the wire 721. The plug 724 has a lid shape (plug shape) that engages with the outer side (or the inner side) of the end portion of the heat exchanger tube 66, and a plurality of fixing screws 727 as the fixing mechanism 723 is attached to a flange portion of the plug 724. The cylinder mechanism 725 includes a cylinder 728 that is fixed to the plug 724, a piston 729 connected to the supporting member 726, and a fluid supply portion 730 having a check valve included therein.

Due to this, after the wire 721 is inserted into the heat exchanger tube 66, the moving device 722 is connected to the end portion of the wire 721. Moreover, the plug 724 is fixed to the end portion of the heat exchanger tube 66. In this state, when fluid (for example, nitrogen gas, air, oil, or the like) is supplied from the fluid supply portion 730 into the cylinder 728, the piston 729 rises, whereby the wire 721 can be pushed up in relation to the heat exchanger tube 66 with the supporting member 726 interposed.

As described above, in the heat exchanger tube vibration suppression device of Example 23, the moving device 722 that moves the wire 721 toward the U-bend part 68 is provided in the end portion of the wire 721, and the cylinder mechanism (push-up mechanism) 725 is provided between the end portion of the wire 721 and the plug 724 as the moving device 722.

Thus, when the heat exchanger tube 66 vibrates, the wire 721 moves in relation to the heat exchanger tube 66 and the vibration of the heat exchanger tube 66 can be attenuated and suppressed effectively. Moreover, since the cylinder mechanism 725 is used as the push-up mechanism, it is possible to push the wire 721 up easily after the plug 724 is fixed.

### [Example 24]

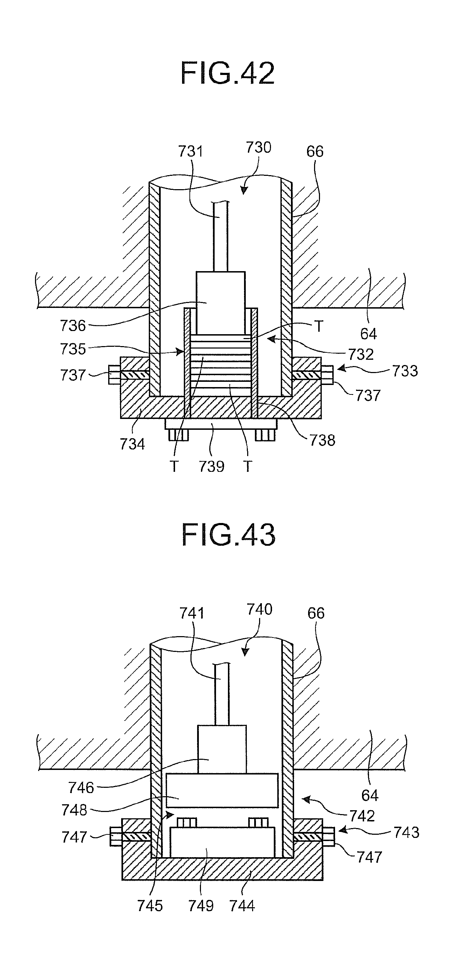

FIG. 42 is a cross-sectional view of a push-up mechanism of a heat exchanger tube vibration suppression device according to Example 24 of the present invention. Members having the same functions as those of the examples described above will be denoted by the same reference numerals, and detailed description thereof will not be provided.

In Example 24, as illustrated in FIG. 42, a vibration suppression device 730 includes a wire (cord-like member) 731 and a moving device 732. The moving device 732 has a fixing mechanism 733 that fixes the wire 731 to the end portion of the heat exchanger tube 66, the fixing mechanism 733 is provided in a plug (plugging member) 734 that blocks the end portion of the heat exchanger tube 66, and a height adjustment mechanism 735 as a push-up mechanism is provided between the end portion of the wire 731 and the plug 734.

That is, a supporting member 736 is fixed to the end portion of the wire 731. The plug 734 has a lid shape (plug shape) that engages with the outer side (or the inner side) of the end portion of the heat exchanger tube 66, and a plurality of fixing screws 737 as the fixing mechanism 733 is attached to a flange portion of the plug 734. The cylinder mechanism 735 includes a case 738 fixed to the plug 734, a lid 739 detachably attached to the plug 734, and a plurality of spacers T configured to be inserted into the case 738.

Due to this, after the wire 731 is inserted into the heat exchanger tube 66, the moving device 732 is connected to the end portion of the wire 731. After that, the plug 734 is fixed to the end portion of the heat exchanger tube 66. In this state, when the lid 739 is fixed to the plug 734 after a predetermined number of spacers T are inserted into the case 738, the wire 731 can be pushed up in relation to the heat exchanger tube 66 with the supporting member 736 interposed.

As described above, in the heat exchanger tube vibration suppression device of Example 24, the moving device 732 that moves the wire 731 toward the U-bend part 68 is provided in the end portion of the wire 731, and the height adjustment mechanism (push-up mechanism) 735 is provided between the end portion of the wire 731 and the plug 734 as the moving device 732.

Thus, when the heat exchanger tube 66 vibrates, the wire 731 moves in relation to the heat exchanger tube 66 and the vibration of the heat exchanger tube 66 can be attenuated and suppressed effectively. Moreover, since the height adjustment mechanism 735 is used as the push-up mechanism, it is possible to push the wire 731 up easily after the plug 734 is fixed.

### [Example 25]

FIG. 43 is a cross-sectional view of a push-up mechanism of a heat exchanger tube vibration suppression device according to Example 25 of the present invention. Members having the same functions as those of the examples described above will be denoted by the same reference numerals, and detailed description thereof will not be provided.

In Example 25, as illustrated in FIG. 43, a vibration suppression device 740 includes a wire (cord-like member) 741 and a moving device 742. The moving device 742 has a fixing mechanism 743 that fixes the wire 741 to the end portion of the heat exchanger tube 66, the fixing mechanism 743 is provided in a plug (plugging member) 744 that blocks the end portion of the heat exchanger tube 66, and a magnetic mechanism 745 as a push-up mechanism is provided between the end portion of the wire 741 and the plug 744.

A supporting member 746 is fixed to the end portion of the wire 741. The plug 744 has a lid shape (plug shape) that engages with the outer side (or the inner side) of the end portion of the heat exchanger tube 66, and a plurality of fixing screws 747 as the fixing mechanism 743 is attached to a flange portion of the plug 744. The magnetic mechanism 745 includes a first magnet 748 fixed to the supporting member 746 and a second magnet 749 fixed to the plug 744. The first and second magnets 748 and 749 are disposed so that the same magnetic poles face each other.

As described above, in the heat exchanger tube vibration suppression device of Example 25, the moving device 742 that moves the wire 741 toward the U-bend part 68 is provided in the end portion of the wire 741, and the magnetic mechanism (push-up mechanism) 745 is provided between the end portion of the wire 741 and the plug 744 as the moving device 742.

Thus, when the heat exchanger tube 66 vibrates, the wire 741 moves in relation to the heat exchanger tube 66, and the vibration of the heat exchanger tube 66 can be attenuated and suppressed effectively. Moreover, since the magnetic mechanism 745 is used as the push-up mechanism, it is possible to simplify the structure of the device.

### [Example 26]

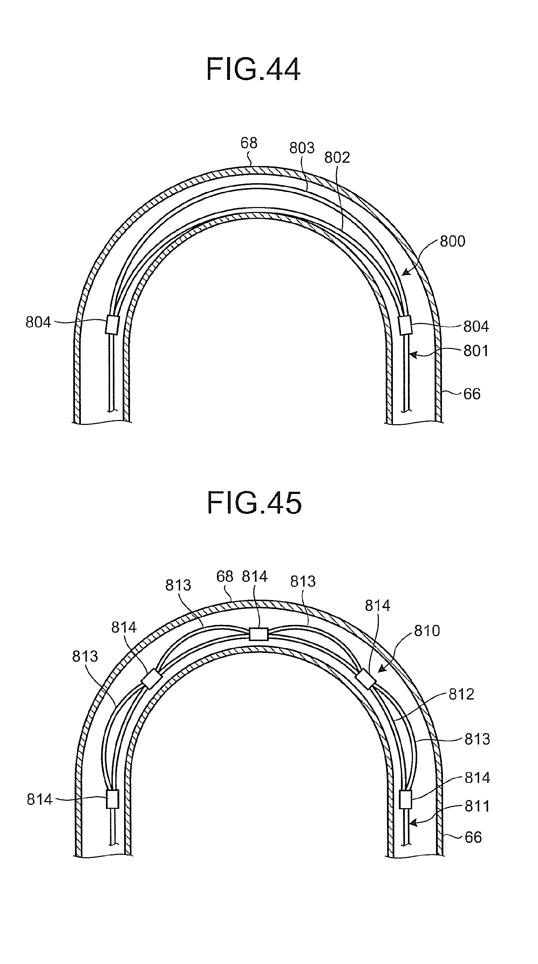

FIG. 44 is a schematic diagram of a heat exchanger tube vibration suppression device according to Example 26 of the present invention. Members having the same functions as those of the examples described above will be denoted by the same reference numerals, and detailed description thereof will not be provided.

In Example 26, as illustrated in FIG. 44, a vibration suppression device 800 includes a wire (cord-like member) 801 having flexibility and disposed in the heat exchanger tube 66, and the wire 801 has a positioning wire 802 and a vibration suppression wire 803. The positioning wire 802 has approximately the same length as the entire length of the heat exchanger tube 66. The vibration suppression wire 803 has a length corresponding to the U-bend part 68 of the heat exchanger tube 66 and is loosely connected to positioning wire 802 by a connecting member 804.

Due to this, when the U-bend part 68 of the heat exchanger tube 66 vibrates, the vibration suppression wire 803 moves appropriately in relation to the positioning wire 802, and the vibration of the heat exchanger tube 66 can be suppressed efficiently.

### [Example 27]

FIG. 45 is a schematic diagram of a heat exchanger tube vibration suppression device according to Example 27 of the present invention. Members having the same functions as those of the examples described above will be denoted by the same reference numerals, and detailed description thereof will not be provided.

In Example 27, as illustrated in FIG. 45, a vibration suppression device 810 has a wire (cord-like member) 811 having flexibility and disposed in the heat exchanger tube 66, and the wire 811 includes a positioning wire 812 and a plurality of vibration suppression wires 813. The positioning wire 812 has approximately the same length as the entire length of the heat exchanger tube 66. The plurality of vibration suppression wires 813 is loosely connected to the positioning wire 812 by a plurality of connecting members 814 and has a length corresponding to the U-bend part 68 of the heat exchanger tube 66.

Due to this, when the U-bend part 68 of the heat exchanger tube 66 vibrates, the respective vibration suppression wires 813 move appropriately in relation to the positioning wire 812 and the vibration of the heat exchanger tube 66 can be suppressed efficiently.

### [Example 28]

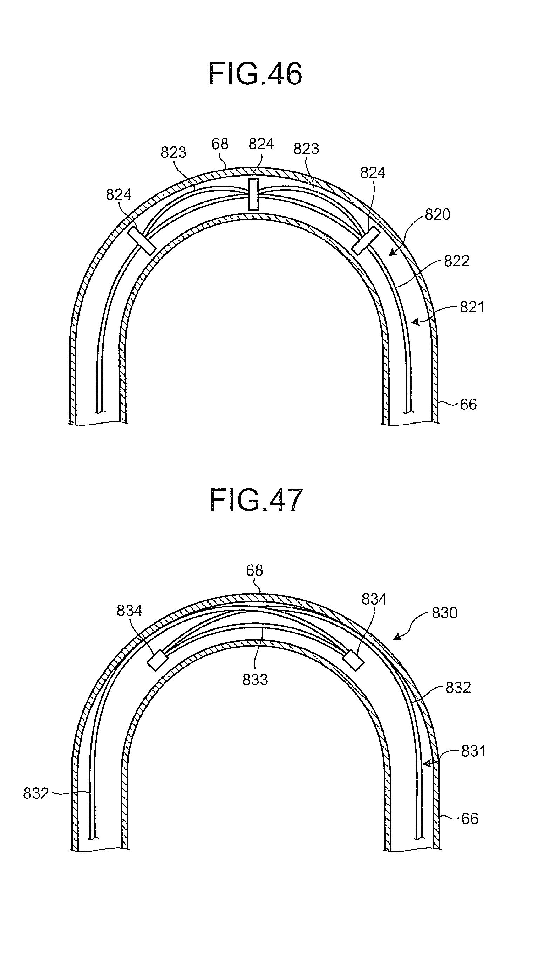

FIG. 46 is a schematic diagram of a heat exchanger tube vibration suppression device according to Example 28 of the present invention. Members having the same functions as those of the examples described above will be denoted by the same reference numerals, and detailed description thereof will not be provided.

In Example 28, as illustrated in FIG. 46, a vibration suppression device 820 has a wire (cord-like member) 821 having flexibility and disposed in the heat exchanger tube 66, and the wire 821 has a positioning wire 822 and a plurality of vibration suppression wires 823. The positioning wire 822 has approximately the same length as the entire length of the heat exchanger tube 66. The plurality of vibration suppression wires 823 is loosely connected to the positioning wire 822 by a plurality of sleeves (connecting members) 824 and has a length corresponding to the U-bend part 68 of the heat exchanger tube 66. The sleeve 824 has a disk shape and can hold the positioning wire 822 in the central portion of the heat exchanger tube 66.

Due to this, when the U-bend part 68 of the heat exchanger tube 66 vibrates, the respective vibration suppression wires 823 move appropriately in relation to the positioning wire 822 and the vibration of the heat exchanger tube 66 can be suppressed efficiently.

### [Example 29]

FIG. 47 is a schematic diagram of a heat exchanger tube vibration suppression device according to Example 29 of the present invention. Members having the same functions as those of the examples described above will be denoted by the same reference numerals, and detailed description thereof will not be provided.

In Example 29, as illustrated in FIG. 47, a vibration suppression device 830 includes a wire (cord-like member) 831 having flexibility and disposed in the heat exchanger tube 66, the wire 831 includes a pair of positioning wires 832 and a vibration suppression wire 833. The pair of positioning wires 832 has an end portion that crosses the U-bend part 68 of the heat exchanger tube 66. The vibration suppression wire 833 is connected to the end portions of the respective positioning wires 832 by connecting members 834. When the respective positioning wires 832 are pushed down so that the respective connecting members 834 move closer to each other, the vibration suppression wire 833 is held in a loose state.

Due to this, when the U-bend part 68 of the heat exchanger tube 66 vibrates, the vibration suppression wire 833 moves appropriately in relation to the positioning wire 832, and the vibration of the heat exchanger tube 66 can be suppressed efficiently.

### [Example 30]

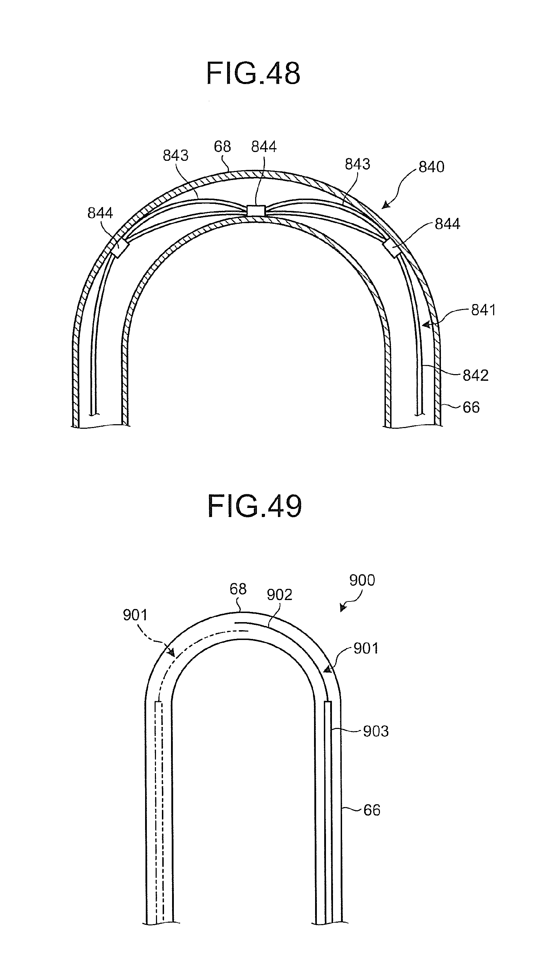

FIG. 48 is a schematic diagram of a heat exchanger tube vibration suppression device according to Example 30 of the present invention. Members having the same functions as those of the examples described above will be denoted by the same reference numerals, and detailed description thereof will not be provided.

In Example 30, as illustrated in FIG. 48, a vibration suppression device 840 includes a wire (cord-like member) 841 having flexibility and disposed in the heat exchanger tube 66, and the wire 841 has a positioning wire 842 and a plurality of vibration suppression wires 843. The positioning wire 842 has approximately the same length as the entire length of the heat exchanger tube 66. The plurality of vibration suppression wires 843 is loosely connected to the positioning wire 842 by a plurality of connecting members 844 and has a length corresponding to the U-bend part 68 of the heat exchanger tube 66. Moreover, since the respective connecting members 844 are formed of magnets, the connecting members 844 are attracted to the inner surface of the heat exchanger tube 66 made from metal.

Due to this, when the U-bend part 68 of the heat exchanger tube 66 vibrates, the respective vibration suppression wires 843 move appropriately in relation to the positioning wire 842 and the vibration of the heat exchanger tube 66 can be suppressed efficiently.

### [Example 31]

FIG. 49 is a schematic diagram of a heat exchanger tube vibration suppression device according to Example 31 of the present invention. Members having the same functions as those of the examples described above will be denoted by the same reference numerals, and detailed description thereof will not be provided.

In Example 31, as illustrated in FIG. 49, a vibration suppression device 900 includes a wire (cord-like member) 901 having flexibility and disposed in the heat exchanger tube 66, and the wire 901 includes a first cord portion 902 having predetermined bending strength and a second cord portion 903 provided on an end side in the longitudinal direction of the wire 901 and having higher bending strength than the first cord portion 902, both cord portions being connected integrally. Moreover, the second cord portion 903 is disposed in one straight portion of the heat exchanger tube 66 and the first cord portion 902 is disposed in the U-bend part 68. In the present example, although the wire 901 as the vibration suppression device 900 is disposed only one side of the heat exchanger tube 66, the wire 901 may be disposed on both sides of the heat exchanger tube 66.

Due to this, when the U-bend part 68 of the heat exchanger tube 66 vibrates, the first cord portion 902 moves appropriately in relation to the second cord portion 903, and the vibration of the heat exchanger tube 66 can be suppressed efficiently.

### [Example 32]

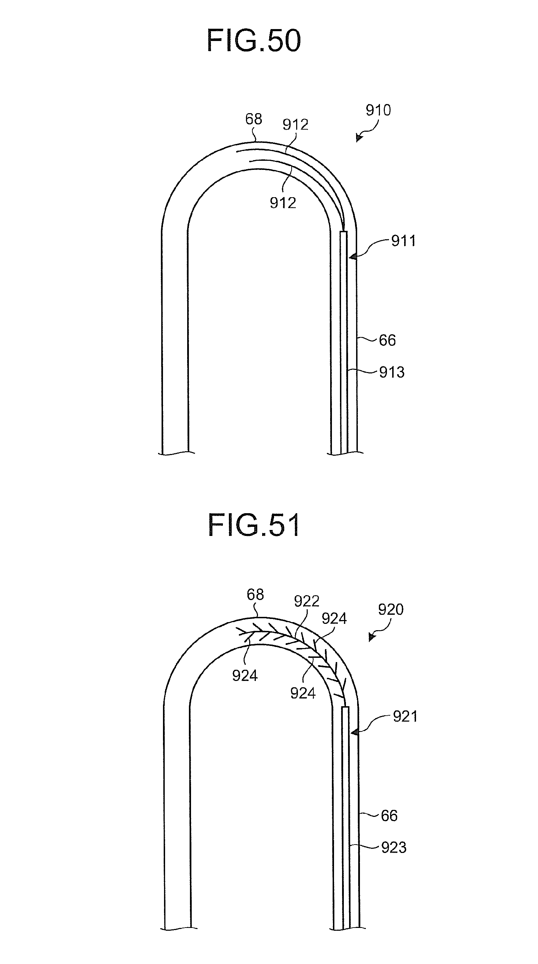

FIG. 50 is a schematic diagram of a heat exchanger tube vibration suppression device according to Example 32 of the present invention. Members having the same functions as those of the examples described above will be denoted by the same reference numerals, and detailed description thereof will not be provided.

In Example 32, as illustrated in FIG. 50, a vibration suppression device 910 includes a wire (cord-like member) 911 having flexibility and disposed in the heat exchanger tube 66, and the wire 911 has a plurality of first cord portions 912 having predetermined bending strength and a second cord portion 913 provide on an end side in the longitudinal direction of the wire 911 and having higher bending strength than the first cord portion 912, both cord portions being connected integrally. Moreover, the second cord portion 913 is disposed on one straight portion of the heat exchanger tube 66 and the respective first cord portions 912 are disposed in the U-bend part 68.

Due to this, when the U-bend part 68 of the heat exchanger tube 66 vibrates, the plurality of first cord portions 912 moves appropriately in relation to the second cord portion 913, and the vibration of the heat exchanger tube 66 can be suppressed efficiently.

### [Example 33]

FIG. 51 is a schematic diagram of a heat exchanger tube vibration suppression device according to Example 33 of the present invention. Members having the same functions as those of the examples described above will be denoted by the same reference numerals, and detailed description thereof will not be provided.

In Example 33, as illustrated in FIG. 51, a vibration suppression device 920 includes a wire (cord-like member) 921 having flexibility and disposed in the heat exchanger tube 66, and the wire 921 has a first cord portion 922 having predetermined bending strength and a second cord portion 923 provided on an end side in the longitudinal direction of the wire 921 and having higher bending strength than the first cord portion 922, both cord portions being connected integrally. Moreover, the first cord portion 922 has a plurality of branches 924. Moreover, the second cord portion 923 is disposed on one straight portion of the heat exchanger tube 66 and the first cord portion 922 is disposed in the U-bend part 68.

Due to this, when the U-bend part 68 of the heat exchanger tube 66 vibrates, the first cord portion 922 moves appropriately in relation to the second cord portion 923, and the vibration of the heat exchanger tube 66 can be suppressed efficiently.

### Reference Signs List

11 CONTAINMENT
12 PRESSURIZED WATER REACTOR
13 STEAM GENERATOR
32 STEAM TURBINE
36 POWER GENERATOR
61 BODY PART
63 TUBE SUPPORT PLATE
64 TUBE PLATE
66 HEAT EXCHANGER TUBE
68 U-BEND PART
100, 200, 300, 400 VIBRATION SUPPRESSION DEVICE
101 SLEEVE
102 CONNECTING MEMBER
111 FIRST LOCKING PORTION
112 SECOND LOCKING PORTION
131 WIRE (CORD-LIKE MEMBER)
132, 133 HOLDING PLATE (HOLDING MEMBER)
201 ATTENUATION RING
301 LARGE-DIAMETER SLEEVE
302 SMALL-DIAMETER SLEEVE
303 CONNECTING MEMBER
311, 312 LOCKING PORTION
313 PROJECTION PORTION
401 ATTENUATION RING
500, 518, 520, 530, 540, 550, 560, 570, 580, 590 VIBRATION SUPPRESSION DEVICE
501 WIRE (CORD-LIKE MEMBER)
502 SLEEVE
503 GRANULAR BODY
511 DISC MEMBER
529 BRUSH (HOLDING MEMBER)
600, 610, 620, 630, 640, 650 VIBRATION SUPPRESSION DEVICE
601, 641, 651 WIRE (CORD-LIKE MEMBER)
602, 642, 652 FIRST CORD PORTION
603, 604, 611, 621, 631, 643, 653 SECOND CORD PORTION
605, 606 PLUG (PLUGGING MEMBER)
607, 608 MOVING MEMBER
622 ROLLING MEMBER
644 SPRING MEMBER (EXPANDING MEMBER)
654 HOLDING RING (HOLDING MEMBER)
700, 710, 720, 730, 740 VIBRATION SUPPRESSION DEVICE
701, 711, 721, 731, 741 WIRE (CORD-LIKE MEMBER)
702, 712, 722, 732, 742 MOVING DEVICE
703, 713, 723, 733, 743 FIXING MECHANISM
704, 714, 724, 734, 744 PLUG (PLUGGING MEMBER)
705 BOLT (PUSH-UP MECHANISM)
715 COMPRESSION SPRING (PUSH-UP MECHANISM)
725 CYLINDER MECHANISM (PUSH-UP MECHANISM)
735 HEIGHT ADJUSTMENT MECHANISM (PUSH-UP MECHANISM)
745 MAGNETIC MECHANISM (PUSH-UP MECHANISM)

## Claims

1. A heat exchanger tube vibration suppression device comprising:
a plurality of sleeves disposed in a heat exchanger tube with a predetermined gap in relation to an inner surface of the heat exchanger tube so as to extend in a longitudinal direction of the heat exchanger tube; and
a connecting member that connects the plurality of sleeves so as to be movable between a contracted position at which adjacent sleeves overlap at least partially and an extended position at which an amount of overlap of the adjacent sleeves is minimized.

2. The heat exchanger tube vibration suppression device according to claim 1, wherein
the connecting member includes a first locking portion provided on one side in the longitudinal direction of the sleeve and a second locking portion provided on the other side in the longitudinal direction of the sleeve, and the first locking portion and the second locking portion can be locked together.

3. The heat exchanger tube vibration suppression device according to claim 2, wherein
the first locking portion and the second locking portion can hold the plurality of sleeves at the contracted position and the extended position.

4. The heat exchanger tube vibration suppression device according to claim 3, wherein
the plurality of sleeves has the same shape and has a cylindrical shape in which a diameter on one side in the longitudinal direction is smaller than a diameter on the other side, the first locking portion is provided on an outer side and the second locking portion is provided on an inner side.

5. The heat exchanger tube vibration suppression device according to claim 3 or 4, wherein
the first locking portion and the second locking portion have a base end portion that is attached to the sleeve so as to freely fluctuate.

6. The heat exchanger tube vibration suppression device according to claim 2 or 3, wherein
the plurality of sleeves includes a large-diameter sleeve and a small-diameter sleeve which are alternately arranged along the longitudinal direction of the heat exchanger tube, the first locking portion and the second locking portion of the large-diameter sleeve are provided on an inner side, and the first locking portion and the second locking portion of the small-diameter sleeve are provided on an outer side.

7. The heat exchanger tube vibration suppression device according to any one of claims 1 to 6, wherein
an attenuation ring is disposed on an outer side of the sleeve.

8. The heat exchanger tube vibration suppression device according to claim 7, wherein
a restricting portion that restricts the attenuation ring so as to be immovable over an entire length of the sleeve is provided.

9. The heat exchanger tube vibration suppression device according to any one of claims 1 to 8, wherein
a cord-like member having flexibility is disposed on an inner side of the plurality of sleeves.

10. The heat exchanger tube vibration suppression device according to claim 9, wherein
a holding member that holds the plurality of sleeves at the contracted position is detachably attached to the cord-like member.

11. A steam generator comprising:
a body part having a hollow airtight shape;
a heat exchanger tube bundle including a plurality of heat exchanger tubes which is arranged in the body part so as to form a reverse U-shape and in which a primary cooling water flows;
a tube plate that is fixed to a lower portion of the body part so as to support an end portion of the plurality of heat exchanger tubes;
an inlet-side channel head and an outlet-side channel head that are provided in a lower end portion of the body part so as to communicate with the respective end portions of the plurality of heat exchanger tubes;
a water supply portion that supplies a secondary cooling water into the body part;
a steam outlet provided in an upper end portion of the body part; and
the heat exchanger tube vibration suppression device according to any one of claims 1 to 10.

12. A heat exchanger tube vibration suppression device comprising:
a cord-like member having flexibility and disposed in a heat exchanger tube;
a plurality of sleeves having a hollow shape and disposed along a longitudinal direction of the cord-like member; and
a plurality of granular bodies that is movably filled in the sleeve.

13. The heat exchanger tube vibration suppression device according to claim 12, wherein
the sleeve has a hollow cylindrical shape and is disposed so that a predetermined gap is formed between an outer circumferential surface of the sleeve and an inner surface of the heat exchanger tube.

14. The heat exchanger tube vibration suppression device according to claim 12 or 13, wherein
the sleeve is fixed to the cord-like member with a predetermined gap in the longitudinal direction of the cord-like member.

15. The heat exchanger tube vibration suppression device according to claim 12 or 13, wherein
a pair of disc members is fixed to the cord-like member with a predetermined gap in a longitudinal direction of the cord-like member, and the plurality of sleeves is disposed between the pair of disc members so as to be movable along the longitudinal direction of the cord-like member.

16. The heat exchanger tube vibration suppression device according to claim 15, wherein
the gap between the sleeve and the heat exchanger tube is larger than the gap between the disc member and the heat exchanger tube.

17. The heat exchanger tube vibration suppression device according to any one of claims 12 to 16, wherein
the heat exchanger tube is formed such that a U-shaped portion is connected to an upper end portion of a straight portion, and the plurality of sleeves is disposed in the U-shaped portion.

18. The heat exchanger tube vibration suppression device according to claim 17, wherein
a holding member that holds the cord-like member to be held at the straight portion so that the plurality of sleeves is positioned at a predetermined position of the heat exchanger tube is provided.

19. The heat exchanger tube vibration suppression device according to claim 17, wherein
the cord-like member has respective end portions in the longitudinal direction being held at the straight portion by a tension member.

20. A steam generator comprising:
a body part having a hollow airtight shape;
a heat exchanger tube bundle including a plurality of heat exchanger tubes which is arranged in the body part so as to form a reverse U-shape and in which a primary cooling water flows;
a tube plate that is fixed to a lower portion of the body part so as to support an end portion of the plurality of heat exchanger tubes;
an inlet-side channel head and an outlet-side channel head that are provided in a lower end portion of the body part so as to communicate with the respective end portions of the plurality of heat exchanger tubes;
a water supply portion that supplies a secondary cooling water into the body part;
a steam outlet provided in an upper end portion of the body part; and
the heat exchanger tube vibration suppression device according to any one of claims 12 to 19.

21. A heat exchanger tube vibration suppression device comprising:
a cord-like member having flexibility and disposed in a heat exchanger tube; and
a moving device provided at least one end portion of the cord-like member so as to move the cord-like member toward a U-bend part when the cord-like member is disposed in the heat exchanger tube.

22. The heat exchanger tube vibration suppression device according to claim 21, wherein
the moving device has a fixing mechanism that fixes to an end portion of the heat exchanger tube.

23. The heat exchanger tube vibration suppression device according to claim 22, wherein
a plugging member that blocks the end portion of the heat exchanger tube is provided, the fixing mechanism is provided in the plugging member, and a push-up mechanism capable of moving the cord-like member is disposed between the end portion of the cord-like member and the plugging member.

24. The heat exchanger tube vibration suppression device according to any one of claims 21 to 23, wherein
the cord-like member has a first cord portion having predetermined bending strength and a second cord portion provided on at least one end side in the longitudinal direction of the cord-like member and having higher bending strength than the first cord portion.

25. The heat exchanger tube vibration suppression device according to claim 24, wherein
the second cord portion is formed by connecting a plurality of connecting members in series.

26. The heat exchanger tube vibration suppression device according to claim 25, wherein
a rolling member is provided on an outer circumferential portion of the connecting member.

27. The heat exchanger tube vibration suppression device according to claim 25, wherein
a sleeve configured to make sliding contact with an inner circumferential surface of the heat exchanger tube is provided on an outer circumferential portion of the connecting member.

28. The heat exchanger tube vibration suppression device according to any one of claims 24 to 27, wherein
an expanding member is disposed between the first cord portion and the second cord portion.

29. The heat exchanger tube vibration suppression device according to any one of claims 24 to 28, wherein
a holding member that holds the second cord portion at a predetermined position of the heat exchanger tube is provided.

30. A steam generator comprising:
a body part having a hollow airtight shape;
a heat exchanger tube bundle including a plurality of heat exchanger tubes which is arranged in the body part so as to form a reverse U-shape and in which a primary cooling water flows;
a tube plate that is fixed to a lower portion of the body part so as to support an end portion of the plurality of heat exchanger tubes;
an inlet-side channel head and an outlet-side channel head that are provided in a lower end portion of the body part so as to communicate with the respective end portions of the plurality of heat exchanger tubes;
a water supply portion that supplies a secondary cooling water into the body part;
a steam outlet provided in an upper end portion of the body part; and
the heat exchanger tube vibration suppression device according to any one of claims 21 to 29.

31. A steam generator comprising:
a body part having a hollow airtight shape;
a heat exchanger tube bundle including a plurality of heat exchanger tubes which is arranged in the body part so as to form a reverse U-shape and in which a primary cooling water flows;
a tube plate that is fixed to a lower portion of the body part so as to support an end portion of the plurality of heat exchanger tubes;
an inlet-side channel head and an outlet-side channel head that are provided in a lower end portion of the body part so as to communicate with the respective end portions of the plurality of heat exchanger tubes;
a water supply portion that supplies a secondary cooling water into the body part;
a steam outlet provided in an upper end portion of the body part; and
a vibration suppression device in which a cord-like member is disposed in a portion of the plurality of heat exchanger tubes and which is supported by being pushed up from a lower surface of a U-bend part of the heat exchanger tube.
